(19) **Europäisches Patentamt / European Patent Office / Office européen des brevets**

(11) **EP 4 644 059 A1**

(12) **EUROPEAN PATENT APPLICATION**
published in accordance with Art. 153(4) EPC

(43) Date of publication:
**05.11.2025 Bulletin 2025/45**

(21) Application number: **23912265.8**

(22) Date of filing: **27.12.2023**

(51) International Patent Classification (IPC):
***B25J 9/18*** ***(2006.01)***

(52) Cooperative Patent Classification (CPC):
**B25J 9/16**

(86) International application number:
**PCT/JP2023/046993**

(87) International publication number:
**WO 2024/143487 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022212123**

(71) Applicant: **Kyocera Corporation
Kyoto-shi, Kyoto 612-8501 (JP)**

(72) Inventors:
• **BUNNO, Sho
Kyoto-shi, Kyoto 612-8501 (JP)**
• **OHASHI, Akira
Kyoto-shi, Kyoto 612-8501 (JP)**
• **MIYAMOTO, Takuya
Kyoto-shi, Kyoto 612-8501 (JP)**
• **ONO, Kazuki
Kyoto-shi, Kyoto 612-8501 (JP)**
• **MORI, Masato
Kyoto-shi, Kyoto 612-8501 (JP)**
• **ISHIDA, Takayuki
Kyoto-shi, Kyoto 612-8501 (JP)**
• **MIYAMURA, Hiroaki
Kyoto-shi, Kyoto 612-8501 (JP)**

(74) Representative: **TBK
Bavariaring 4-6
80336 München (DE)**

(54) **CONTROL SYSTEM**

(57) A control system includes a plurality of processors that each performs a process for controlling a robot, a storage, and a robot controller. The storage stores dictionary data for deriving control information to be used to control the robot from a plurality of pieces of output data output from the plurality of respective processors. The robot controller derives the control information from the plurality of pieces of output data and the dictionary data, and controls the robot based on the control information.

EP 4 644 059 A1

FIG. 42

```
                                                              ┌─620
        ┌─65                                                  │ Condition determiner
┌──────────────────────────────────────┐    ┌────────────────────────────────────┐
│ Storage                               │    │                      ┌─621          │
│                                       │    │                      │              │
│ 640a─┐  ┌──────────────────────────┐  │    │  ┌────────────────┐  │              │
│      └──│   Host controller data   │──┼────┼─▶│                │  │              │
│         └──────────────────────────┘  │    │  │                │  │              │
│ 641a─┐  ┌──────────────────────────┐  │    │  │                │  │              │
│      └──│     Identifier data      │──┼────┼─▶│                │  │              │
│         └──────────────────────────┘  │    │  │                │  │              │
│ 642a─┐  ┌──────────────────────────┐  │    │  │                │  │              │
│      └──│   Obstacle detector data │──┼────┼─▶│                │  │              │
│         └──────────────────────────┘  │    │  │                │  │              │
│ 643a─┐  ┌──────────────────────────┐  │    │  │                │  │              │
│      └──│       Arm sensor         │──┼────┼─▶│                │  │              │
│         │     processor data       │  │    │  │                │  │              │
│         └──────────────────────────┘  │    │  │                │  │              │
│ 644a─┐  ┌──────────────────────────┐  │    │  │                │  │              │
│      └──│     Effector sensor      │──┼────┼─▶│                │  │              │
│         │     processor data       │  │    │  │                │  │              │
│         └──────────────────────────┘  │    │  │                │  │              │
│ 645a─┐  ┌──────────────────────────┐  │    │  │                │  │              │
│      └──│    Person detector data  │──┼────┼─▶│   Determiner   │──┼──────────▶   │
│         └──────────────────────────┘  │    │  │                │  │              │
│ 646a─┐  ┌──────────────────────────┐  │    │  │                │  │              │
│      └──│     PLC controller data  │──┼────┼─▶│                │  │              │
│         └──────────────────────────┘  │    │  │                │  │              │
│ 647a─┐  ┌──────────────────────────┐  │    │  │                │  │              │
│      └──│      Communication       │──┼────┼─▶│                │  │              │
│         │     controller data      │  │    │  │                │  │              │
│         └──────────────────────────┘  │    │  │                │  │              │
│ 648a─┐  ┌──────────────────────────┐  │    │  │                │  │              │
│      └──│    Operation planner     │──┼────┼─▶│                │  │              │
│         │         data             │  │    │  │                │  │              │
│         └──────────────────────────┘  │    │  │                │  │              │
│ 700─┐   ┌──────────────────────────┐  │    │  │                │  │              │
│     └───│      Priority data       │──┼────┼─▶│                │  │              │
│    ┌710 └──────────────────────────┘  │    │  │                │  │              │
│ ┌─────────────────────────────────┐   │    │  │                │  │              │
│ │ Dictionary data     ┌720        │   │    │  │                │  │              │
│ │         ┌──────────────────────┐│   │    │  │                │  │              │
│ │         │      Common          ││───┼────┼─▶│                │  │              │
│ │         │   dictionary data    ││   │    │  │                │  │              │
│ │         └──────────────────────┘│   │    │  │                │  │              │
│ │   730                           │   │    │  └────────────────┘  │              │
│ │   ┌─────────────────────────┐   │   │    │       ┌─622          │              │
│ │   │      ┌──────────────┐   │   │   │    │  ┌───────────┐       │              │
│ │   │      │  Individual  │   │   │   │    │  │           │       │              │
│ │   │      │dictionary data│  │   │───┼────┼─▶│           │       │              │
│ │   │ ┌──────────────┐│     │   │   │    │  │           │       │              │
│ │   │ │  Individual  ││─────┘   │   │   │    │  │ Selector  │──┼──────▶         │
│ │   │ │dictionary data│         │   │   │    │  │           │       │              │
│ │   │ └──────────────┘          │   │   │    │  │           │       │              │
│ │   └─────────────────────────┘   │   │    │  │           │       │              │
│ │ 750─┐  ┌──────────────────────┐ │   │    │  │           │       │              │
│ │     └──│ Controller state data│─┼───┼────┼─▶│           │       │              │
│ │        └──────────────────────┘ │   │    │  └───────────┘       │              │
│ └─────────────────────────────────┘   │    │                      │              │
│ 770─┐   ┌──────────────────────────┐  │    │                      │              │
│     └───│     Correspondence       │──┼────┼────────────────────▶ │              │
│         │          data            │  │    │                      │              │
│         └──────────────────────────┘  │    │                      │              │
└──────────────────────────────────────┘    └────────────────────────────────────┘
```

## Description

TECHNICAL FIELD

The present disclosure relates to robot control.

BACKGROUND OF INVENTION

Patent Literature 1 describes a technique for robot control.

CITATION LIST

PATENT LITERATURE

Patent Literature 1: Japanese Unexamined Patent Application Publication No. 2019-81234

SUMMARY

One or more aspects of the present disclosure are directed to a control system. In one embodiment, a control system includes a plurality of processors that each performs a process for controlling a robot, a storage, and a robot controller. The storage stores dictionary data for deriving control information to be used to control the robot from a plurality of pieces of output data output from the plurality of respective processors. The robot controller derives the control information from the plurality of pieces of output data and the dictionary data, and controls the robot based on the control information.

BRIEF DESCRIPTION OF THE DRAWINGS

FIG. 1 is a block diagram of a robotic system, illustrating an example structure.

FIG. 2 is a schematic diagram of a robot and its surroundings in an example.

FIG. 3 is a block diagram of a control system, illustrating an example structure.

FIG. 4 is a block diagram of an arm controller, a hand controller, a first sensor unit, and a second sensor unit, illustrating example structures.

FIG. 5 is a block diagram of the arm controller, the hand controller, the first sensor unit, and the second sensor unit, illustrating example structures.

FIG. 6 is a schematic diagram of example imaging areas of a first camera and a second camera.

FIG. 7 is a block diagram of a control system, illustrating an example structure.

FIG. 8 is a table showing an example of generation target operation data.

FIG. 9 is a block diagram illustrating example multiple states of an operation controller.

FIG. 10 is a flowchart of an example operation performed by a robot controller.

FIG. 11 is a flowchart of an example operation performed by the robot controller.

FIG. 12 is a flowchart of an example operation performed by the robot controller.

FIG. 13 is a flowchart of an example operation performed by the robot controller.

FIG. 14 is a flowchart of an example operation performed by the robot controller.

FIG. 15 is a flowchart of an example operation performed by the robot controller.

FIG. 16 is a flowchart of an example operation performed by the robot controller.

FIG. 17 is a flowchart of an example operation performed by the robot controller.

FIG. 18 is a table showing an example of generation target operation data.

FIG. 19 is a flowchart of an example operation performed by the robot controller.

FIG. 20 is a graph showing the rotation angle, the rotational speed, and the rotational acceleration of a joint in an example.

FIG. 21 is a flowchart of an example operation performed by the robot controller.

FIG. 22 is a flowchart of an example operation performed by the robot controller.

FIG. 23 is a flowchart of an example operation performed by the robot controller.

FIG. 24 is a flowchart of an example operation performed by the robot controller.

FIG. 25 is a flowchart of an example operation performed by the robot controller.

FIG. 26 is a flowchart of an example operation performed by the robot controller.

FIG. 27 is a flowchart of an example operation performed by the robot controller.

FIG. 28 is a graph showing example state transitions of the operation controller.

FIG. 29 is a block diagram illustrating example multiple states of the operation controller.

FIG. 30 is a schematic diagram illustrating an example operation performed by the control system.

FIG. 31 is a schematic diagram illustrating an example operation performed by the control system.

FIG. 32 is a graph showing example state transitions of the operation controller.

FIG. 33 is a block diagram illustrating example multiple states of the operation controller.

FIG. 34 is a schematic diagram illustrating an example operation performed by the control system.

FIG. 35 is a schematic diagram illustrating an example operation performed by the control system.

FIG. 36 is a schematic diagram illustrating an example operation performed by the control system.

FIG. 37 is a graph showing example state transitions of the operation controller.

FIG. 38 is a block diagram illustrating example multiple states of the operation controller.

FIG. 39 is a schematic diagram illustrating an example operation performed by the control system.

FIG. 40 is a schematic diagram illustrating an example operation performed by the control system.

FIG. 41 is a schematic diagram illustrating an example operation performed by the control system.

FIG. 42 is a block diagram illustrating an example structure of a condition determiner and example data input into the condition determiner.

FIG. 43 is a table showing multiple combinations of upper limits in an example.

FIG. 44 is a table showing an example of correspondence data.

FIG. 45 is a table showing an example of correspondence data.

FIG. 46 is a table showing an example of common dictionary data.

FIG. 47 is a table showing an example of individual dictionary data.

FIG. 48 is a table showing an example of individual dictionary data.

FIG. 49 is a table showing an example of individual dictionary data.

FIG. 50 is a table showing an example of individual dictionary data.

FIG. 51 is a table showing an example of individual dictionary data.

FIG. 52 is a table showing an example of individual dictionary data.

FIG. 53 is a table showing an example of individual dictionary data.

FIG. 54 is a table showing an example of individual dictionary data.

FIG. 55 is a table showing an example of individual dictionary data.

FIG. 56 is a table showing an example of individual dictionary data.

FIG. 57 is a table showing an example of individual dictionary data.

FIG. 58 is a table showing an example of individual dictionary data.

FIG. 59 is a block diagram illustrating an example structure of a condition determiner and example data input into the condition determiner.

FIG. 60 is a table showing an example of disablement identification data.

FIG. 61 is a block diagram illustrating example multiple states of the operation controller.

FIG. 62 is a block diagram illustrating example multiple states of the operation controller.

FIG. 63 is a table showing an example of individual dictionary data.

FIG. 64 is a table showing an example of individual dictionary data.

FIG. 65 is a block diagram of the robot controller, illustrating an example structure.

DESCRIPTION OF EMBODIMENTS

Overview of Example Robotic System

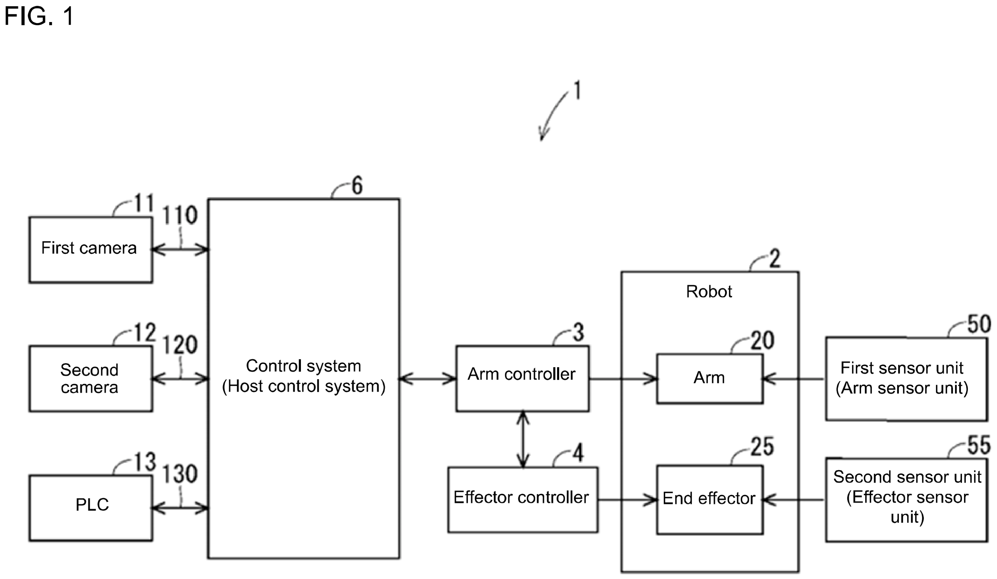

FIG. 1 is a block diagram of a robotic system 1, illustrating an example structure. As illustrated in FIG. 1, a robotic system 1 includes, for example, a robot 2 and a control system 6 that controls the robot 2. The control system 6 manages the entire operation of the robotic system 1. The robot 2 includes one or more drivable portions and one or more drive controllers that control the one or more drivable portions. In this example, the one or more drivable portions include, for example, an arm 20 and an end effector 25. The one or more drive controllers include an arm controller 3 that controls the arm 20 and an effector controller 4 that controls the end effector 25. The control system 6 controls the robot 2 through the arm controller 3 and the effector controller 4. The control system 6 may be a host control system 6 that controls the robot 2.

The robotic system 1 includes, for example, a first sensor unit 50 and a second sensor unit 55 that detect the state of the robot 2. The first sensor unit 50 detects, for example, the state of the arm 20. The second sensor unit 55 detects, for example, the state of the end effector 25. The first sensor unit 50 may be hereafter referred to as an arm sensor unit 50, and the second sensor unit 55 may be hereafter referred to as an effector sensor unit 55. The arm sensor unit 50 and the effector sensor unit 55 may be referred to as sensor units unless they are to be distinguished from each other.

The robotic system 1 includes, for example, a first camera 11, a second camera 12, and a programmable logic controller (PLC) 13. The control system 6 controls the robot 2 based on, for example, camera images obtained with the first camera 11 and the second camera 12, output data from the PLC 13, and detection results obtained by the arm sensor unit 50 and the effector sensor unit 55.

The robot 2 repeats, for example, an object transfer task of transferring a work object (also simply referred to as an object) from a source area to a destination area. The robot 2 holds the work object in the source area with the end effector 25. The robot 2 then transfers the work object held with the end effector 25 from the source area to the destination area. For example, the robot 2 transfers the work object held with the end effector 25 from the source area to the destination area by changing the posture of the robot 2, or more specifically, the posture of the arm 20. The position of the arm 20 is determined by the posture of the arm 20. The position of the end effector 25 is also determined by the posture of the arm 20. The end effector 25 releases the work object to place the work object in the destination area. After placing the work object in the destination area, the robot 2 moves the end effector 25 to above the source area and holds a next work object with the end effector 25. The robot 2 then transfers the work object held with the end effector 25 from the source area to the destination area. The robot 2 thereafter operates in the same manner as or in a similar manner to the above. The work object may also be referred to as, for example, a workpiece. The control system 6 can control the movement of the robot 2 to cause the robot 2 to perform a task.

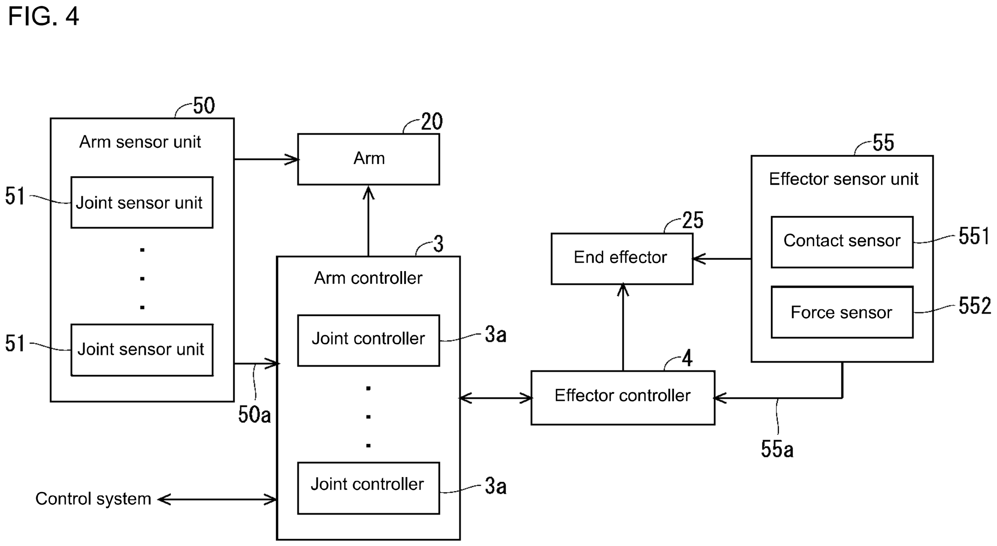

The arm 20 includes, for example, multiple joints 200 (refer to FIG. 4 described later) and multiple links (in other words, arm segments). Each of the joints 200 includes, for example, a drive such as a motor that rotates the joint 200. The arm 20 includes, for example, six joints 200. The arm 20 has, for example, six degrees of freedom. The robot 2 can change the posture of the arm 20 by changing the rotation angle of at least one of the six joints 200. The arm controller 3 can control the rotation angle of each of the joints 200 in response to an instruction from the control system 6. In other words, the control system 6 can control the rotation angle of each of the joints 200 through the arm controller 3. The six joints 200 may be hereafter referred to as a first joint 200, a second joint 200, a third joint 200, a fourth joint 200, a fifth joint 200, and a sixth joint 200.

The end effector 25 includes, for example, a holder that holds the object and a drive that drives the holder. The holder includes, for example, multiple fingers that grip the object. The drive includes, for example, a motor. Note that the holder may include at least one suction pad that sucks the object. In this case, the drive may include, for example, a vacuum pump.

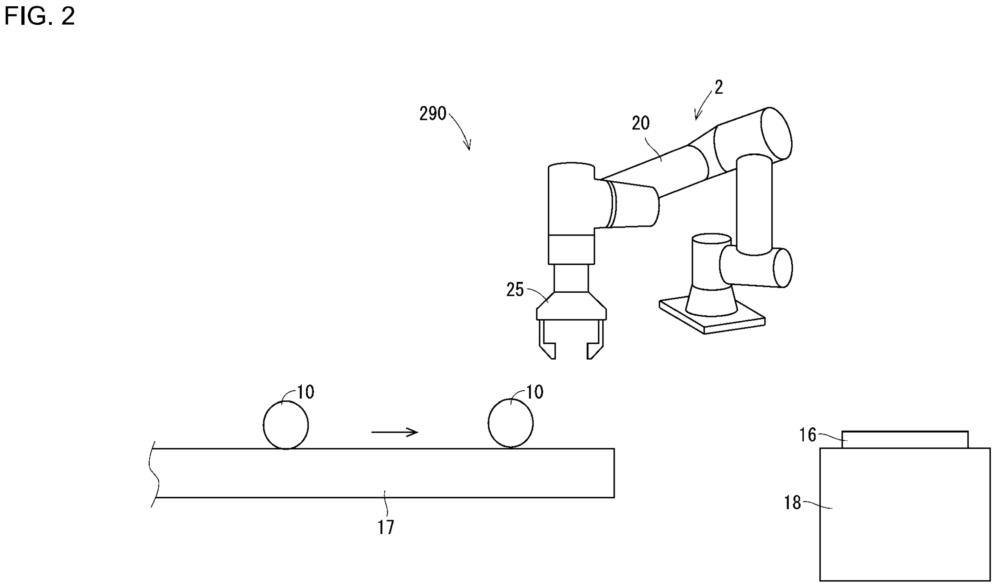

FIG. 2 is a schematic diagram of the robot 2 and its surroundings in an example. The object 10 is transported to a predetermined position by, for example, a conveyor belt 17. The conveyor belt 17 transports the object 10 from, for example, a position outside a work area (also referred to as a workspace) 290 of the robot 2 to the predetermined position in the work area 290. The conveyor belt 17 sequentially transports multiple objects 10 to the predetermined position. This predetermined position is the source area. The robot 2 transfers the object 10 from the predetermined position to a tray 16 as the destination area. The tray 16 is located on, for example, a worktable 18. The robot 2 holds the object 10 at the predetermined position with the end effector 25. The robot 2 then moves the arm 20 with the end effector 25 holding the object 10 to transfer the object 10 to the tray 16. The robot 2 causes the end effector 25 to release the object 10 to place the object 10 in the tray 16. After transferring the object 10, the robot 2 moves the end effector 25 to above the source area, holds a next object 10 transported to the source area by the conveyor belt 17, and transfers the object 10 to the tray 16. The tray 16 may be located on a conveyor belt other than the conveyor belt 17.

The object transfer task performed by the robot 2 may be divided into, for example, a task performed by the end effector 25 and a task performed by the arm 20. The task performed by the end effector 25 includes, for example, holding or releasing the object 10. The task performed by the arm 20 includes, for example, transferring the object 10 held with the end effector 25 from the source area to the destination area.

Note that the tasks performed by the robot 2 are not limited to the above examples. The source area and the destination area are not limited to the above examples. For example, at least one of the source area or the destination area may be a shelf on which the object 10 is placed, or a stand on which the object 10 is placed directly.

Example Structure of Control System

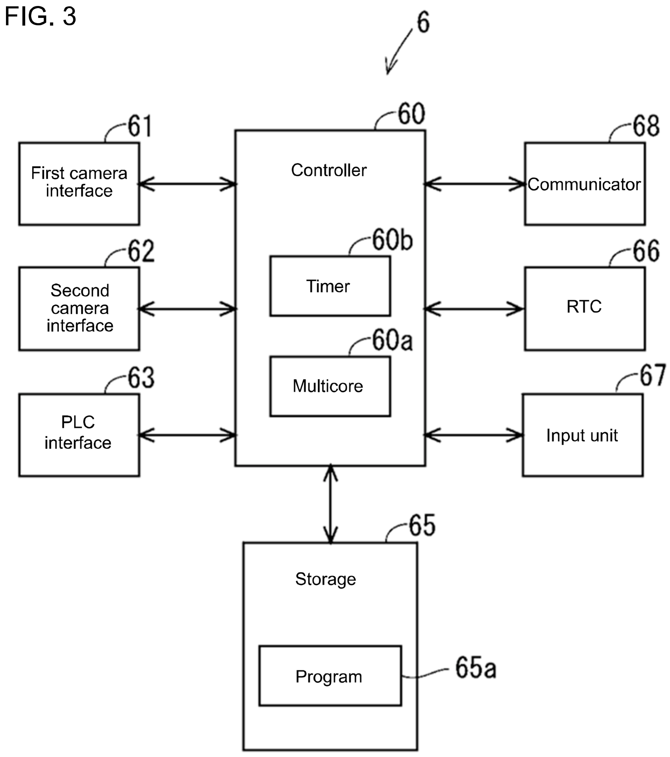

FIG. 3 is a block diagram of the control system 6, illustrating an example structure. The control system 6 is, for example, a computer, and may be a control device or a control circuit. As illustrated in FIG. 3, the control system 6 includes, for example, a controller 60, a first camera interface 61, a second camera interface 62, a PLC interface 63, a storage 65, a real-time clock (RTC) 66, an input unit 67, and a communicator 68.

The RTC 66 can measure the current time. The RTC 66 outputs time data indicating the current time to the controller 60.

The first camera interface 61 can communicate with the first camera 11. The second camera interface 62 can communicate with the second camera 12. The PLC interface 63 can communicate with the PLC 13. Each of the first camera interface 61, the second camera interface 62, and the PLC interface 63 may be, for example, an interface circuit, a communicator, or a communication circuit. The first camera interface 61, the second camera interface 62, and the PLC interface 63 may communicate with wires or wirelessly.

The communicator 68 can communicate with, for example, the arm controller 3. The controller 60 can control the arm controller 3 through the communicator 68. The communicator 68 may be, for example, a communication circuit, an interface, or an interface circuit. The communicator 68 communicates with the robot 2 with a wire in compliance with, for example, EtherCAT (registered trademark). Note that the communicator 68 may comply with communication standards other than EtherCAT. The communicator 68 may communicate wirelessly.

The controller 60 controls other components of the control system 6 to centrally manage the operation of the control system 6. The controller 60 may be, for example, a control circuit. The controller 60 includes at least one processor to provide control and processing capabilities for implementing various functions, as described in more detail below.

In various embodiments, at least one processor may be a single integrated circuit (IC), or multiple ICs or multiple discrete circuits, or both these circuits connected to one another for mutual communication. The processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may implement the functions described below.

The controller 60 may include, for example, a central processing unit (CPU) as the processor. The CPU in the controller 60 includes, for example, a multicore 60a and a timer 60b. The multicore 60a includes multiple cores that can operate asynchronously with one another. The multiple cores can operate in parallel. The CPU with the multicore is also referred to as a multicore CPU or a multicore processor. The timer 60b can measure a set period based on the time data from the RTC 66. The multicore 60a can set, in the timer 60b, the set period to be measured by the timer 60b.

The storage 65 may include a non-transitory recording medium readable by the multicore 60a in the controller 60, such as a read-only memory (ROM) and a random-access memory (RAM). The storage 65 stores, for example, a program 65a for controlling the control system 6. Various functions of the controller 60 are implemented by, for example, the multicore 60a executing the program 65a in the storage 65.

The storage 65 stores, for example, robot data and object data used for controlling the robot 2 in addition to the program 65a. The robot data is data about the robot 2. The robot data includes, for example, data indicating the shape of the robot 2. The object data is data about the object. The object data includes, for example, data indicating the shape of the object.

Note that the structure of the controller 60 is not limited to the above example. For example, the controller 60 may include multiple CPUs. The controller 60 may also include at least one digital signal processor (DSP). The functions of the controller 60 may be implemented entirely or partially by a hardware circuit, without using software to implement the functions. The storage 65 may include a non-transitory computer-readable recording medium other than the ROM and the RAM. The storage 65 may include, for example, a small hard disk drive and a solid-state drive (SSD).

The input unit 67 can receive various inputs from a user. The input unit 67 may include, for example, a mouse and a keyboard. The input unit 67 may include a touch sensor that receives touch operations performed by the user. In this case, the control system 6 may include a display such as a liquid crystal display, and the display and the touch sensor may together serve as a touchscreen display that performs display and detects a touch. The input unit 67 may include a microphone that receives a voice input from the user. The controller 60 can identify the user input received by the input unit 67 based on an output signal from the input unit 67. Note that the control system 6 may include a communicator that communicates with an external device, and may receive an input from the user through the communicator.

The control system 6 may include multiple computers. The control system 6 may also include a cloud server. In this case, the control system 6 may communicate with other components through, for example, a network including the Internet.

Example Structures of Arm Controller, Hand Controller, and Sensor Unit

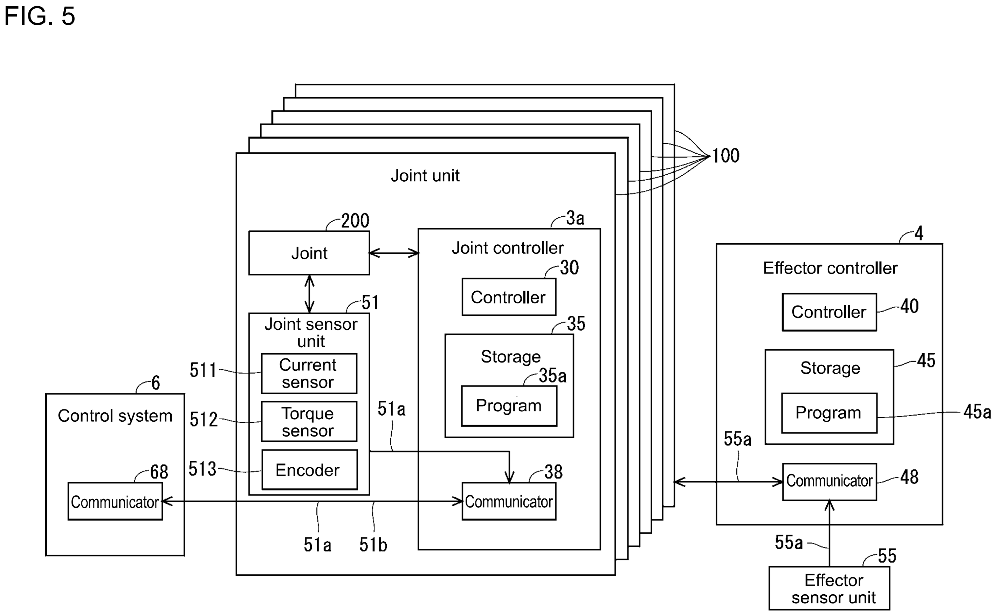

FIGs. 4 and 5 are block diagrams of the arm controller 3, the effector controller 4, the arm sensor unit 50, and the effector sensor unit 55, illustrating example structures in detail. The arm sensor unit 50 outputs arm state detection data 50a indicating its detection result to the arm controller 3. The arm state detection data 50a indicates the state of the arm 20. The effector sensor unit 55 outputs effector state detection data 55a indicating its detection result to the effector controller 4. The effector state detection data 55a indicates the state of the end effector 25.

The arm controller 3 may be, for example, an arm control circuit. The arm controller 3 includes multiple joint controllers 3a that control corresponding one of the multiple joints 200. Each of the joint controllers 3a can control the motor included in the corresponding joint 200. Each of the joint controllers 3a is, for example, a computer. Each of the joint controllers 3a may be, for example, a joint control circuit. As illustrated in FIG. 5, each of the joint controllers 3a includes, for example, a controller 30, a storage 35, and a communicator 38.

The effector controller 4 is, for example, a computer. The effector controller 4 may be, for example, a hand control circuit. As illustrated in FIG. 5, the effector controller 4 includes, for example, a controller 40, a storage 45, and a communicator 48.

The communicators 38 and 48 can communicate with wires in compliance with, for example, EtherCAT in the same manner as or in a similar manner to the communicator 68 in the control system 6. The communicators 38 and 48 may be, for example, interfaces or interface circuits.

The communicator 68 in the control system 6, the communicators 38 in the multiple joint controllers 3a, and the communicator 48 in the effector controller 4 are connected, for example, in a daisy chain to communicate with one another. The communicator 68 is connected to the communicator 38 in one of the joint controllers 3a with a wire. The communicator 48 in the hand controller 604 is connected to the communicator 38 in another one of the joint controllers 3a. The controller 60 in the control system 6 can control each of the joint controllers 3a through the communicator 68. In other words, the controller 60 can control the arm 20 through the communicator 68 and the arm controller 3. The controller 60 can also control the effector controller 4 through the communicator 68 and the arm controller 3. In other words, the controller 60 can control the end effector 25 through the communicator 68, the arm controller 3, and the effector controller 4. Note that the communicators 38 and 48 may comply with communication standards other than EtherCAT or may communicate wirelessly in the same manner as or in a similar manner to the communicator 68.

The controller 30 included in each of the joint controllers 3a controls other components of the joint controller 3a to centrally manage the operation of the joint controller 3a. The controller 40 included in the effector controller 4 controls other components of the effector controller 4 to centrally manage the operation of the effector controller 4. The controllers 30 and 40 may be, for example, control circuits. As described in more detail below, each of the controllers 30 and 40 includes at least one processor to provide control and processing capabilities for implementing various functions. The processors included in the controllers 30 and 40 may be the same as or similar to the processor included in the controller 60 in the control system 6 described above. Each of the controllers 30 and 40 may include, for example, a CPU as a processor.

The storage 35 included in each of the joint controllers 3a may include a non-transitory storage medium readable by the CPU in the controller 30, such as a ROM and a RAM. The storage 35 stores, for example, a program 35a for controlling the joint controller 3a. The various functions of the controller 30 are implemented by, for example, the CPU in the controller 30 executing the program 35a in the storage 35.

The storage 45 included in the effector controller 4 may include a non-transitory storage medium readable by the CPU in the controller 40, such as a ROM and a RAM. The storage 45 stores, for example, a program 45a for controlling the effector controller 4. The various functions of the controller 40 are implemented by, for example, the CPU in the controller 40 executing the program 45a in the storage 45.

Note that the structures of the controllers 30 and 40 are not limited to the above examples. For example, each of the controllers 30 and 40 may include multiple CPUs. Each of the controllers 30 and 40 may also include at least one DSP. The functions of the controller 30 may be implemented entirely or partially by a hardware circuit, without using software to implement the functions. The controller 40 also has the same or a similar structure. Each of the storages 35 and 45 may include a non-transitory computer-readable recording medium other than the ROM and the RAM in the same manner as or in a similar manner to the storage 65.

As illustrated in FIG. 4, the arm sensor unit 50 includes, for example, multiple joint sensor units 51 that each detect the state of the corresponding one of the multiple joints 200. In the robotic system 1, as illustrated in FIG. 5, a single joint 200, a single joint controller 3a that controls the joint 200, and a single joint sensor unit 51 that detects the state of the joint 200 form a single joint unit 100. The robotic system 1 includes, for example, six joint units 100.

Each of the joint sensor units 51 includes, for example, a current sensor 511, a torque sensor 512, and an encoder 513. The current sensor 511 can repeatedly detect a current (also referred to as a joint current) flowing through the joint 200. More specifically, the current sensor 511 can repeatedly detect a current flowing through the motor in the joint 200. The torque sensor 512 can repeatedly detect torque (also referred to as joint torque) on the joint 200. More specifically, the torque sensor 512 can repeatedly detect torque on the motor in the joint 200. The encoder 513 can repeatedly detect the rotation angle of the joint 200 (also referred to as a joint rotation angle), or more specifically, the rotation angle of the motor in the joint 200. The joint sensor unit 51 outputs joint state detection data 51a indicating its detection result. The joint state detection data 51a indicates the detected state of the joint 200. The joint state detection data 51a includes joint current detection data indicating the detected joint current, joint torque detection data indicating the detected joint torque, and joint rotation angle detection data indicating the detected joint rotation angle. The joint sensor unit 51 repeatedly outputs the joint state detection data 51a. The arm state detection data 50a output from the arm sensor unit 50 includes the joint state detection data 51a output from the six joint sensor units 51. In each of the joint units 100, the joint state detection data 51a output from the joint sensor unit 51 is input into the joint controller 3a as illustrated in FIG. 5.

In each of the joint units 100, the controller 30 in the joint controller 3a repeatedly calculates an estimated joint current to be used for setting the rotation angle of the joint 200 to a target rotation angle. The controller 30 then repeatedly produces joint state estimation data 51b indicating the calculated estimated joint current. In each of the joint units 100, the joint controller 3a controls the rotation of the joint 200 based on the joint state detection data 51a and the joint state estimation data 51b.

In each of the joint units 100, the communicator 38 transmits the joint state detection data 51a input into the joint controller 3a and the joint state estimation data 51b produced by the controller 30. The communicator 68 in the control system 6 can thus receive the joint state detection data 51a and the joint state estimation data 51b obtained by each of the joint units 100. The controller 60 in the control system 6 can receive the joint state detection data 51a and the joint state estimation data 51b obtained by each of the joint units 100 from the communicator 68. The controller 60 stores the received joint state detection data 51a and the received joint state estimation data 51b into the storage 65.

As illustrated in FIG. 4, the effector sensor unit 55 includes, for example, a contact sensor 551 and a force sensor 552. The contact sensor 551 is located on, for example, the holder in the end effector 25. The contact sensor 551 can repeatedly detect, for example, the grip force of the end effector 25 applied to the object 10. The contact sensor 551 is also referred to as, for example, a force detection sensor. The contact sensor 551 may be, for example, an electrical resistance sensor, a capacitance sensor, a piezoelectric sensor, or an optical sensor.

The force sensor 552 is located on, for example, a wrist portion of the end effector 25. The force sensor 552 can repeatedly detect, for example, a force acting on the end effector 25. The force sensor 552 may be, for example, a six-axis force sensor. The force sensor 552 may be, for example, an electrical resistance sensor, a capacitance sensor, a piezoelectric sensor, or an optical sensor.

The effector state detection data 55a output from the effector sensor unit 55 includes data indicating the detection result obtained by the contact sensor 551 and data indicating the detection result obtained by the force sensor 552. In other words, the effector state detection data 55a includes data indicating the detected grip force of the end effector 25 applied to the object 10 and data indicating the detected force acting on the end effector 25.

The effector state detection data 55a output from the effector sensor unit 55 is input into the effector controller 4. The controller 40 in the effector controller 4 controls the operation of the end effector 25 based on the effector state detection data 55a.

The communicator 48 transmits the effector state detection data 55a input into the effector controller 4. The communicator 68 in the control system 6 can thus receive the effector state detection data 55a output from the effector sensor unit 55. The controller 60 in the control system 6 can receive, from the communicator 68, the effector state detection data 55a output from the effector sensor unit 55. The controller 60 stores the received effector state detection data 55a into the storage 65.

First Camera and Second Camera

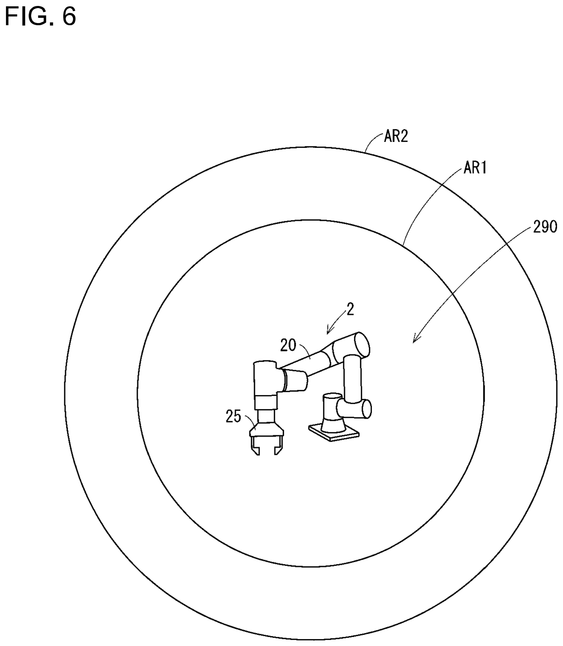

The first camera 11 is, for example, a three-dimensional (3D) camera. The first camera 11 captures an image of a first imaging area AR1 (refer to FIG. 6 described later) to produce, for example, a two-dimensional (2D) color image and a range image. The color image has pixel values including, for example, a red component (R component), a green component (G component), and a blue component (B component). The color image is also referred to as an RGB image. The color image shows the state of the first imaging area AR1. The range image is a 2D image representing the distance to each measurement point in the first imaging area AR1. The range image has pixel values each indicating the distance to the measurement point corresponding to the pixel value. The range image is also referred to as a depth image. The first camera 11 outputs, to the control system 6, first image data 110 (refer to FIG. 1) indicating a first camera image including the color image and the range image. In the control system 6, the controller 60 stores the first image data 110 received by the first camera interface 61 into the storage 65. As described later, the controller 60 detects, based on the first camera image indicated by the first image data 110, an obstacle in the first imaging area AR1 that obstructs the operation of the robot 2.

The second camera 12 is, for example, a 3D camera. The second camera 12 captures an image of a second imaging area AR2 (refer to FIG. 6 described later) to produce, for example, a 2D color image and a range image in the same manner as or in a similar manner to the first camera 11. The second camera 12 outputs, to the control system 6, second image data 120 (refer to FIG. 1) indicating a second camera image including the color image and the range image. In the control system 6, the controller 60 stores the second image data 120 received by the second camera interface 62 into the storage 65. As described later, the controller 60 detects a person in the second imaging area AR2 based on the second camera image indicated by the second image data 120.

The first camera 11 and the second camera 12 can capture images of, for example, the work area 290 (refer to FIG. 1) of the robot 2. The second camera 12 can capture an image of a wider area than the first camera 11. The second camera 12 may be a wide-area camera.

FIG. 6 is a schematic diagram of an example relationship between the first imaging area AR1 of the first camera 11 and the second imaging area AR2 of the second camera 12. As illustrated in FIG. 6, the first imaging area AR1 includes the work area 290 of the robot 2. The first imaging area AR1 may be the same as or larger than the work area 290. The second imaging area AR2 is, for example, larger than the first imaging area AR1 and includes the first imaging area AR1. The second camera 12 can capture an image of, for example, the work area 290 and an area surrounding the work area 290.

Note that the relationship between the first imaging area AR1 and the second imaging area AR2 is not limited to the example in FIG. 6. For example, the second imaging area AR2 may include a part of the first imaging area AR1. For example, the robot 2 may be partially surrounded by a safety fence to restrict people's access to an area included in the first imaging area AR1. In this case, such an area may or may not be included in the second imaging area AR2.

PLC

The PLC 13 can control, for example, the conveyor belt 17 that transports the object 10. The PLC 13 controls the conveyor belt 17 in response to an instruction from the control system 6. The control system 6 can control the conveyor belt 17 through the PLC 13. The PLC 13 can activate or deactivate the conveyor belt 17. The PLC 13 may adjust the transportation speed of the conveyor belt 17. The PLC 13 causes the conveyor belt 17 to transport the object 10 to the predetermined position in the work area 290. The PLC 13 outputs, for example, state data 130 indicating the state of the conveyor belt 17 and the state of the PLC 13 to the control system 6. In the control system 6, the controller 60 stores the state data 130 received by the PLC interface 63 into the storage 65. Note that the PLC 13 may control a control target other than the conveyor belt 17.

Details of Example Robot Control

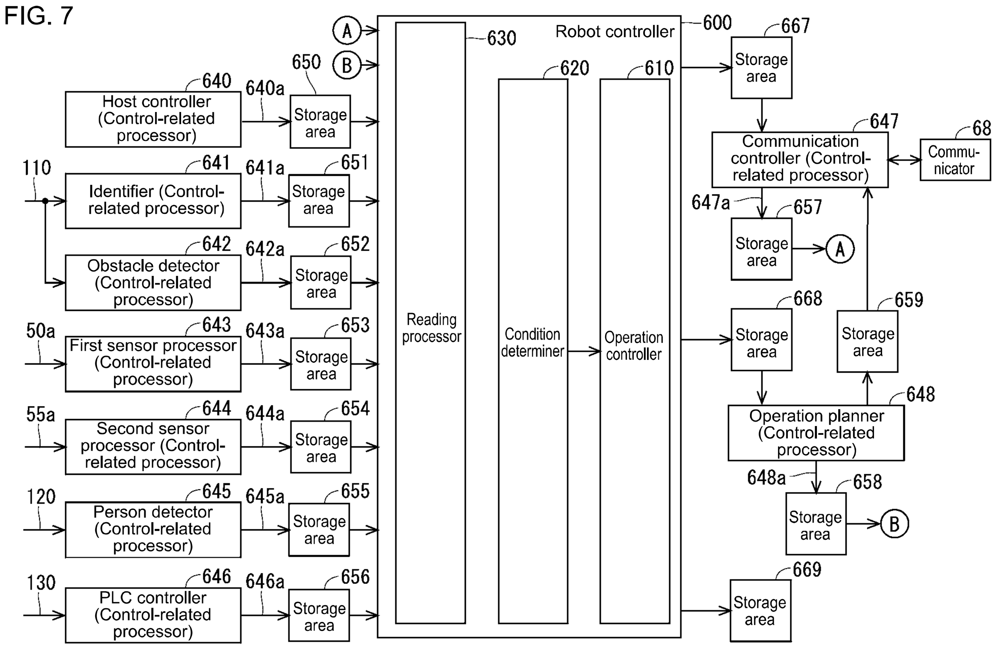

FIG. 7 is a block diagram of the control system 6, illustrating an example structure mainly focusing on the functionality. The controller 60 in the control system 6 includes, as functional blocks, multiple control-related processors 640, 641, 642, 643, 644, 645, 646, 647, and 648 that perform processes for controlling the robot 2, and a robot controller 600 that controls the robot 2 based on multiple pieces of output data output from the multiple control-related processors 640, 641, 642, 643, 644, 645, 646, 647, and 648. Each of the control-related processors 640, 641, 642, 643, 644, 645, 646, 647, and 648 and the robot controller 600 is implemented by, for example, the multicore 60a in the control system 6 executing the program 65a in the storage 65. Each of the control-related processors 640, 641, 642, 643, 644, 645, 646, 647, and 648 may be a processor that outputs data to be used to control the robot 2.

The multiple control-related processors 640, 641, 642, 643, 644, 645, 646, 647, and 648 and the robot controller 600 implemented by the multicore 60a operate, for example, asynchronously with one another. The multiple control-related processors 640, 641, 642, 643, 644, 645, 646, 647, and 648 and the robot controller 600 can operate in parallel. The multiple control-related processors 640, 641, 642, 643, 644, 645, 646, 647, and 648 can output data at times predetermined for the respective processors. Each of the multiple control-related processors 640, 641, 642, 643, 644, 645, 646, 647, and 648 and the robot controller 600 is implemented by at least one of the multiple cores included in the multicore 60a.

Note that the functions of the robot controller 600 may be implemented entirely or partially by a hardware circuit, without using software to implement the functions. The control-related processors 640, 641, 642, 643, 644, 645, 646, 647, and 648 also have the same or a similar structure.

The control-related processors 640, 641, 642, 643, 644, 645, 646, 647, and 648 may be hereafter simply referred to as control-related processors unless they are to be distinguished from one another. A control-related processor that performs a process based on the output from the robot controller 600 may be referred to as a downstream control-related processor. A control-related processor that performs a process independently of the output from the robot controller 600 may be referred to as an upstream control-related processor. In the present embodiment, as described later, the control-related processors 640, 641, 642, 643, 644, 645 and 646 are upstream-related processors, and the control-related processors 647 and 648 are downstream control-related processors.

As described above, when the multiple control-related processors and the robot controller 600 operate asynchronously with one another, each of the multiple control-related processors and the robot controller 600 is less susceptible to the operation of the other components. The control system 6 can thus be designed or altered easily. For example, a control-related processors can be easily added or eliminated. More specifically, for example, multiple devices with different specifications can be easily connected to the robot controller 600, the devices installed around the robot 2 are easily replaced, or any of the devices can be easily used.

The control-related processor 640 functions as a host controller 640 that provides an instruction to the robot controller 600. The robot controller 600 controls the robot 2 in response to an instruction from the host controller 640. The host controller 640 provides an instruction to the robot controller 600 in response to a user input received by the input unit 67.

The control-related processor 641 functions as an identifier 641 that performs an identification process (also referred to as an identification operation) of identifying, based on the first camera image indicated by the first image data 110, a start position of a movement operation (also referred to as a movement start position) of the arm 20 and an end position of the movement operation (also referred to as a movement end position) of the arm 20. The identifier 641 performs the identification process, for example, repeatedly. The identifier 64 may use, for example, an artificial intelligence function such as machine learning to identify the movement start position and the movement end position of the arm 20. In the control system 6, the position of the arm 20 is indicated by the posture of the arm 20. In other words, the position of the arm 20 is indicated by the rotation angle of each of the joints 200 in the arm 20. The movement end position may be a stop position of the arm 20 to stop. Note that the identifier 641 may identify the movement end position alone based on the first camera image without identifying the movement start position.

Among the operations of the robot 2 (also referred to as robot operations), an operation of holding the object 10 from the source area with the end effector 25 is referred to as a hold operation. Among the robot operations, an operation of moving the arm 20 toward the destination area with the end effector 25 holding an object 10 is referred to as a hold movement operation. Among the robot operations, an operation of releasing the object 10 and placing the object 10 in the destination area with the end effector 25 is referred to as a release operation. An operation of moving the arm 20 toward the source area with the end effector 25 holding no object 10 after the end effector 25 places an object 10 in the destination area is referred to as a non-hold movement operation. The hold movement operation and the non-hold movement operation of the robot 2 may be operations for changing the posture of the arm 20. The hold operation and the release operation may be the operations of the end effector 25. The hold movement operation and the non-hold movement operation may be the operations of the arm 20.

The movement start position of the arm 20 may be, for example, the position of the arm 20 at the start of the hold movement operation. The movement end position of the arm 20 may be the position of the arm 20 at the end of the hold movement operation. In this case, the movement start position of the arm 20 may be, for example, the position of the arm 20 at the time of a switch from a program for controlling the hold operation to a program for controlling the hold movement operation. The movement end position of the arm 20 may be, for example, the position of the arm 20 at the time of a switch from the program for controlling the hold movement operation to a program for controlling the release operation. The programs for controlling the hold operation and the release operation are included in, for example, the program 45a in the storage 45 in the effector controller 4 and executed by the controller 40. The program for controlling the hold movement operation is included in, for example, the program 65a in the storage 65 in the control system 6 and executed by the controller 60.

The movement start position of the arm 20 may be, for example, the position of the arm 20 at the start of the non-hold movement operation. The movement end position of the arm 20 may be the position of the arm 20 at the end of the non-hold movement operation. In this case, the movement start position of the arm 20 may be, for example, the position of the arm 20 at the time of a switch from the program for controlling the release operation to a program for controlling a non-hold movement operation. The movement end position of the arm 20 may be, for example, the position of the arm 20 at the time of a switch from a program for controlling the non-hold movement operation to the program for controlling the hold operation. The program for controlling the non-hold movement operation is included in, for example, the program 65a in the storage 65 in the control system 6 and executed by the controller 60.

The control-related processor 642 functions as an obstacle detector 642 that performs an obstacle detection process (also referred to as an obstacle detection operation) of detecting, based on the first camera image indicated by the first image data 110, an obstacle that obstructs the operation of the robot 2. The obstacle detector 642 repeatedly performs the obstacle detection process. The obstacle includes at least one object in the work area 290. The obstacle includes, for example, the conveyor belt 17, the tray 16, and the worktable 18. The obstacle may include other objects. For example, the obstacle may include at least one of a structure such as a wall or a pole, a person, a chair, a table, a shelf, a partition, a safety fence, or an illuminator. The obstacle detector 642 can detect an obstacle in the first imaging area AR1. The obstacle detector 642 may detect an obstacle using, for example, an artificial intelligence function such as machine learning. The first imaging area AR1 may be a detection area for an obstacle. The obstacle detector 642 can also detect a moving obstacle.

The control-related processor 643 functions as a first sensor processor 643 that performs a process using the detection result obtained by the first sensor unit 50 (in other words, the arm sensor unit 50). The first sensor processor 643 performs a process using the detection result obtained by the arm sensor unit 50, or in other words, the arm state detection data 50a. The first sensor processor 643 may be hereafter referred to as an arm sensor processor 643.

The control-related processor 644 functions as a second sensor processor 644 that performs a process using the detection result obtained by the second sensor unit 55 (in other words, the effector sensor unit 55). The second sensor processor 644 performs a process using the detection result obtained by the effector sensor unit 55, or in other words, the effector state detection data 55a. The second sensor processor 644 may be hereafter referred to as an effector sensor processor 644.

The control-related processor 645 functions as a person detector 645 that performs a person detection process (also referred to as a person detection operation) of detecting a person around the robot 2 based on the second camera image indicated by the second image data 120. The person detector 645 repeatedly performs the person detection process. The person detector 645 can detect a person in the second imaging area AR2. When a person is located within the first imaging area AR1 in the second imaging area AR2, the person is also detected as an obstacle by the obstacle detector 642. The person detector 645 may detect a person using, for example, an artificial intelligence function such as machine learning. The second imaging area AR2 may be a detection area for a person. The second imaging area AR2 may be hereafter referred to as a person detection area AR2.

The control-related processor 646 functions as a PLC controller 646 that controls the PLC 13. The PLC controller 646 can control the conveyor belt 17 through the PLC 13.

The control-related processor 647 functions as a communication controller 647 that controls the communicator 68. The communication controller 647 can cause the communicator 68 to transmit data. The communication controller 647 can also receive data received by the communicator 68 from the communicator 68 and store the received data into the storage 65.

The control-related processor 648 functions as an operation planner 648 that performs a target operation generation process of generating a target operation for the arm 20. Generating a target operation for the arm 20 is, in other words, planning a target operation for the arm 20 or generation of a target operation for the arm 20. In the target operation generation process, the operation planner 648 generates, for example, a target operation for the arm 20 to move from the movement start position to the movement end position. Generation of a target operation for the arm 20 may be hereafter simply referred to as target operation generation. A target operation for the arm 20 may also be referred to as a target operation for the robot 2.

In the target operation generation process, the operation planner 648 generates, for example, an operation path of the arm 20. The operation planner 648 then generates a target operation for the arm 20 based on the generated operation path. For example, the operation planner 648 generates a target operation for each of the joints 200 in the arm 20 based on the generated operation path. More specifically, the operation planner 648 sets a target rotation angle at a specific time for each of the joints 200.

The robot controller 600 exchanges data with each of the control-related processors through the storage 65, rather than exchanging data directly.

The storage 65 includes a storage area 650 into which the host controller 640 writes data, a storage area 651 into which the identifier 641 writes data, a storage area 652 into which the obstacle detector 642 writes data, a storage area 653 into which the first sensor processor 643 writes data, and a storage area 654 into which the second sensor processor 644 writes data. The storage 65 also includes a storage area 656 into which the PLC controller 646 writes data, a storage area 657 into which the communication controller 647 writes data, and storage areas 658 and 659 into which the operation planner 648 writes data. The storage 65 includes storage areas 667, 668, and 669 into which the robot controller 600 writes data.

The robot controller 600 obtains output data from each of the control-related processors by reading data from the corresponding one of the storage areas 650, 651, 652, 653, 654, 655, 656, 657, and 658, rather than directly obtaining the output data from each of the control-related processors.

The robot controller 600 writes data directed to the communication controller 647 into the storage area 667. The storage area 667 is separate from the storage areas 650, 651, 652, 653, 654, 655, 656, 657, and 658. The communication controller 647 obtains data output from the robot controller 600 and directed to the communication controller 647 by reading data from the storage area 667, rather than directly obtaining the data output from the robot controller 600.

The robot controller 600 writes data directed to the operation planner 648 into the storage area 668. The operation planner 648 obtains data output from the robot controller 600 and directed to the operation planner 648 by reading data from the storage area 668, rather than directly obtaining the data output from the robot controller 600. The storage area 668 stores information to be used by the operation planner 648 to generate an operation of the robot 2. The storage area 668 stores, for example, robot data and object data used in the target operation generation process.

The operation planner 648 writes data to be transmitted from the communicator 68 to the arm controller 3 into the storage area 659. The communication controller 647 reads the data from the storage area 659 and causes the communicator 68 to transmit the read data.

The robot controller 600 can control the movement operation of the robot 2 based on the output data from the multiple control-related processors. In other words, the robot controller 600 can control the movement of the arm 20 based on the output data from the multiple control-related processors. For example, the robot controller 600 can control the hold movement operation of the arm 20, or specifically, the movement of the arm 20 with the end effector 25 holding an object 10. The robot controller 600 can also control the non-hold movement operation of the arm 20, or specifically, the movement of the arm 20 with the end effector 25 holding no object 10. The hold movement operation and the non-hold movement operation of the arm 20 may be collectively referred to as an arm operation or an arm movement operation.

The robot controller 600 includes, for example, an operation controller 610, a condition determiner 620, and a reading processor 630. The operation controller 610 can control the arm operation (specifically, the hold movement operation and the non-hold movement operation of the arm 20). The operation controller 610 is operable as, for example, a state machine that causes the control state of the robot 2 to transition based on items of multiple pieces of output data output from the respective control-related processors. The operation controller 610 can perform a predetermined process corresponding to each of multiple control states of the robot 2 that are predefined. Each of the control states of the robot 2 is the state of the operation controller 610 controlling the robot 2. The operation controller 610 writes data directed to the communication controller 647 into the storage area 667. The operation controller 610 also writes data directed to the operation planner 648 into the storage area 668.

The robot controller 600 performs the operation, for example, at regular intervals. The robot controller 600 may start the operation at least at regular intervals. In other words, the robot controller 600 performs the operation, for example, cyclically. Each of the operation controller 610, the condition determiner 620, and the reading processor 630 performs the operation, for example, at regular intervals. The regular interval period is set to, for example, 5 ms. In this example, the timer 60b repeatedly measures periods of, for example, 5 ms. The timer 60b outputs a measurement completion notification upon completing each 5 ms measurement. The reading processor 630 can repeatedly receive the measurement completion notification from the timer 60b to perform the operation at regular intervals, followed by the processes performed by the condition determiner 620 and the operation controller 610. Note that the condition determiner 620 and the operation controller 610 can also complete their operations within a single cycle. The robot controller 600 can also perform its control operation at regular intervals when the data to be written into the storage 65 has no update. In this case, the data processing causes the robot controller 600 to determine not to update the current control state or not to update the data written into the storage 65.

As described above, when the operation controller 610 that controls the operation of the arm 20 is operable as a state machine, the operation controller 610 can be designed or altered easily.

The condition determiner 620 performs a condition determination process of determining whether a maintaining condition or a transition condition for the state of the operation controller 610 is satisfied based on multiple pieces of output data output from the respective control-related processors. The state of the operation controller 610 is maintained or transitions to another state based on the determination result obtained by the condition determiner 620. The state of the operation controller 610 may be hereafter referred to as a controller state. The controller state may be the control state of the operation controller 610 controlling the robot 2. The maintaining condition and the transition condition may be collectively referred to as state conditions.

The reading processor 630 reads, from the storage areas 650, 651, 652, 653, 654, 655, 656, 657, and 658, output data from the multiple control-related processors and writes the data into the storage area 669. The reading processor 630 can read, from the storage areas 650, 651, 652, 653, 654, 655, 656, 657, and 658, the output data from the multiple control-related processors at times predetermined for the reading processor 630, or specifically, at predetermined intervals (e.g., 5 ms). The condition determiner 620 reads, from the storage 65, the output data from the multiple control-related processors and determines whether the maintaining condition or the transition condition for the state of the operation controller 610 is satisfied based on the items of the read output data from the multiple control-related processors. Note that the condition determiner 620 and the operation controller 610 may be integrated. The condition determiner 620 and the reading processor 630 may also be integrated. The operation controller 610, the condition determiner 620, and the reading processor 630 may also be integrated.

Operation Example of Host Controller

The host controller 640 can control the robot controller 600 through the storage area 650. The host controller 640 outputs determination data 640a that is used for controlling the arm operation (in other words, the arm movement operation) and used by the condition determiner 620 in the condition determination process. The host controller 640 writes the determination data 640a into the storage area 650. The reading processor 630 reads the determination data 640a from the storage area 650 and writes the data into the storage area 669.

The determination data 640a indicates, for example, one of readiness notification data, operation start request data, pause request data, or stop request data. The readiness notification data, the operation start request data, the pause request data, and the stop request data are respectively indicated by, for example, 01h, 02h, 04h, and 08h in hexadecimal. The host controller 640 outputs, as the determination data 640a, one of the readiness notification data, the operation start request data, the pause request data, or the stop request data, depending on the situation. The host controller 640 repeatedly produces the determination data 640a and writes the data into the storage area 650. The host controller 640 writes the determination data 640a into the storage area 650 at intervals of, for example, 100 to 500 ms inclusive. When writing a new piece of determination data 640a into the storage area 650, the host controller 640 updates an old piece of determination data 640a in the storage area 650 to the new piece of determination data 640a. Note that each of the readiness notification data, the operation start request data, the pause request data, and the stop request data may be converted to data in hexadecimal by the robot controller 600 that uses the data. The data output from each of the control-related processors other than the host controller 640 is the same as or similar to the above data.

The operation start request data is provided from the host controller 640 to request the robot controller 600 to start the operation of the arm 20. The pause request data is provided from the host controller 640 to request the robot controller 600 to pause the arm 20. The stop request data is provided from the host controller 640 to request the robot controller 600 to stop the arm 20. The host controller 640 outputs the operation start request data, the pause request data, the stop request data in response to, for example, a user instruction received by the input unit 67.

The readiness notification data indicates that the host controller 640 is ready. The host controller 640 being ready refers to, for example, the host controller 640 being operable and outputting none of the operation start request data, the pause request data, and the stop request data.

Operation Example of Identifier

For the hold movement operation of the arm 20, the identifier 641 identifies the movement start position that is, for example, the position of the arm 20 with the distal end of the end effector 25 located slightly above the object 10 transported by the conveyor belt 17, or in other words, located slightly above the predetermined position in the work area 290. For the hold movement operation of the arm 20, the identifier 641 identifies the movement end position that is, for example, the position of the arm 20 with the distal end of the end effector 25 located slightly above the tray 16. For the non-hold movement operation of the arm 20, the identifier 641 identifies the movement end position that is, for example, the position of the arm 20 with the distal end of the end effector 25 located slightly above the tray 16. For the non-hold movement operation of the arm 20, the identifier 641 identifies the movement start position that is, for example, the position of the arm 20 with the distal end of the end effector 25 located slightly above the object 10 transported by the conveyor belt 17, or in other words, located slightly above the predetermined position in the work area 290. Note that each of the movement start position and the movement end position of the arm 20 is not limited to the above example and may be at a different position. As described above, the identifier 641 may identify the movement end position alone without identifying the movement start position.

For example, each time the identifier 641 identifies a new movement start position, the identifier 641 writes movement start position data indicating the identified movement start position into the storage area 651. For example, each time the identifier 641 identifies a new movement end position, the identifier 641 writes movement end position data indicating the identified movement end position into the storage area 651.

Identifying a new movement start position includes identifying a movement start position in the first identification process after the control system 6 is activated, in addition to identifying a movement start position that has changed after the previous identification process. Identifying a new movement start position does not include identifying the same movement start position as in the previous identification process.

In the same or a similar manner, identifying a new movement end position includes identifying a movement end position in the first identification process after the control system 6 is activated, in addition to identifying a movement end position that has changed after the previous identification process. Identifying a new movement end position does not include identifying the same movement end position as in the previous identification process.

The identifier 641 also outputs determination data 641a that is used for controlling the arm operation and used by the condition determiner 620 in the condition determination process. The identifier 641 writes the determination data 641a into the storage area 651. The reading processor 630 reads the determination data 641a from the storage area 651 and writes the data into the storage area 669.

The determination data 641a indicates, for example, one of readiness notification data, identification-in-progress notification data, identification completion notification data, or error notification data. The identifier 641 outputs, as the determination data 641a, one of the readiness notification data, the identification-in-progress notification data, the identification completion notification data, or the error notification data, depending on the situation. The readiness notification data, the identification-in-progress data, the identification completion notification data, and the error notification data are respectively indicated by, for example, 01h, 02h, 04h, and F0h in hexadecimal. The identifier 641 repeatedly produces the determination data 641a and writes the data into the storage area 651. The identifier 641 writes the determination data 641a into the storage area 651 at intervals of, for example, 0.5 to 1 s inclusive. When writing a new piece of determination data 641a into the storage area 651, the identifier 641 updates an old piece of determination data 641a in the storage area 651 to the new piece of determination data 641a.

The identification-in-progress notification data indicates that the identifier 641 is performing an identification process (also referred to as a target identification process) of identifying at least one of the movement start position or the movement end position of the arm 20. The identification completion notification data indicates that the identifier 641 has completed the target identification process. After completing the target identification process, the identifier 641 outputs the identification completion notification data for a predetermined time.

When the identifier 641 identifies a new movement start position in a specific identification process, the determination data 641a indicates the identification-in-progress notification data during the specific identification process. When the identifier 641 identifies a new movement end position in a specific identification process, the determination data 641a indicates the identification-in-progress notification data during the specific identification process. When the identifier 641 identifies, in a specific identification process, a movement start position and a movement end position that are the same as those in the previous identification process, the determination data 641a does not indicate the identification-in-progress notification data during the specific identification process. When the determination data 641a indicates the identification-in-progress notification data, the identifier 641 is performing the identification process (in other words, the target identification process) of identifying at least one of a new movement start position or a new movement end position.

The error notification data indicates that the identifier 641 has an error. In other words, the error notification data indicates, for example, that the identifier 641 cannot perform the identification process. The identifier 641 outputs the error notification data when the identifier 641 cannot perform the identification process due to its abnormal operation. The identifier 641 also outputs the error notification data when the identifier 641 cannot perform the identification process based on the first camera image due to abnormal communication between the first camera interface 61 and the first camera 11.

The readiness notification data indicates that the identifier 641 is ready. The identifier 641 being ready refers to, for example, the identifier 641 being operable and outputting none of the identification-in-progress notification data, the identification completion notification data, and the error notification data.

For example, in response to the start of the target identification process when the determination data 641a indicates the readiness notification data, the item of the determination data 641a switches from the readiness notification data to the identification-in-progress notification data. When the target identification process is complete, the item of the determination data 641a switches to the identification completion notification data. The item of the determination data 641a then switches to the readiness notification data after the predetermined time.

Operation Example of Obstacle Detector

The obstacle detector 642 produces obstacle data indicating the position, the shape, and the size of a detected obstacle based on the first image data 110. The obstacle data may be, for example, point cloud data (also referred to as obstacle point cloud data) representing the position, the shape, and the size of the obstacle. The obstacle point cloud data indicates a point cloud that is a set of multiple points representing the obstacle. The obstacle point cloud data includes, for example, position data (also referred to as coordinate data) and color data of each of the multiple points representing the obstacle. The obstacle point cloud data may indicate the color of the obstacle. The obstacle detector 642 writes the produced obstacle data into the storage area 652. The robot controller 600 reads the obstacle data from the storage area 652 and writes the obstacle data into the storage area 668. When a new piece of obstacle data is written into the storage area 652, the robot controller 600 updates the obstacle data in the storage area 668 to the new piece of obstacle data.

Each time the obstacle detector 642 detects a new obstacle, for example, the obstacle detector 642 writes the obstacle data of the detected obstacle into the storage area 652. Detecting a new obstacle includes detecting an obstacle in the first obstacle detection process after the control system 6 is activated, in addition to detecting an obstacle that has changed after the previous obstacle detection process. Detecting a new obstacle does not include detecting the same obstacle as in the previous obstacle detection process. The obstacle being changed refers to at least one of the position, the shape, or the size of the obstacle being changed. The obstacle detector 642 detects the obstacle at regular intervals. The obstacle detector 642 can thus detect the movement of the obstacle. The robot controller 600 can use the output from the obstacle detector 642 to control the arm operation for a moving obstacle.

The obstacle detector 642 outputs determination data 642a that is used for controlling the arm operation and used by the condition determiner 620 in the condition determination process. The obstacle detector 642 writes the determination data 642a into the storage area 652. The reading processor 630 reads the determination data 642a from the storage area 652 and writes the data into the storage area 669.

The determination data 642a includes, for example, one of readiness notification data, detection-in-progress notification data, detection completion notification data, or error notification data. The obstacle detector 642 outputs, as the determination data 642a, one of the readiness notification data, the detection-in-progress notification data, the detection completion notification data, or the error notification data, depending on the situation. The readiness notification data, the detection-in-progress notification data, the detection completion notification data, and the error notification data are respectively indicated by, for example, 01h, 02h, 04h, and F0h in hexadecimal. The obstacle detector 642 repeatedly produces the determination data 642a and writes the data into the storage area 652. The obstacle detector 642 writes the determination data 642a into the storage area 652 at intervals of, for example, 30 to 100 ms inclusive. When writing a new piece of determination data 642a into the storage area 652, the obstacle detector 642 updates an old piece of determination data 642a in the storage area 652 to the new piece of determination data 642a.

The detection-in-progress notification data indicates that the obstacle detector 642 is performing the obstacle detection process (also referred to as a target obstacle detection process) of detecting a new obstacle. The detection completion notification data indicates that the obstacle detector 642 has completed the target obstacle detection process. After the target obstacle detection process is complete, the obstacle detector 642 outputs the detection completion notification data for a predetermined time.

When the obstacle detector 642 detects a new obstacle in a specific obstacle detection process, the determination data 642a indicates the detection-in-progress notification data during the obstacle detection process. When the obstacle detector 642 identifies, in a specific obstacle detection process, an obstacle that is the same as the obstacle identified in the previous obstacle detection process, the determination data 642a does not indicate the detection-in-progress notification data during the specific obstacle detection process. When the determination data 642a indicates the detection-in-progress notification data, the obstacle detector 642 is performing the obstacle detection process of detecting a new obstacle (in other words, the target obstacle detection process).

The error notification data indicates that the obstacle detector 642 has an error. In other words, the error notification data indicates, for example, that the obstacle detector 642 cannot perform the obstacle detection process. The obstacle detector 642 outputs the error notification data when the obstacle detector 642 cannot perform the obstacle detection process due to its abnormal operation. The obstacle detector 642 also outputs the error notification data when the obstacle detector 642 cannot perform the obstacle detection process based on the first camera image due to abnormal communication between the first camera interface 61 and the first camera 11.

The readiness notification data indicates that the obstacle detector 642 is ready. The obstacle detector 642 being ready refers to, for example, the obstacle detector 642 being operable and outputting none of the detection-in-progress notification data, the detection completion notification data, and the error notification data.

For example, in response to the start of the target obstacle detection process when the determination data 642a indicates the readiness notification data, the item of the determination data 642a switches from the readiness notification data to the detection-in-progress notification data. When the target obstacle detection process is complete, the item of the determination data 642a switches to the detection completion notification data. The item of the determination data 642a then switches to the readiness notification data after the predetermined time.

Operation Example of First Sensor Processor

The first sensor processor 643 (in other words, the arm sensor processor 643) can perform a first weight determination process of determining the weight of the object 10 held by the end effector 25 based on the arm state detection data 50a. In the first weight determination process, for example, the arm sensor processor 643 determines whether the object 10 held by the end effector 25 weighs slightly heavier than an intended value based on the joint state detection data 51a and the joint state estimation data 51b. In the first weight determination process, the arm sensor processor 643 also determines whether the object 10 held by the end effector 25 weighs greatly heavier than the intended value based on the joint state detection data 51a and the joint state estimation data 51b. The weight of the object 10 may be hereafter referred to as the object weight. The object weight being slightly heavier than the intended value may be referred to as minor overweight. The object weight being greatly heavier than the intended value may be referred to as major overweight.

The detected joint current detected by the current sensor 511 for setting the rotation angle of a joint 200 to a specific target rotation angle corresponds to the estimated joint current estimated for setting the rotation angle of the joint 200 to the specific rotation angle. The estimated joint current is a joint current estimated when the object weight is defined as the intended value.

For example, the arm sensor processor 643 repeatedly determines, for each of the joints 200, an absolute value of the difference (also referred to as an absolute difference value) between the detected joint current indicated by the joint state detection data 51a and the estimated joint current indicated by the joint state estimation data 51b and corresponding to the detected joint current. The arm sensor processor 643 determines that the object weight shows minor overweight when the absolute difference value remains greater than or equal to a first threshold for a relatively long period for at least one of the multiple joints 200. For example, the arm sensor processor 643 determines that the object weight shows minor overweight when the absolute difference value remains greater than or equal to the first threshold for a first predetermined time for at least one of the multiple joints 200. The arm sensor processor 643 determines that the object weight shows major overweight when the absolute difference value remains greater than or equal to a second threshold for the first predetermined time for at least one of the multiple joints 200. The second threshold is set to a value greater than the first threshold.

Note that the arm sensor processor 643 may use the detected joint torque and the estimated joint torque, in place of the detected joint current and the estimated joint current, to determine whether the object weight shows minor overweight in the same or a similar manner. The arm sensor processor 643 may also use the detected joint torque and the estimated joint torque, in place of the detected joint current and the estimated joint current, to determine whether the object weight shows major overweight in the same manner as or in a similar manner to the above.

The arm sensor processor 643 also performs a collision determination process of determining whether a collision of the robot 2 has occurred based on the arm state detection data 50a. A collision of the robot 2 includes, for example, a person or an obstacle colliding with the arm 20 or the end effector 25.

In the collision determination process, the arm sensor processor 643 determines whether a collision of the robot 2 has occurred based on, for example, the joint state detection data 51a and the joint state estimation data 51b. The arm sensor processor 643 repeatedly determines the absolute difference value described above for, for example, each of the joints 200. The arm sensor processor 643 then determines that a collision of the robot 2 has occurred when the absolute difference value remains greater than or equal to a third threshold for a relatively short period for at least one of the multiple joints 200. For example, the arm sensor processor 643 determines that a collision of the robot 2 has occurred when the absolute difference value remains greater than or equal to the third threshold for a second predetermined time for at least one of the multiple joints 200. The second predetermined time is shorter than the first predetermined time.

Note that the arm sensor processor 643 may use the detected joint torque and the estimated joint torque, in place of the detected joint current and the estimated joint current, to determine whether a collision of the robot 2 has occurred in the same manner as or in a similar manner to the above. The arm 20 may include, for example, a pressure sensor on its surface layer, and the arm sensor processor 643 may use the pressure sensor to determine whether a collision of the robot 2 has occurred in the same manner as or in a similar manner to the above. The arm 20 may include, for example, a contactless sensor such as an optical sensor on its surface layer, and the arm sensor processor 643 may use the contactless sensor to determine whether a collision of the robot 2 has occurred in the same manner as or in a similar manner to the above.

The arm sensor processor 643 outputs determination data 643a that is used for controlling the arm operation and used by the condition determiner 620 in the condition determination process. The arm sensor processor 643 writes the determination data 643a into the storage area 653. The reading processor 630 reads the determination data 643a from the storage area 653 and writes the data into the storage area 669.

The determination data 643a indicates, for example, one of readiness notification data, minor overweight notification data, major overweight notification data, collision notification data, or error notification data. The readiness notification data, the minor overweight notification data, the major overweight notification data, the collision notification data, and the error notification data are respectively indicated by, for example, 01h, 02h, 04h, 08h, and F0h in hexadecimal. The arm sensor processor 643 outputs, as the determination data 643a, one of the minor overweight notification data, the major overweight notification data, the collision notification data, or the error notification data, depending on the situation. The arm sensor processor 643 repeatedly produces the determination data 643a and writes the data into the storage area 653. The arm sensor processor 643 writes the determination data 643a into the storage area 653 at intervals of, for example, 1 to 10 ms inclusive. When writing a new piece of determination data 643a into the storage area 653, the arm sensor processor 643 updates an old piece of determination data 643a in the storage area 653 to the new piece of determination data 643a.

The minor overweight notification data indicates that the object weight shows minor overweight. After determining that the object weight shows minor overweight as described above, the arm sensor processor 643 outputs the minor overweight notification data.

The major overweight notification data indicates that the object weight shows major overweight. After determining that the object weight shows major overweight as described above, the arm sensor processor 643 outputs the major overweight notification data.

The collision notification data indicates that a collision of the arm 20 has occurred. After determining that a collision of the arm 20 has occurred as described above, the arm sensor processor 643 outputs the collision notification data for a predetermined time.

The error notification data indicates that the arm sensor processor 643 has an error. In other words, the error notification data indicates, for example, that the arm sensor processor 643 cannot perform at least one of the first weight determination process or the collision determination process. The arm sensor processor 643 outputs the error notification data when the arm sensor processor 643 cannot perform at least one of the first weight determination process or the collision determination process due to its abnormal operation. The arm sensor processor 643 also outputs the error notification data when the arm sensor processor 643 cannot obtain the joint state detection data 51a due to abnormal communication between the communicator 68 in the control system 6 and the communicators 38 in joint controllers 3a and thus cannot perform at least one of the first weight determination process or the collision determination process.

The readiness notification data indicates that the arm sensor processor 643 is ready. The arm sensor processor 643 being ready refers to, for example, the arm sensor processor 643 being operable and outputting none of the minor overweight notification data, the major overweight notification data, the collision notification data, and the error notification data.

Operation Example of Second Sensor Processor

The second sensor processor 644 (or in other words, the effector sensor processor 644) can perform a holding state determination process of determining the holding state of the end effector 25 for an object 10 based on the effector state detection data 55a. In the holding state determination process, for example, the effector sensor processor 644 determines whether the end effector 25 has dropped the object 10 based on the effector state detection data 55a. The effector sensor processor 644 determines that the end effector 25 has dropped the object 10 when the effector state detection data 55a indicates that the grip force of the end effector 25 applied to the object 10 (also simply referred to as a grip force) is zero although the grip force set in the end effector 25 (also referred to as a set grip force) is greater than zero. The set grip force is provided from, for example, the effector controller 4 to the controller 60 in the control system 6. In the holding state determination process, the effector sensor processor 644 determines whether the contact pressure between the end effector 25 and the object 10 is a low contact pressure based on the effector state detection data 55a. The contact pressure between the end effector 25 gripping the object 10 and the object 10 may be the grip force of the end effector 25 applied to the object 10. In other words, the effector sensor processor 644 determines whether the grip force of the end effector 25 applied to the object 10 is a low grip force. The effector sensor processor 644 determines that the contact pressure between the end effector 25 and the object 10 is a low contact pressure (or in other words, the grip force of the end effector 25 applied to the object 10 is a low grip force) when the grip force indicated by the effector state detection data 55a is greater than zero and less than or equal to a threshold.

The effector sensor processor 644 can also perform a second weight determination process of determining the weight of the object 10 held by the end effector 25 based on the effector state detection data 55a. In the second weight determination process, for example, the effector sensor processor 644 determines whether the object weight shows minor overweight based on the effector state detection data 55a. When the effector state detection data 55a indicates that the end effector 25 receives a force greater than or equal to a fourth threshold, the effector sensor processor 644 determines that the object weight shows minor overweight. The fourth threshold is set based on the intended value for the object weight. In the second weight determination process, the effector sensor processor 644 also determines whether the object weight shows major overweight based on the effector state detection data 55a. When the effector state detection data 55a indicates that the end effector 25 receives a force greater than or equal to a fifth threshold, the effector sensor processor 644 determines that the object weight shows major overweight. The fifth threshold is set to a value greater than the fourth threshold based on the intended value for the object weight.

The effector sensor processor 644 outputs determination data 644a that is used for controlling the arm operation and used by the condition determiner 620 in the condition determination process. The effector sensor processor 644 writes the determination data 644a into the storage area 654. The reading processor 630 reads the determination data 644a from the storage area 654 and writes the data into the storage area 669.

The determination data 644a indicates, for example, one of readiness notification data, drop notification data, low contact pressure notification data, minor overweight notification data, major overweight notification data, or error notification data. The readiness notification data, the drop notification data, the low contact pressure notification data, the minor overweight notification data, the major overweight notification data, and the error notification data are respectively indicated by, for example, 01h, 03h, 05h, 07h, 09h, and F0h in hexadecimal. The effector sensor processor 644 outputs, as determination data 644a, one of the readiness notification data, the drop notification data, the low contact pressure notification data, the minor overweight notification data, the major overweight notification data, or the error notification data, depending on the situation. The effector sensor processor 644 repeatedly produces the determination data 644a and stores the data into the storage area 654. The effector sensor processor 644 writes the determination data 644a into the storage area 654 at intervals of, for example, 1 to 10 ms inclusive. When writing a new piece of determination data 644a into the storage area 654, the effector sensor processor 644 updates an old piece of determination data 644a in the storage area 654 to the new piece of determination data 644a.

The drop notification data indicates that the end effector 25 has dropped the object 10. After determining that the end effector 25 has dropped the object 10 as described above, the effector sensor processor 644 outputs the drop notification data.

The low contact pressure notification data indicates that the contact pressure between the end effector 25 and the object 10 is a low contact pressure. After determining that the contact pressure between the end effector 25 and the object 10 is a low contact pressure as described above, the effector sensor processor 644 outputs the low contact pressure notification data.

The minor overweight notification data indicates that the object weight shows minor overweight. After determining that the object weight shows minor overweight as described above, the effector sensor processor 644 outputs the minor overweight notification data.

The major overweight notification data indicates that the object weight shows major overweight. After determining that the object weight shows major overweight as described above, the effector sensor processor 644 outputs the major overweight notification data.

The error notification data indicates that the effector sensor processor 644 has an error. In other words, the error notification data indicates, for example, that the effector sensor processor 644 cannot perform at least one of the holding state determination process or the second weight determination process. The effector sensor processor 644 outputs the error notification data when the effector sensor processor 644 cannot perform at least one of the holding state determination process or the second weight determination process due to its abnormal operation. The effector sensor processor 644 also outputs the error notification data when the effector sensor processor 644 cannot obtain the effector state detection data 55a due to abnormal communication between the communicator 68 in the control system 6 and the communicator 48 in the effector controller 4 and thus cannot perform at least one of the holding state determination process or the second weight determination process.

The readiness notification data indicates that the effector sensor processor 644 is ready. The effector sensor processor 644 being ready refers to, for example, the effector sensor processor 644 being operable and outputting none of the readiness notification data, the drop notification data, the low contact pressure notification data, the minor overweight notification data, the major overweight notification data, and the error notification data.

In the example described above, the holding state determination process of determining the holding state of the end effector 25 for an object 10 is performed by the second sensor processor 644. Note that, however, the holding state determination process may be performed by the effector controller 4, and the second sensor processor 644 may obtain the determination result obtained by the effector controller 4 and stores the determination result into the storage area 654.

Operation Example of Person Detector

The person detector 645 outputs determination data 645a that is used for controlling the arm operation and used by the condition determiner 620 in the condition determination process. The person detector 645 writes the determination data 645a into the storage area 655. The reading processor 630 reads the determination data 645a from the storage area 655 and writes the data into the storage area 669.

The determination data 645a includes, for example, one of readiness notification data, caution notification data, emergency notification data, or error notification data. The person detector 645 outputs, as the determination data 645a, one of the readiness notification data, the caution notification data, the emergency notification data, or the error notification data, depending on the situation. The readiness notification data, the caution notification data, the emergency notification data, and the error notification data are respectively indicated by, for example, 01h, 02h, 04h, and F0h in hexadecimal. The person detector 645 repeatedly produces the determination data 645a and stores the data into the storage area 655. The person detector 645 writes the determination data 645a into the storage area 655 at intervals of, for example, 30 to 100 ms inclusive. When writing a new piece of determination data 645a into the storage area 655, the person detector 645 updates an old piece of determination data 645a in the storage area 655 to the new piece of determination data 645a.

The person detector 645 outputs either the caution notification data or the emergency notification data based on the safety concern raised by the robot 2 for a person in the person detection area AR2. The caution notification data alerts the robot controller 600 that a person is in the person detection area AR2. The emergency notification data indicates that an emergency has occurred when a person is in the person detection area AR2. The person detector 645 outputs the caution notification data when, for example, the robot 2 raises a less serious safety concern for a person in the person detection area AR2. The person detector 645 outputs the caution notification data when, for example, a person in the person detection area AR2 is relatively far from the robot 2. In contrast, the person detector 645 outputs the emergency notification data when the robot 2 raises a major safety concern for a person in the person detection area AR2. The person detector 645 outputs the emergency notification data when, for example, a person in the person detection area AR2 is relatively near the robot 2.

The error notification data indicates that the person detector 645 has an error. In other words, the error notification data indicates, for example, that the person detector 645 cannot perform the person detection process. The person detector 645 outputs the error notification data when the person detector 645 cannot perform the person detection process due to its abnormal operation. The person detector 645 also outputs the error notification data when the person detector 645 cannot obtain the second image data 120 due to abnormal communication between the second camera interface 62 in the control system 6 and the second camera 12 and thus cannot perform the person detection process.

The readiness notification data indicates that the person detector 645 is ready. The person detector 645 being ready refers to, for example, the person detector 645 being operable and outputting none of the caution notification data, the emergency notification data, and the error notification data.

Operation Example of PLC Controller

The PLC controller 646 outputs determination data 646a that is used for controlling the arm operation and used by the condition determiner 620 in the condition determination process. The PLC controller 646 writes the determination data 646a into the storage area 656. The reading processor 630 reads the determination data 646a from the storage area 656 and writes the data into the storage area 669.

The determination data 646a indicates, for example, one of readiness notification data, pause request data, stop request data, or error notification data. The readiness notification data, the pause request data, the stop request data, and the error notification data are respectively indicated by, for example, 01h, 02h, 04h, and F0h in hexadecimal. The PLC controller 646 outputs, as the determination data 646a, one of the readiness notification data, the pause request data, the stop request data, or the error notification data, depending on the situation. The PLC controller 646 repeatedly produces the determination data 646a and writes the data into the storage area 656. The PLC processor 646 writes the determination data 646a into the storage area 656 at intervals of, for example, 50 to 200 ms inclusive. When writing a new piece of determination data 646a into the storage area 656, the PLC controller 646 updates an old piece of determination data 646a in the storage area 656 to the new piece of determination data 646a.

The pause request data is provided from the PLC controller 646 to request the robot controller 600 to pause the arm 20. The stop request data is provided from the PLC controller 646 to request the robot controller 600 to stop the arm 20. The PLC controller 646 outputs the pause request data or requests the stop request data based on, for example, the state data 130 from the PLC 13.

The error notification data indicates that the PLC controller 646 has an error. In other words, the error notification data indicates, for example, that the PLC controller 646 cannot control the PLC 13. The PLC controller 646 outputs the error notification data when the PLC controller 646 cannot control the PLC 13 due to its abnormal operation. The PLC controller 646 also outputs the error notification data when the PLC controller 646 cannot control the PLC 13 through the PLC interface 63 due to abnormal communication between the PLC interface 63 and the PLC 13.

The readiness notification data indicates that the PLC controller 646 is ready. The PLC controller 646 being ready refers to, for example, the PLC controller 646 being operable and outputting none of the pause request data, the stop request data, and the error notification data.

Operation Example of Communication Controller

The communication controller 647 can cause the communicator 68 to transmit, for example, generation target operation data produced by the operation planner 648. The generation target operation data indicates a target operation for the arm 20 generated by the operation planner 648. The generation target operation data includes, for example, a target rotation angle at a specific time for each of the joints 200. After generating a target operation for the arm 20, the operation planner 648 produces generation target operation data indicating the generated target operation and writes the data into the storage area 659. The communication controller 647 reads the generation target operation data from the storage area 659 and causes the communicator 68 to transmit the read generation target operation data. The generation target operation data transmitted from the communicator 68 is input into the arm controller 3. The arm controller 3 controls each of the joints 200 in the arm 20 based on the generation target operation data to cause the rotation angle of each of the joints 200 to be the target rotation angle.

The communication controller 647 also outputs determination data 647a that is used for controlling the arm operation and used by the condition determiner 620 in the condition determination process. The communication controller 647 writes the determination data 647a into the storage area 657. The reading processor 630 reads the determination data 647a from the storage area 657 and writes the data into the storage area 669.

The determination data 647a includes, for example, one of readiness notification data, transmission-in-progress notification data, or error notification data. The readiness notification data, the transmission-in-progress notification data, and the error notification data are respectively indicated by, for example, 01h, 02h, and F0h in hexadecimal. The communication controller 647 outputs, as determination data 647a, one of the readiness notification data, the transmission-in-progress notification data, or the error notification data, depending on the situation. The communication controller 647 repeatedly produces the determination data 647a and stores the data into the storage area 657. The communication controller 646 writes the determination data 647a into the storage area 657 at, for example, intervals shorter than the control cycle of the robot controller 600. The communication controller 647 performs the operation at intervals of, for example, 1 to 2 ms inclusive. When writing a new piece of determination data 647a into the storage area 657, the communication controller 647 updates an old piece of determination data 647a in the storage area 657 to the new piece of determination data 647a.

The transmission-in-progress notification data indicates that the communicator 68 is transmitting the generation target operation data. The communication controller 647 outputs the transmission-in-progress data while causing the communicator 68 to transmit the generation target operation data.

The error notification data indicates that the communication controller 647 has an error. In other words, the error notification data indicates, for example, that the communication controller 647 cannot control the communicator 68. The communication controller 647 outputs the error notification data when the communication controller 647 cannot control the communicator 68 due to its abnormal operation. The communication controller 647 also outputs the error notification data when the communication controller 647 cannot control the communicator 68 due to abnormal communication between the communication controller 647 and the communicator 68.

The readiness notification data indicates that the communication controller 647 is ready. The communication controller 647 being ready refers to, for example, the communication controller 647 being operable and outputting none of the transmission-in-progress notification data and the error notification data.

Operation Example of Operation Planner

The operation planner 648 generates a target operation for the arm 20 to move from one position to another position. The operation planner 648 then writes the generation target operation data indicating the generated target operation, or specifically, the generated target operation for the arm 20 into the storage area 659. The one position is hereafter referred to as a setting start position, and the other position is referred to as a setting end position. The setting start position may be the start point of the target operation for the arm 20. The setting end position may be the end point of the target operation for the arm 20.

The setting start position is set to, for example, the movement start position. The setting end position is set to, for example, the movement end position. For example, when the operation planner 648 generates a target operation for the arm 20 for the first time after the robotic system 1 is activated, the setting start position and the setting end position are respectively set to the movement start position and the movement end position of the hold operation of the arm 20. As described later, the setting start position may be set to a position other than the movement start position. The setting end position may be set to a position other than the movement end position.

In this example, the obstacle may change after the operation planner 648 generates a target operation for the arm 20. In this case, the operation planner 648 may change the target operation for the arm 20 during the operation of the arm 20, as described later. More specifically, the operation planner 648 may regenerate a target operation to be performed by the arm 20 from a specific time in the future during the operation of the arm 20. In this case, the target operation for the arm 20 after the specific time is changed. The specific time may be hereafter referred to as a switch time. In this case, the setting start position may be set to the position of the arm 20 at the switch time (also referred to as a switch-time position).

As described later, the operation controller 610 may cause the arm 20 to stop while moving toward the movement end position. In this case, the operation controller 610 determines the position (also referred to as an intermediate stop position) at which the arm 20 stops while moving toward the movement end position. The operation planner 648 then regenerates a target operation to be performed by the arm 20 from the switch time to the time at which the arm 20 stops at the intermediate stop position. In this case, the setting end position is set to the intermediate stop position.

The operation controller 610 may also cause the arm 20 to resume its movement after stopping at the intermediate stop position. In this case, the setting start position is set to the intermediate stop position. The operation planner 648 generates a target operation for the arm 20 stopped at the intermediate stop position to move to the setting end position.

In one or more embodiments of the present disclosure, the generation of a target operation for the arm 20 includes generation of a target operation to be performed by the arm 20 from a specific time during the operation of the arm 20. Such generation is specifically referred as "regeneration." The generation target operation data indicating the generated target operation is provided to the communicator 68 through the storage area 659. The operation planner 648 can thus generate a new target operation after outputting the generation target operation data. The operation planner 648 can also generate a new target operation in parallel with the operation of the arm 20. Thus, a target operation for the arm 20 can be regenerated while the arm 20 is moving. In other words, the regeneration of a target operation for the arm 20 can change its operation while the arm 20 is moving. This can change the movement of the arm 20 without stopping the arm 20. The regeneration of a target operation for the arm 20 may be hereafter simply referred to as target operation regeneration.

As described above, the setting start position is set to the movement start position, the switch-time position, or the intermediate stop position, depending on the situation. The setting end position is set to the movement end position or the intermediate stop position, depending on the situation. The storage area 668 stores setting start position data indicating the setting start position and setting end position data indicating the setting end position. The operation controller 610 updates the setting start position data in the storage area 668 in response to a change in the setting start position. The operation controller 610 updates the setting end position data in the storage area 668 in response to a change in the setting end position.

In the target operation generation process, the operation planner 648 generates an operation path of the arm 20 from the setting start position to the setting end position. The operation planner 648 generates the operation path of the arm 20 from the setting start position to the setting end position based on, for example, the setting start position data, the setting end position data, the robot data, the object data, and the obstacle data in the storage area 668.

The operation planner 648 generates the operation path to, for example, allow the robot 2 and the object 10 to avoid interfering with an obstacle when the arm 20 moves along the operation path. The operation planner 648 determines, based on the robot data, the obstacle data, and the object data, whether the robot 2 and the object 10 interfere with an obstacle when the arm 20 moves along the operation path.

The generated operation path, or specifically, the operation path generated by the operation planner 648, is represented by, for example, multiple postures of the arm 20. As described above, the posture of the arm 20 determines the position of the arm 20. Thus, the generated operation path may be represented by multiple positions of the arm 20. The generated operation path can be represented by, for example, several tens of multiple postures. The respective postures representing the generated operation path are hereafter referred to as set postures. When the arm 20 moves from the setting start position to the setting end position, the time elapsed after the start of the operation is referred to as an operation elapsed time.

Each of the set postures is defined by the target rotation angles of the multiple joints 200 included in the arm 20. In this example, each of the set postures is defined by the target rotation angles of the six joints 200 in the arm 20. A set posture in focus (or in other words, a set posture to be described) is hereafter referred to as a focused set posture. A joint 200 in focus is referred to as a focused joint 200.

After generating the operation path of the arm 20, the operation planner 648 determines the operation elapsed time corresponding to the target rotation angle of the focused joint 200 in the focused set posture. The operation elapsed time corresponding to the target rotation angle of the focused joint 200 refers to the operation elapsed time at which the focused joint 200 has the target rotation angle. The target rotation angle of the focused joint 200 corresponding to a specific operation elapsed time on the generated operation path refers to the rotation angle of the focused joint 200 at the specific operation elapsed time. The operation planner 648 determines, for each of multiple set postures representing the generated operation path, the operation elapsed time corresponding to the target rotation angle of the focused joint 200 in the set posture. This can generally set the rotation angles and the times corresponding to the rotation angles for the focused joint 200 in the arm 20 operating along the generated operation path. In other words, the general operation of the focused joint 200 on the generated operation path is set.

The storage area 668 stores an upper speed limit and an upper acceleration limit for the arm 20. The storage area 668 stores, for example, the upper rotational speed limit for the joints 200 as the upper speed limit for the arm 20. The rotational speed is, in other words, the angular speed. The storage area 668 stores, for example, the upper rotational acceleration limit for the joints 200 as the upper acceleration limit for the arm 20. The rotational acceleration is, in other words, the angular acceleration. As described later, the operation controller 610 writes the upper speed limit and the upper acceleration limit for the arm 20 into the storage area 668.

The operation planner 648 sets the general operation of the focused joint 200 on the generated operation path to allow the rotational speed and the rotational acceleration of the focused joint 200 to respectively stay within the upper rotational speed limit and the upper rotational acceleration limit. In other words, the operation planner 648 determines the operation elapsed time corresponding to the target rotation angle of the focused joint 200 in each of the set postures to allow the rotational speed and the rotational acceleration of the focused joint 200 to respectively stay within the upper rotational speed limit and the upper rotational acceleration limit. The operation planner 648 determines, for each of the multiple set postures representing the generated operation path, the operation elapsed time corresponding to the target rotation angle of the focused joint 200 in the set posture based on the upper rotational speed limit and the upper rotational acceleration limit in the storage area 668. In other words, the operation planner 648 sets the general operation of the focused joint 200 on the generated operation path based on the upper rotational speed limit and the upper rotational acceleration limit in the storage area 668. In the same or a similar manner, the operation planner 648 sets the general operation for each of the joints 200 in the arm 20 on the generated operation path. For example, the operation planner 648 sets the general operation for each of the joints 200 in the arm 20 on the generated operation path to allow the rotational speed and the rotational acceleration of each of the joints 200 to respectively stay within the upper rotational speed limit and the upper rotational acceleration limit, as well as to allow the arm 20 to move from the setting start position to the setting end position as fast as possible. In this manner, multiple combinations of the operation elapsed time and the target rotation angles are obtained for each of the joints 200 in the arm 20.

The operation planner 648 defines a two-dimensional orthogonal coordinate system (referred to as a specific coordinate system) with the horizontal axis indicating the operation elapsed time and the vertical axis indicating the target rotation angle corresponding to the operation elapsed time. The operation planner 648 plots all combinations of the operation elapsed time and the target rotation angles for the focused joint 200 in the specific coordinate system. This sets multiple points representing changes in the target rotation angle of the focused joint 200 corresponding to the operation elapsed time in the specific coordinate system. Each of the multiple points is referred to as a provisional operation point. The number of provisional operation points set in the specific coordinate system is the same as the number of multiple postures representing the generated operation path. The number of provisional operation points is hereafter denoted by N1 (N1 is an integer greater than or equal to 2).

The operation planner 648 then sets an interpolation curve interpolating the N1 provisional operation points of the focused joint 200 in the specific coordinate system. The interpolation curve may be, for example, a spline curve or any other curve. The interpolation curve may be, for example, a curve of the fifth order or higher, or a curve of the fourth order or lower. The operation planner 648 sets N2 points on the set interpolation curve. Each of the N2 points is referred to as a final operation point. N2 is an integer greater than N1 and is, for example, several thousands. The operation planner 648 sets, for example, several thousands of final operation points on the interpolation curve. The operation elapsed time increases from 0 ms in increments of, for example, 1 ms for the N2 final operation points. With the N2 final operation points set for the focused joint 200, a target rotation angle for the focused joint 200 is set for each of the N2 operation elapsed times. This sets a final target operation for the focused joint 200. Setting the final target operation for each of the joints 200 defines the target operation for the arm 20. In other words, the target operation for the arm 20 is set based on the upper speed limit and the upper acceleration limit for the arm 20. The target operation for the arm 20 varies based on the upper speed limit and the upper acceleration limit for the arm 20.

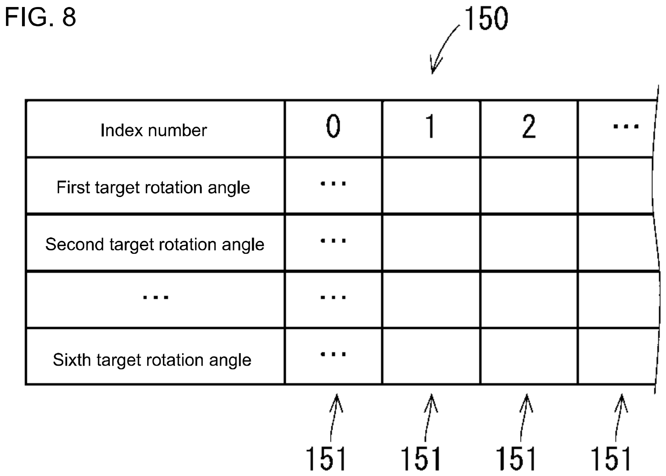

The operation planner 648 generates generation target operation data indicating the generated target operation for the arm 20 based on the N2 final operation points for each of the joints 200. FIG. 8 is a table showing an example of generation target operation data 150.

As illustrated in FIG. 8, the generation target operation data 150 includes, for example, index numbers each indicating the operation elapsed time at a final operation point. The index numbers are integers starting from 0, with an increment of 1 between them. For the operation elapsed times at the N2 final operation points, a smaller operation elapsed time is assigned with a smaller index number. The index number "0" indicates an operation elapsed time of "0 ms." When the index number increases by "1," the operation elapsed time indicated by the index number increases by 1 ms.

In the generation target operation data 150, each of the index numbers is associated with the target rotation angle for each of the joints 200 corresponding to the operation elapsed time indicated by the index number. In FIG. 8, the six joints 200 included in the arm 20 have their respective target rotation angles, or specifically, a first target rotation angle, a second target rotation angle, a third target rotation angle, a fourth target rotation angle, a fifth target rotation angle, and a sixth target rotation angle. A specific index number and the target rotation angles of the respective joints 200 associated with the specific index number may be collectively referred to as arm operation point data. The generation target operation data 150 includes N2 pieces of arm operation point data 151.

After producing the generation target operation data 150, the operation planner 648 writes the produced generation target operation data 150 into the storage area 659. The operation planner 648 also writes a start address of the generation target operation data 150 into the storage area 658. The start address indicates an area in the storage area 659 storing the generation target operation data 150. The operation controller 610 reads the start address of the generation target operation data 150 from the storage area 658 and writes the start address into the storage area 667.

The communication controller 647 reads the start address of the generation target operation data 150 from the storage area 667. In this manner, the communication controller 647 can identify the area in the storage area 659 storing the generation target operation data 150. The communication controller 647 reads the arm operation point data 151 in the generation target operation data 150 from the storage area 659 at intervals of, for example, 1 ms, and causes the communicator 68 to transmit the read data. The communication controller 647 reads the arm operation point data 151 in ascending order from the index number "0." The arm operation point data 151 transmitted from the communicator 68 includes the multiple target rotation angles, each of which is then input into the corresponding one of the multiple joint controllers 3a in the arm controller 3. Each time the target rotation angle is received, each of the joint controllers 3a controls the corresponding joint 200 to cause its rotation angle to be the target rotation angle. In this manner, the rotation angle of each of the joints 200 is controlled to be the target rotation angle at intervals of 1 ms.

In the above example, the operation planner 648 sets the target operation for the arm 20 based on the upper acceleration limit and the upper speed limit for the arm 20. However, the operation planner 648 may set the target operation for the arm 20 based on the upper acceleration limit for the arm 20 alone, without being based on the upper speed limit. For example, when the distance between the setting start position and the setting end position is small, the speed of the arm 20 can stay within the upper speed limit by simply setting the acceleration of the arm 20 to less than or equal to the upper acceleration limit. In other words, the rotational speed of each of the joints 200 can stay within the upper rotational speed limit by simply setting the rotational acceleration of each of the joints 200 to less than or equal to the upper rotational acceleration limit. In this case, the operation planner 648 may set the target operation for the arm 20 based on the upper acceleration limit for the arm 20 alone, without being based on the upper speed limit. For example, the operation planner 648 may set the general operation for each of the joints 200 in the arm 20 on the generated operation path to allow the rotational speed and the rotational acceleration of each of the joints 200 to respectively stay within the upper rotational speed limit and the upper rotational acceleration limit, as well as to allow the arm 20 to move from the setting start position to the setting end position as fast as possible.

The operation planner 648 also outputs determination data 648a that is used for controlling the arm operation and used by the condition determiner 620 in the condition determination process. The operation planner 648 writes the determination data 648a into the storage area 658. The reading processor 630 reads the determination data 648a from the storage area 658 and writes the data into the storage area 669.

The determination data 648a indicates, for example, one of readiness notification data, setting-in-progress notification data, setting success notification data, setting failure notification data, or error notification data. The readiness notification data, the setting-in-progress notification data, the setting success notification data, the setting failure notification data, and the error notification data are respectively indicated by, for example, 01h, 02h, 04h, 09h, and F0h in hexadecimal. The operation planner 648 outputs, as determination data 648a, one of the readiness notification data, the setting-in-progress notification data, the setting success notification data, the setting failure notification data, or the error notification data, depending on the situation. The operation planner 648 repeatedly produces the determination data 648a and stores the data into the storage area 658. When writing a new piece of determination data 648a into the storage area 658, the operation planner 648 updates an old piece of determination data 648a in the storage area 658 to the new piece of determination data 648a.

The setting-in-progress notification data indicates that the operation planner 648 is performing the target operation generation process. The setting success notification data indicates that the generation of a target operation for the arm 20 is successful in the target operation generation process and that the target operation generation process is complete. The setting success notification data may also be referred to as generation success notification data. In other words, the setting success notification data indicates that the generation of a target operation for the arm 20 is complete in the target operation generation process.

The setting failure notification data indicates that the generation of a target operation for the arm 20 has failed in the target operation generation process. The setting failure notification data may also be referred to as generation failure notification data. In other words, the setting failure notification data indicates that the operation planner 648 has not successfully set a target operation for the arm 20 in the target operation generation process. In still other words, the setting failure notification data indicates that the generation of a target operation for the arm 20 is not complete in the target operation generation process. For example, the operation planner 648 outputs the setting failure notification data when the operation planner 648 cannot generate, in the target operation generation process, an operation path that allows the robot 2 and the object 10 to avoid interfering with an obstacle during movement of the arm 20 along the operation path.

The error notification data indicates that the operation planner 648 has an error. In other words, the error notification data indicates, for example, that the operation planner 648 cannot perform the target operation generation process. The operation planner 648 outputs the error notification data when the operation planner 648 cannot perform the target operation process due to, for example, its abnormal operation. The operation planner 648 also outputs the error notification data when, for example, data to be used for target operation generation, such as the setting start position data, is not written in the storage area 668.

The readiness notification data indicates that the operation planner 648 is ready. The operation planner 648 being ready refers to, for example, the operation planner 648 being operable and outputting none of the setting-in-progress notification data, the setting success notification data, the setting failure notification data, and the error notification data. Operation Example of Robot Controller

To perform the hold movement operation and the non-hold movement operation of the arm 20, the reading processor 630 reads the determination data 640a, 641a, 642a, 643a, 644a, 645a, 646a, 647a, and 648a respectively from the storage areas 650, 651, 652, 653, 654, 655, 656, 657, and 658 at intervals of a third predetermined time, and stores the data into the storage area 669.

The condition determiner 620 also reads the latest determination data 640a, 641a, 642a, 643a, 644a, 645a, 646a, 647a, and 648a from the storage area 669 at intervals of the third predetermined time. Each time the condition determiner 620 reads the determination data 640a, 641a, 642a, 643a, 644a, 645a, 646a, 647a, and 648a from the storage 65, the condition determiner 620 determines whether a state condition for the current controller state is satisfied based on the determination data 640a, 641a, 642a, 643a, 644a, 645a, 646a, 647a, and 648a. However, depending on the current controller state, the condition determiner 620 may or may not determine whether a state condition is satisfied as described later. When a state condition is satisfied, the condition determiner 620 notifies the operation controller 610 that the state condition is satisfied. For example, when a maintaining condition for maintaining the current controller state is satisfied, the condition determiner 620 notifies the operation controller 610 that the maintaining condition is satisfied. When a transition condition for a transition to a specific state is satisfied, the condition determiner 620 notifies the operation controller 610 that the transition condition is satisfied.

Note that the condition determiner 620 performs the determination for the controller state based on dictionary data (described later). The dictionary data can link the determination data to be input and a state condition of the robot 2. More specifically, the robot controller 600 can use the dictionary data to derive the control state of the robot 2 from the determination data and control the robot 2 based on the derived control state. Note that the dictionary data may be prestored in the storage 65. The dictionary data may be rewritable based on the environment in which the robot 2 is used. In this case, the state condition to be output can be changed as intended by rewriting the dictionary data. The dictionary data can be rewritten by, for example, downloading new dictionary data to an appropriate area in the storage 65. When the number of control-related processors increases, the dictionary data may be rewritten accordingly to allow more pieces of determination data to be input. For multiple state conditions to be output, the dictionary data may define the order in which the conditions are satisfied. In this case, the operation of the robot 2 can be easily changed based on the environment in which the robot 2 is used.

Each time the condition determiner 620 reads the determination data 640a, 641a, 642a, 643a, 644a, 645a, 646a, 647a, and 648a from the storage 65 at intervals of the third predetermined time, the condition determiner 620 determines, based on the determination data 640a, 641a, 642a, 643a, 644a, 645a, 646a, 647a, and 648a, a combination (also referred to as an upper limit combination) of the upper speed limit and the upper acceleration limit for the arm 20 used in the target operation generation process. The condition determiner 620 then notifies the operation controller 610 of the determined upper limit combination. The upper limit combination used in the target operation generation process and determined by the condition determiner 620 is hereafter referred to as an upper limit combination to be used. The upper speed limit and the upper acceleration limit for the arm 20 may be the upper speed limit and the upper acceleration limit for the robot 2.

The third predetermined time is set to, for example, 5 ms. As described above, in this example, the timer 60b repeatedly measures periods of, for example, 5 ms. The timer 60b outputs a measurement completion notification upon completing each 5 ms measurement. The reading processor 630 and the condition determiner 620 repeatedly receive the measurement completion notification from the timer 60b to perform their processes at intervals of the third predetermined time.

The operation controller 610 transitions from one state to another state based on the determination result obtained by the condition determiner 620. When receiving a notification from the condition determiner 620 that a transition condition for a transition to a specific state is satisfied, the operation controller 610 causes the controller state to transition to the specific state. When receiving a notification from the condition determiner 620 that a maintaining condition is satisfied, the operation controller 610 maintains the current controller state. Whether a state condition is satisfied may be determined by the operation controller 610, depending on the current controller state.

The operation controller 610 also determines whether the upper limit combination to be used provided from the condition determiner 620 matches the upper limit combination in the storage area 668. When the upper limit combination to be used does not match the upper limit combination in the storage area 668, the operation controller 610 updates the upper limit combination in the storage area 668 to the upper limit combination to be used. More specifically, when at least one of the upper speed limit or the upper acceleration limit for the arm 20 provided from the condition determiner 620 does not match the upper speed limit or the upper acceleration limit in the storage area 668, the operation controller 610 updates the upper speed limit and the upper acceleration limit for the arm 20 in the storage area 668 respectively to the upper speed limit and the upper acceleration limit for the arm 20 provided from the condition determiner 620. In contrast, when the upper limit combination to be used provided from the condition determiner 620 matches the upper limit combination in the storage area 668, the operation controller 610 does not update the upper limit combination in the storage area 668. This allows the storage area 668 to store the latest combination of the upper speed limit and the upper acceleration limit for the arm 20. The upper limit combination in the storage area 668 may be hereafter referred to as the current upper limit combination.

Note that the target operation generation process may use the upper acceleration limit for the arm 20 alone, without using the upper speed limit. In this case, the condition determiner 620 may determine the upper acceleration limit for the arm 20 based on the determination data 640a, 641a, 642a, 643a, 644a, 645a, 646a, 647a, and 648a and provide the determined upper acceleration limit to the operation controller 610. When the upper acceleration limit provided from the condition determiner 620 does not match the upper acceleration limit for the arm 20 in the storage area 668, the operation controller 610 updates the upper acceleration limit in the storage area 668 to the upper acceleration limit provided from the condition determiner 620.

The determination data 640a, 641a, 642a, 643a, 644a, 645a, 646a, 647a, and 648a may be hereafter referred to as determination data unless these pieces of data are to be distinguished from one another. The determination data 640a, 641a, 642a, 643a, 644a, 645a, 646a, 647a, and 648a may be respectively referred to as host controller data 640a, identifier data 641a, obstacle detector data 642a, arm sensor processor data 643a, effector sensor processor data 644a, person detector data 645a, PLC controller data 646a, communication controller data 647a, and operation planner data 648a.

Example Multiple States of Operation Controller

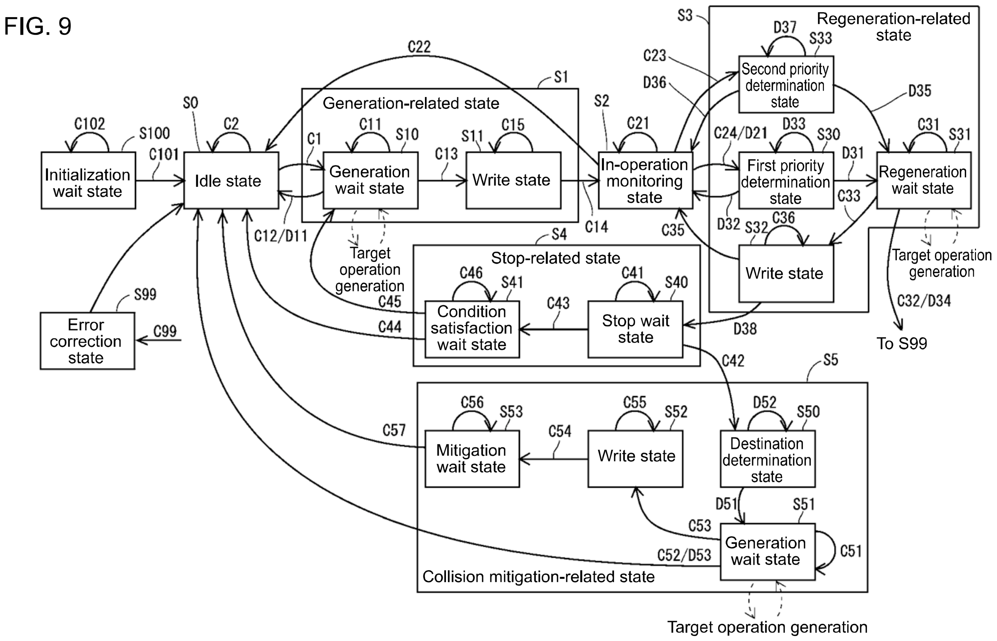

FIG. 9 is a block diagram illustrating example possible multiple states of the operation controller 610 when the operation controller 610 controls the arm operation. For example, as illustrated in FIG. 9, the operation controller 610 can have, as its controller states, an initialization wait state S100, an idle state S0, a generation-related state S1, a regeneration-related state S3, a stop-related state S4, a collision mitigation-related state S5, and an error correction state S99.

In the control system 6, the maintaining conditions and the transition conditions for the controller states include maintaining conditions and transition conditions for which satisfaction or nonsatisfaction is determined by the condition determiner 620, and maintaining conditions and transition conditions for which satisfaction or nonsatisfaction is determined by the operation controller 610. In one or more embodiments of the present disclosure, the maintaining conditions and the transition conditions for which satisfaction or nonsatisfaction is determined by the condition determiner 620 are denoted by reference signs starting with C. The maintaining conditions and the transition conditions for which satisfaction or nonsatisfaction is determined by the operation controller 610 are denoted by reference signs starting with D. The maintaining conditions and the transition conditions for which satisfaction or nonsatisfaction is determined by the condition determiner 620 may be collectively referred to as state conditions C. The maintaining conditions and the transition conditions for which satisfaction or nonsatisfaction is determined by the operation controller 610 may be collectively referred to as state conditions D.

Initialization Wait State

The initialization wait state S100 is a wait state for the initialization of the control system 6 to be complete. After the control system 6 is activated, the controller state is initially the initialization wait state S100. The initialization wait state S100 can transition to the idle state S0 or the error correction state S99.

The state conditions to be determined while the controller state is the initialization wait state S100 include a maintaining condition C102 for maintaining the initialization wait state, a transition condition C101 for causing the controller state to transition to the idle state S0, and a transition condition C99 for causing the controller state to transition to the error correction state S99. The transition condition C99 is common to multiple states of the operation controller 610 other than the error correction state S99, among the possible states of the operation controller 610. The determination is performed as to whether the transition condition C99 is satisfied in each of the states other than the error correction state S99. When the transition condition C99 and another state condition are both satisfied in each of the states other than the error correction state S99, the satisfaction of the transition condition C99 is prioritized, causing the controller state to transition to the error correction state S99. The transition condition C99 may be hereafter referred to as a common transition condition C99.

The maintaining condition C102 is satisfied when the initialization of the control system 6 is in progress. The initialization wait state S100 is thus maintained when the initialization of the control system 6 is in progress. The transition condition C101 is satisfied when the initialization of the control system 6 is complete. The controller state thus transitions from the initialization wait state S100 to the idle state S0 when the initialization of the control system 6 is complete.

The common transition condition C99 is satisfied when an error occurs in the control system 6. Thus, when an error occurs in the control system 6, the operation controller 610 causes the controller state to transition from the initialization wait state S100 to the error correction state S99 independently of whether the maintaining condition 102 or the transition condition C101 is satisfied. In other words, the maintaining condition C102 is satisfied when the initialization of the control system 6 is in progress with no error occurring in the control system 6. In still other words, the transition condition C101 is satisfied when the initialization of the control system 6 is complete with no error occurring in the control system 6.

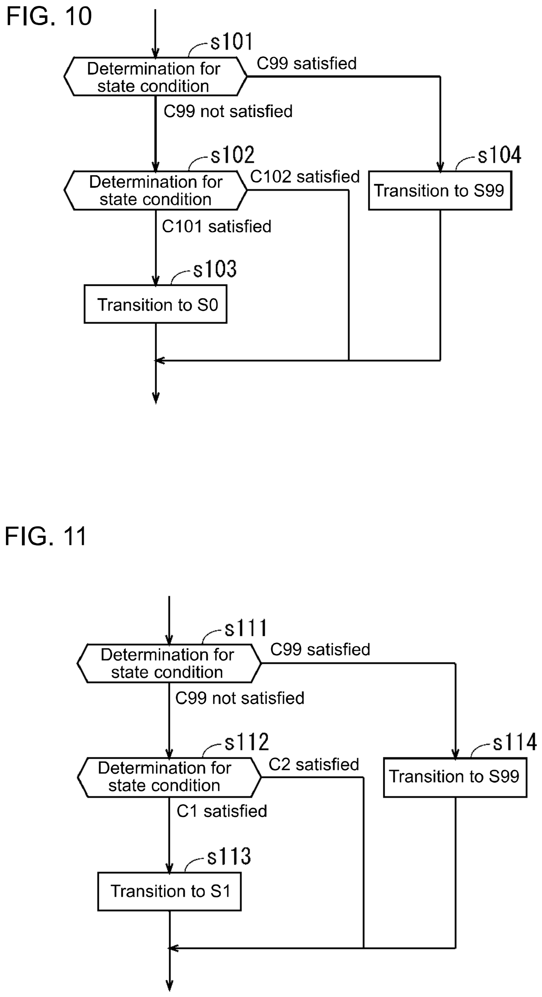

FIG. 10 is a flowchart of an example operation performed by the robot controller 600 while the controller state is the initialization wait state S100. While the controller state is the initialization wait state S100, the determination is first performed as to whether the common transition condition C99 is satisfied in step s101. When the common transition condition C99 is determined to be satisfied, the controller state transitions to the error correction state S99 in step s104. In contrast, when the common transition condition C99 is determined not to be satisfied, the determination is performed as to whether the maintaining condition C102 or the transition condition C101 is satisfied in step s102. When the maintaining condition C102 is determined to be satisfied, the controller state is maintained to be the initialization wait state S100. When the controller state is maintained to be the initialization wait state S100, the robot controller 600 operates based on the flowchart in FIG. 10 again in the subsequent control cycle. In contrast, when the transition condition C103 is determined to be satisfied, the controller state transitions to the idle state S0 in step s103.

Idle State

The idle state S0 is set when the arm 20 is stopped. The idle state S0 is a state in which the determination result obtained by the condition determiner 620 is monitored. The state in which the determination result obtained by the condition determiner 620 is monitored is, in other words, a state in which the output from condition determiner 620 is monitored. In the idle state S0, the operation controller 610 performs no process other than monitoring the determination result obtained by the condition determiner 620. The idle state S0 can transition to the generation-related state S1 or the error correction state S99.

The state conditions to be determined while the controller state is the idle state S0 include a maintaining condition C2 for maintaining the idle state S0, a transition condition C1 for causing the controller state to transition to the generation-related state S1, and the common transition condition C99.

The transition condition C1 is satisfied when the host controller 640 requests the robot controller 600 to start the operation of the arm 20. The controller state thus transitions from the idle state S0 to the generation-related state S1 when the host controller 640 outputs the operation start request data to request the robot controller 600 to start the operation of the arm 20.

The maintaining condition C2 is satisfied when the host controller 640 does not request the robot controller 600 to start the operation of the arm 20. The idle state S0 is thus maintained when the host controller 640 does not request the robot controller 600 to start the operation of the arm 20.

Note that, when the common transition condition C99 is satisfied in response to an error in the control system 6, the operation controller 610 causes the controller state to transition from the idle state S0 to the error correction state S99 independently of whether another condition such as the maintaining condition C2 is satisfied.

FIG. 11 is a flowchart of an example operation performed by the robot controller 600 while the controller state is the idle state S0. After the controller state transitions to the idle state S0, the determination is first performed as to whether the common transition condition C99 is satisfied in step s111. When the common transition condition C99 is determined to be satisfied, the controller state transitions to the error correction state S99 in step s114. In contrast, when the common transition condition C99 is determined not to be satisfied, the determination is performed as to whether the maintaining condition C2 or the transition condition C1 is satisfied in step s112. When the maintaining condition C2 is determined to be satisfied, the controller state is maintained to be the idle state S0. When the controller state is maintained to be the idle state S0, the robot controller 600 operates based on the flowchart in FIG. 11 again in the subsequent control cycle. In contrast, when the transition condition C1 is determined to be satisfied, the controller state transitions to the generation-related state S1 in step s113.

Generation-Related State

The generation-related state S1 is set when the arm 20 is stopped. The generation-related state S1 is a state in which a process for generating a target operation for the arm 20 is performed. In the generation-related state S1, the operation controller 610 instructs the operation planner 648 to perform a target operation for the arm 20 in a stopped state. The operation controller 610 also instructs the communication controller 647 to control the communicator 68 to transmit generation target operation data to the arm controller 3. The generation target operation data indicates the generated target operation for the arm 20. The generation-related state S1 can transition to the in-operation monitoring state S2, the idle state S0, or the error correction state S99.

For example, the generation-related state S1 includes two substates, or specifically, a generation wait state S10 and a write state S11. When the transition condition C1 is satisfied while the controller state is the idle state S0, the controller state transitions from the idle state S0 to the generation wait state S10.

The generation wait state S10 is a wait state for the operation planner 648 to complete the target operation generation. The write state S11 is a state in which predetermined data is written into the storage area 667. The generation wait state S10 can transition to the write state S11, the idle state S0, or the error correction state S99. The write state S11 can transition to the in-operation monitoring state S2 or the error correction state S99.

The storage area 668 stores permissibility data indicating whether the generation of a target operation for the arm 20 is permitted or unpermitted. The permissibility data may be, for example, a flag indicating that the generation is permitted or unpermitted. The robot controller 600 updates the permissibility data in the storage 65 based on multiple pieces of determination data.

The permissibility data indicates, as its initial state, that the generation of a target operation is unpermitted (also simply referred to as unpermitted generation). The operation planner 648 performs the target operation generation when the permissibility data indicates that the generation of a target operation is permitted (also simply referred to as permitted generation). In contrast, when the permissibility data indicates unpermitted generation, the operation planner 648 does not perform the target operation generation. The robot controller 600 can easily instruct the operation planner 648 to perform the target operation generation by updating the permissibility data in the storage 65 to indicate permitted generation based on the multiple pieces of determination data. While the operation planner 648 is performing the target operation generation, the robot controller 600 can also instruct the operation planner 648 to stop performing the target operation generation by updating the permissibility data in the storage 65 to indicate unpermitted generation. Note that the operation planner 648 may include a reader and a calculator. The reader accesses the storage 65 to obtain data to be used to generate a target operation, such as the permissibility data, the movement start position, or the movement end position. The calculator calculates the target operation. The reader can obtain data at regular intervals and instruct the calculator to generate a target operation. More specifically, the reader instructs the calculator to generate a target operation upon obtaining data indicating permitted generation, and causes the calculator to continue generating the target operation unless the data indicating permitted generation is updated or unless the target operation is complete. The reader can also stop the process performed by the calculator upon obtaining data indicating unpermitted generation while the calculator is generating a target operation. Note that the reader may obtain such data from the storage independently of whether the calculator is generating a target operation.

After the controller state transitions from the idle state S0 to the generation wait state S 10, the operation controller 610 in the robot controller 600 updates the permissibility data in the storage area 668 to indicate permitted generation. When the permissibility data in the storage area 668 indicates permitted generation, or in other words, when the operation planner 648 identifies the permissibility data in the storage area 668 indicating permitted generation, the operation planner 648 performs the target operation generation based on the setting start position data, the setting end position data, the robot data, the object data, the obstacle data, and the upper limit combination in the storage area 668. The permissibility data indicating permitted generation may also be referred to as generation instruction data instructing the operation planner 648 to perform the target operation generation. The operation controller 610 outputs and writes the generation instruction data into the storage area 668 to instruct the operation planner 648 to perform the target operation generation.

While the controller state is the generation wait state S 10, the setting start position data indicates the current stop position of the arm 20, and the setting end position data indicates the movement end position of the arm 20. When the controller state transitions to the generation wait state S10 for the first time after the end effector 25 holds an object 10, the setting start position data indicates the movement start position of the hold movement operation. Thus, when the controller state transitions to the generation wait state S10 for the first time after the end effector 25 holds an object 10, the operation planner 648 generates a target operation for the arm 20 to move from the movement start position to the movement end position of the hold movement operation. In contrast, when the controller state transitions to the generation wait state S10 for the first time after the end effector 25 releases an object 10 and places the object 10 on the destination area, the operation planner 648 generates a target operation for the arm 20 to move from the movement start position to the movement end position of the non-hold movement operation. Upon completing the generation of the target operation for the arm 20, the operation planner 648 writes the generation target operation data into the storage area 659 and also writes the start address of the generation target operation data into the storage area 658.

The state conditions to be determined while the controller state is the generation wait state S10 include a maintaining condition C11 for maintaining the generation wait state S10, a transition condition C13 for causing the controller state to transition to the write state S11, transition conditions C12 and D11 for causing the controller state to transition to the idle state S0, and the common transition condition C99. While the controller state is the generation wait state S10, the condition determiner 620 determines whether the maintaining condition C11, the transition condition C12, the transition condition C13, or the common transition condition C99 is satisfied. While the controller state is the generation wait state S10, the operation controller 610 determines whether the transition condition D11 is satisfied.

The maintaining condition C11 is satisfied when the operation planner 648 is performing the target operation generation process. The generation wait state S10 is thus maintained when the operation planner data 648a indicates the setting-in-progress notification data and the target operation generation process is being performed.

The transition condition C13 is satisfied when the target operation generation process is complete upon successful generation of a target operation for the arm 20 in the target operation generation process. For example, the transition condition C13 is satisfied when the operation planner data 648a indicates the setting success notification data and the target operation generation is complete. The transition condition C12 is satisfied when the generation of a target operation for the arm 20 fails in the target operation generation process. For example, the transition condition C12 is satisfied when the operation planner data 648a indicates the setting failure notification data.

The transition condition D11 is satisfied when the implementation time of the target operation generation process, or in other words, the processing time for the target operation generation is overlong. In other words, the transition condition D11 is satisfied when the target operation generation process times out. More specifically, the transition condition D11 is satisfied when the implementation time of the target operation generation process reaches a fourth predetermined time.

The satisfaction of the transition condition D11 is prioritized over the satisfaction of the maintaining condition C 11. When the operation controller 610 determines that the implementation time of the target operation generation process has reached the fourth predetermined time, or in other words, determines that the target operation generation process has timed out while the controller state is the generation wait state S 10, the operation controller 610 causes the controller state to transition from the generation wait state S10 to the idle state S0. The operation controller 610 can measure the fourth predetermined time based on, for example, the measurement completion notification output from the timer 60b that repeatedly measures periods of 5 ms.

For example, the operation controller 610 defines, as the start time of the target operation generation process, the time at which the item of the operation planner data 648a in the storage 65 (in other words, the determination data 648a) switches from the readiness notification data to the setting-in-progress notification data. The operation controller 610 measures, based on the measurement completion notification that is repeatedly output from the timer 60b, the elapsed time from when the item of the operation planner data 648a switches from the readiness notification data to the setting-in-progress notification data. When the operation planner data 648a in the storage 65 does not switch from the setting-in-progress notification data before the measured elapsed time reaches the fourth predetermined time, the operation controller 610 determines that the implementation time of the target operation generation process (in other words, the processing time for the target operation generation) has reached the fourth predetermined time.

Note that, when the common transition condition C99 is satisfied in response to an error in the control system 6 while the controller state is the generation wait state S10, the operation controller 610 causes the controller state to transition from the generation wait state S10 to the error correction state S99 independently of whether another condition such as the maintaining condition C11 is satisfied.

When the transition condition C13 is satisfied in response to the operation planner 648 completing the target operation generation (in other words, successfully performing the target operation generation) while the controller state is the generation wait state S10, the operation controller 610 updates the permissibility data in the storage area 668 to indicate unpermitted generation, and causes the controller state to transition from the generation wait state S10 to the write state S11. When the transition condition C12 or D11 is satisfied, the operation controller 610 updates the permissibility data in the storage area 668 to indicate unpermitted generation, and causes the controller state to transition from the generation wait state S10 to the idle state S0.

The storage area 667 stores transmittability data indicating whether transmission of the generation target operation data is permitted or unpermitted. The transmittability data may be, for example, a flag indicating that the transmission is permitted or unpermitted. The transmittability data indicates, as the initial state, that the transmission of the generation target operation data is unpermitted (also simply referred to as unpermitted transmission). When the transmittability data indicates that the transmission of the generation target operation data 150 is permitted (also simply referred to as permitted transmission), the communication controller 647 causes the communicator 68 to transmit the generation target operation data in the storage area 659. In contrast, when the transmittability data indicates unpermitted transmission, the communication controller 647 does not cause the communicator 68 to transmit the generation target operation data in the storage area 659.

After the operation planner 648 completes the target operation generation and the controller state transitions from the generation wait state S10 to the write state S11, the operation controller 610 reads the start address of the generation target operation data 150 from the storage area 658 and writes the start address into the storage area 667. The operation controller 610 then updates the transmittability data in the storage area 667 to indicate permitted transmission. In this manner, when the operation planner 648 completes the target operation generation, the operation controller 610 updates the transmittability data in the storage area 667 to indicate permitted transmission.

When the transmittability data in the storage area 667 indicates permitted transmission, or in other words, when the communication controller 647 identifies the transmittability data in the storage area 667 indicating permitted transmission, the communication controller 647 causes the communicator 68 to transmit the generation target operation data in the storage area 659. To perform this process, the communication controller 647 reads the generation target operation data from the storage area 659 based on the start address in the storage area 667, and inputs the data into the communicator 68.

The state conditions to be determined while the controller state is the write state S11 include a maintaining condition C15 for maintaining the write state S11, a transition condition C14 for causing the controller state to transition to the in-operation monitoring state S2, and the common transition condition C99.

The transition condition C14 is satisfied when the communicator 68 has started transmitting the generation target operation data 150. The controller state thus transitions from the write state S11 to the in-operation monitoring state S2 when the communicator 68 has started transmitting the generation target operation data 150. In other words, when the arm 20 switches from the stopped state to the operating state, the controller state transitions from the write state S11 to the in-operation monitoring state S2.

The maintaining condition C15 is satisfied when the communicator 68 has not started transmitting the generation target operation data 150. The write state S11 is thus maintained, for example, when the operation controller 610 is reading the start address of the generation target operation data 150 from the storage area 658 and the communicator 68 has not started transmitting the generation target operation data 150.

Note that, when the common transition condition C99 is satisfied in response to an error in the control system 6, the operation controller 610 causes the controller state to transition from the write state S11 to the error correction state S99 independently of whether another condition such as the maintaining condition C15 is satisfied.

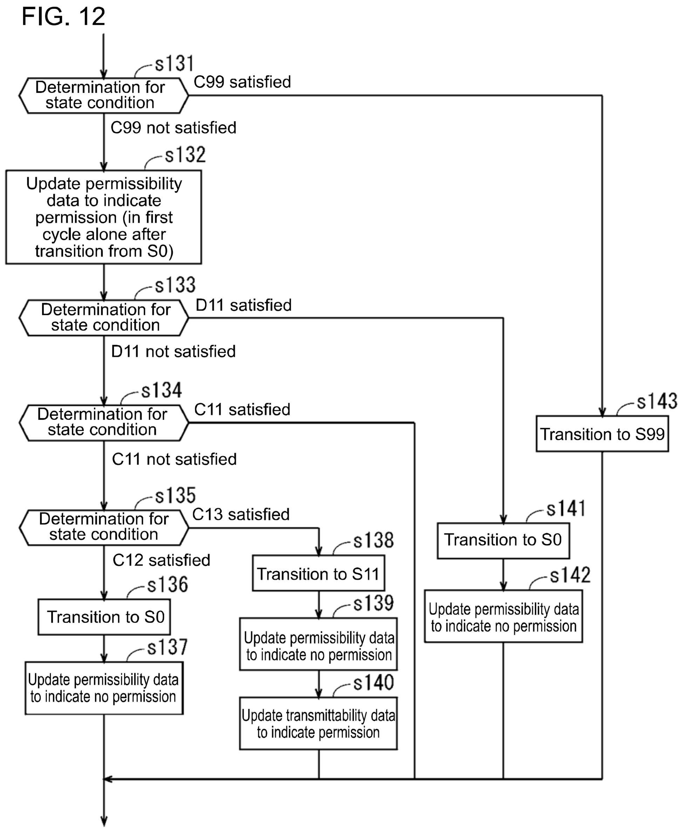

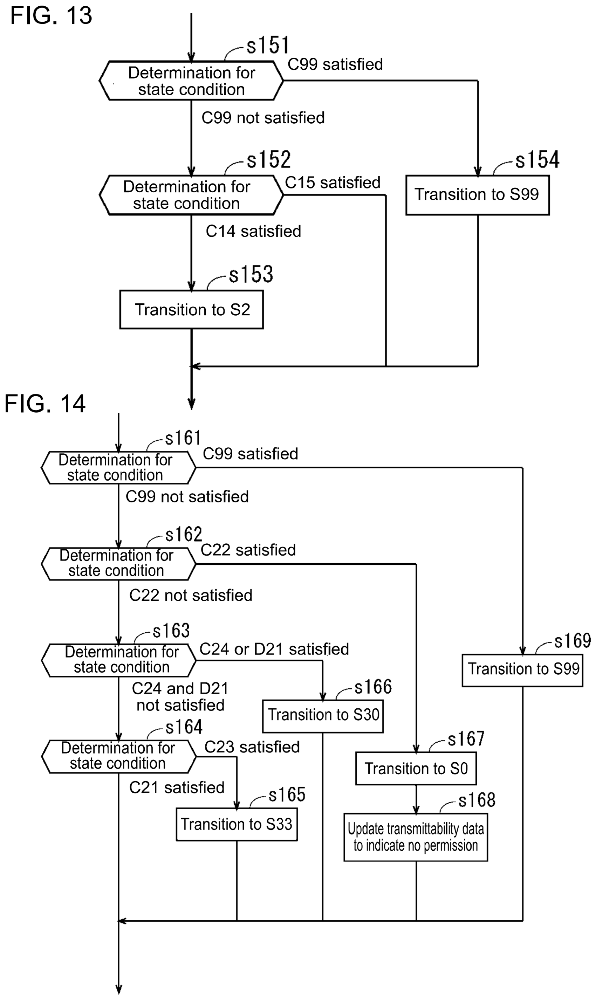

FIGs. 12 and 13 are each a flowchart of an example operation performed by the robot controller 600 while the controller state is the generation-related state S1. After the controller state transitions from the idle state S0 to the generation wait state S10, the determination is performed as to whether the common transition condition C99 is satisfied in step s131. When the common transition condition C99 is determined to be satisfied, the controller state transitions to the error correction state S99 in step s143. In contrast, when the common transition condition C99 is determined not to be satisfied, the permissibility data is updated to indicate permitted generation in step s132. In step s133, the determination is performed as to whether the transition condition D11 is satisfied. When the transition condition D11 is determined to be satisfied, the controller state transitions to the idle state S0 in step s141. Then, in step s142, the permissibility data is updated to indicate unpermitted generation. In contrast, when the transition condition D11 is determined not to be satisfied, the determination is performed as to whether the maintaining condition C11 is satisfied in step s134.

When the maintaining condition C11 is determined to be satisfied, the controller state is maintained to be the generation wait state S10. When the controller state is maintained to be the generation wait state S10, the robot controller 600 operates based on the flowchart in FIG. 12 again in the subsequent control cycle. Note that step s132 is performed in the first cycle alone after the controller state transitions from the idle state S0 to the generation wait state S10. In contrast, when the maintaining condition C11 is determined not to be satisfied, the determination is performed as to whether the transition condition C12 or the transition condition C13 is satisfied in step s135. When the transition condition C12 is determined to be satisfied, the controller state transitions to the idle state S0 in step s136. Then, in step s137, the permissibility data is updated to indicate unpermitted generation.

When the transition condition C13 is determined to be satisfied in step s135, the controller state transitions to the write state S11 in step s138. Then, in step s139, the permissibility data is updated to indicate unpermitted generation. Then, in step s140, the transmittability data is updated to indicate permitted transmission.

After step s140, as shown in FIG. 13, the determination is performed as to whether the common transition condition C99 is satisfied in step s151. When the common transition condition C99 is determined to be satisfied, the controller state transitions to the error correction state S99 in step s154. In contrast, when the common transition condition C99 is determined not to be satisfied, the determination is performed as to whether the maintaining condition C15 or the transition condition C14 is satisfied in step s152. When the maintaining condition C15 is determined to be satisfied, the controller state is maintained to be the write state S11. When the controller state is maintained to be the write state S11, the robot controller 600 operates based on the flowchart in FIG. 13 again in the subsequent control cycle. In contrast, when the transition condition C14 is determined to be satisfied, the controller state transitions to the in-operation monitoring state S2 in step s153.

In-Operation Monitoring State

The in-operation monitoring state S2 is a state in which the determination result obtained by the condition determiner 620 is monitored during the operation of the arm 20. More specifically, the in-operation monitoring state S2 is a state in which the process of monitoring the determination result obtained by the condition determiner 620 is mainly performed while the arm 20 is moving toward the movement end position. The in-operation monitoring state S2 can transition to the regeneration-related state S3, the idle state S0, or the error correction state S99.

The state conditions to be determined while the controller state is the in-operation monitoring state S2 include a maintaining condition C21 for maintaining the in-operation monitoring state S2, transition conditions C23, C24, and D21 for causing the controller state to transition to the regeneration-related state S3, a transition condition C22 for causing the controller state to transition to the idle state S0, and the common transition condition C99. The regeneration-related state S3 includes, as substates, a first priority determination state S30 and a second priority determination state S33 (described later). Each of the transition conditions C24 and D21 is a condition for causing the controller state to transition from the in-operation monitoring state S2 to the first priority determination state S30. The transition condition C23 is a condition for causing the controller state to transition from the in-operation monitoring state S2 to the second priority determination state S33. While the controller state is the in-operation monitoring state S2, the condition determiner 620 determines whether the maintaining condition C21, the transition condition C24, the transition condition C23, the transition condition C22, or the common transition condition C99 is satisfied. While the controller state is the in-operation monitoring state S2, the operation controller 610 determines whether the transition condition D21 is satisfied.

The transition condition C22 is satisfied when the communicator 68 has completed the transmission of the generation target operation data indicating the current target operation (also referred to as current generation target operation data). When the communicator 68 completes the transmission of the current generation target operation data and the arm 20 reaches the movement end position, the operation controller 610 updates the transmittability data in the storage area 667 to indicate unpermitted transmission, and causes the controller state to transition from the in-operation monitoring state S2 to the idle state S0.

The transition condition C24 is satisfied when a factor that causes a change in the operation of the arm 20 without stopping the arm 20 partway through the arm movement operation occurs. The controller state thus transitions from the in-operation monitoring state S2 to the first priority determination state S30 when a factor that causes a change in the operation of the arm 20 without stopping the arm 20 partway before the arm 20 reaches the movement end position occurs. A change in the operation of the arm 20 without stopping the arm 20 partway through the arm movement operation may be hereafter referred to as a change in the operation without involving stopping.

The transition condition C23 is satisfied when a factor that causes the arm 20 to stop partway through the arm movement operation occurs. A factor that causes the arm 20 to stop partway through the arm movement operation is, in other words, a factor that causes a change in the operation of the arm 20 to stop the arm 20 partway through the arm movement operation (in other words, partway before the arm 20 reaches the movement end position). Stopping the arm 20 partway through the arm movement operation may be hereafter referred to as stopping the arm 20 partway.

The controller state transitions from the in-operation monitoring state S2 to the second priority determination state S33 when a factor that causes the arm 20 to stop partway through the arm movement operation, or in other words, partway before the arm 20 reaches the movement end position occurs. For example, an output of pause request data from the host controller 640 is a factor that causes the arm 20 to stop partway, as described later. A collision of the robot 2 is also a factor that causes the arm 20 to stop partway. In other words, an output of collision notification data from the arm sensor processor 643 is a factor that causes the arm 20 to stop partway.

The maintaining condition C21 is satisfied both when the communicator 68 is transmitting the current generation target operation data and when a factor that causes a change in the operation of the arm 20 has not occurred. In other words, the maintaining condition C21 is satisfied both when the communicator 68 is transmitting the current generation target operation data and when neither the transition condition C23 nor the transition condition C24 is satisfied. The in-operation monitoring state S2 is maintained both when the communicator 68 is transmitting the current generation target operation data and when a factor that causes a change in the operation of the arm 20 has not occurred.

The transition condition D21 is satisfied when the upper limit combination to be used determined by the condition determiner 620 does not match the current upper limit combination in the storage area 668. The satisfaction of the transition condition D21 is prioritized over the satisfaction of the maintaining condition C21. When the upper limit combination to be used provided from the condition determiner 620 does not match the current upper limit combination in the storage area 668, the operation controller 610 causes the controller state to transition from the in-operation monitoring state S2 to the first priority determination state S30 in the regeneration-related state S3 although the maintaining condition C21 is satisfied. In other words, the operation controller 610 causes the controller state to transition from the in-operation monitoring state S2 to the first priority determination state S30 in response to a change in the combination of the upper speed limit and the upper acceleration limit of the arm 20.

Note that, when the common transition condition C99 is satisfied in response to an error in the control system 6 while the controller state is the in-operation monitoring state S2, the operation controller 610 causes the controller state to transition from the in-operation monitoring state S2 to the error correction state S99 independently of whether another condition such as the maintaining condition C21 is satisfied.

FIG. 14 is a flowchart of an example operation performed by the robot controller 600 while the controller state is the in-operation monitoring state S2. After the controller state transitions to the in-operation monitoring state S2, the determination is first performed as to whether the common transition condition C99 is satisfied in step s161. When the common transition condition C99 is determined to be satisfied, the controller state transitions to the error correction state S99 in step s169. In contrast, when the common transition condition C99 is determined not to be satisfied, the determination is performed as to whether the transition condition C22 is satisfied in step s162. When the transition condition C22 is determined to be satisfied, the controller state transitions to the idle state S0 in step s167. Then, in step s168, the transmittability data is updated to indicate unpermitted transmission. In contrast, when the transition condition C22 is determined not to be satisfied, the determination is performed as to whether the transition condition C24 is satisfied or whether the transition condition D21 is satisfied in step s163.

When the transition condition C24 is determined to be satisfied, the controller state transitions to the first priority determination state S30 in step s166. When the transition condition D21 is determined to be satisfied, the controller state transitions to the first priority determination state S30 in step s166. In contrast, when neither the transition condition C24 nor the transition condition D21 is determined to be satisfied, the determination is performed as to whether the maintaining condition C21 or the transition condition C23 is satisfied in step s164. When the maintaining condition C21 is determined to be satisfied, the controller state is maintained to be the in-operation monitoring state S2. When the controller state is maintained to be the in-operation monitoring state S2, the robot controller 600 operates based on the flowchart in FIG. 14 again in the subsequent control cycle. In contrast, when the transition condition C23 is determined to be satisfied, the controller state transitions to the second priority determination state S33 in step s165.

Regeneration-Related State

The regeneration-related state S3 is set while the arm 20 is operating. The regeneration-related state S3 is a state in which a process for regenerating a target operation for the arm 20 is performed. In the regeneration-related state S3, the operation controller 610 instructs the operation planner 648 to regenerate a target operation to be performed by the arm 20 from a specific time in the future (in other words, a switch time) during the operation of the arm 20. In the regeneration-related state S3, the operation controller 610 instructs the communication controller 647 to control the communicator 38 to transmit the generation target operation data to the arm controller 3. The generation target operation data indicates the regenerated target operation for the arm 20. The regeneration-related state S3 can transition to the stop-related state S4, the in-operation monitoring state S2, or the error correction state S99.

For example, the regeneration-related state S3 includes four substates, or specifically, the first priority determination state S30, the second priority determination state S33, a regeneration wait state S31, and a write state S32.

Each of the first priority determination state S30 and the second priority determination state S33 is a state in which the determination is performed as to whether the current target operation for the arm 20 is to be prioritized. In each of the first priority determination state S30 and the second priority determination state S33, the operation controller 610 performs a priority determination process of determining whether the current target operation for the arm 20 is to be prioritized. The regeneration wait state S31 is a wait state for the operation planner 648 to complete the regeneration of a target operation for the arm 20. The write state S32 is a state in which predetermined data is written into the storage area 667.

The state conditions to be determined while the controller state is the first priority determination state S30 include a maintaining condition D33 for maintaining the first priority determination state S30, a transition condition D31 for causing the controller state to transition to the regeneration wait state S31, a transition condition D32 for causing the controller state to transition to the in-operation monitoring state S2, and the common transition condition C99. While the controller state is the first priority determination state S30, the condition determiner 620 determines whether the common transition condition C99 is satisfied. While the controller state is the first priority determination state S30, the operation controller 610 determines whether the maintaining condition D33, the transition condition D31, or the transition condition D32 is satisfied.

The maintaining condition D33 is satisfied when the priority determination process is being performed. The transition condition D32 is satisfied when the current target operation is determined to be prioritized in the priority determination process. When determining to prioritize the current target operation in the priority determination process, the operation controller 610 causes the controller state to transition from the first priority determination state S30 to the in-operation monitoring state S2. In this case, the operation of the arm 20 based on the current target operation generated by the operation planner 648 continues without regeneration of a target operation for the arm 20, although the controller state has once transitioned to the regeneration-related state S3.

The transition condition D31 is satisfied when the current target operation is determined not to be prioritized in the priority determination process. When determining not to prioritize the current target operation in the priority determination process, the operation controller 610 causes the controller state to transition from the first priority determination state S30 to the regeneration wait state S31. When the controller state transitions from the first priority determination state S30 to the regeneration wait state S31, a target operation for the arm 20 to move from the switch-time position to the movement end position is regenerated, as described later.

The first priority determination state S30 is, in other words, a state in which the determination is performed as to whether to prioritize the current target operation for the arm 20 or the regeneration of a target operation for the arm 20 to move from the switch-time position to the movement end position. In still other words, the first priority determination state S30 is a state in which the determination is performed as to whether to regenerate a target operation for the arm 20 to move from the switch-time position to the movement end position.

Note that, when the common transition condition C99 is satisfied in response to an error in the control system 6 while the controller state is the first priority determination state S30, the operation controller 610 causes the controller state to transition from the first priority determination state S30 to the error correction state S99 independently of whether another condition such as the maintaining condition D33 is satisfied.

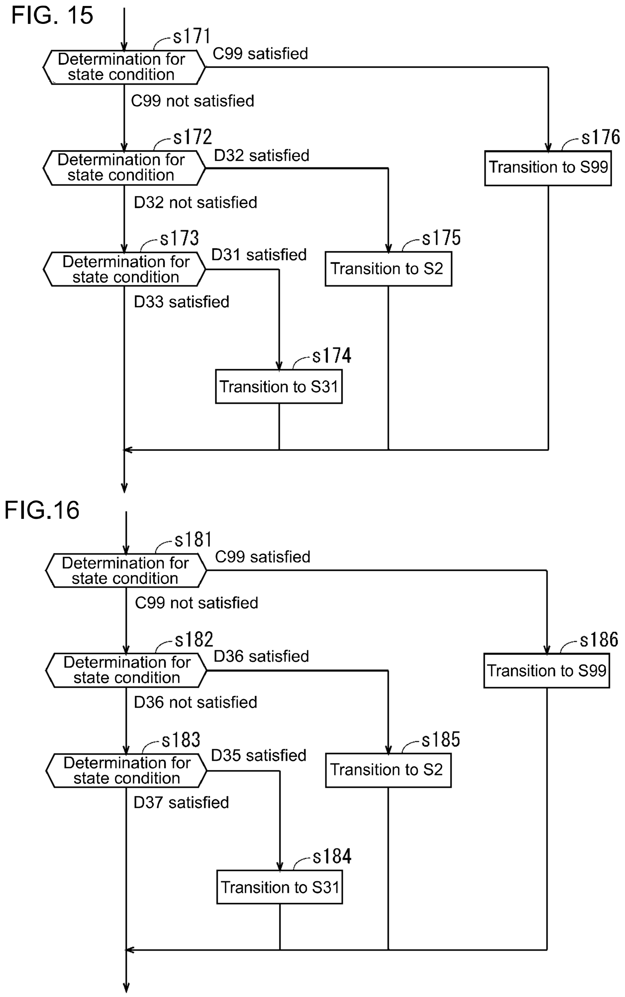

FIG. 15 is a flowchart of an example operation performed by the robot controller 600 while the controller state is the first priority determination state S30. After the controller state transitions to the first priority determination state S30, the determination is first performed as to whether the common transition condition C99 is satisfied in step s171. When the common transition condition C99 is determined to be satisfied, the controller state transitions to the error correction state S99 in step s176. In contrast, when the common transition condition C99 is determined not to be satisfied, the determination is performed as to whether the transition condition D32 is satisfied in step s172. When the transition condition D32 is determined to be satisfied, the controller state transitions to the in-operation monitoring state S2 in step s175. In contrast, when the transition condition D32 is determined not to be satisfied, the determination is performed as to whether the maintaining condition D33 or the transition condition D31 is satisfied in step s173. When the maintaining condition D33 is determined to be satisfied, the controller state is maintained to be the first priority determination state S30. When the controller state is maintained to be the first priority determination state S30, the robot controller 600 operates based on the flowchart in FIG. 15 again in the subsequent control cycle. In contrast, when the transition condition D31 is determined to be satisfied, the controller state transitions to the regeneration wait state S31 in step s174.

The state conditions to be determined while the controller state is the second priority determination state S33 include a maintaining condition D37 for maintaining the second priority determination state S33, a transition condition D35 for causing the controller state to transition to the regeneration wait state S31, a transition condition D36 for causing the controller state to transition to the in-operation monitoring state S2, and the common transition condition C99. While the controller state is the second priority determination state S33, the condition determiner 620 determines whether the common transition condition C99 is satisfied. While the controller state is the second priority determination state S33, the operation controller 610 determines whether the maintaining condition D37, the transition condition D35, or the transition condition D36 is satisfied.

The maintaining condition D37 is satisfied when the priority determination process is being performed. The transition condition D36 is satisfied when the current target operation is determined to be prioritized in the priority determination process. When determining to prioritize the current target operation in the priority determination process, the operation controller 610 causes the controller state to transition from the second priority determination state S33 to the in-operation monitoring state S2. In this case, the operation of the arm 20 based on the current target operation continues without regeneration of a target operation for the arm 20, although the controller state has once transitioned to the regeneration-related state S3.

The transition condition D35 is satisfied when the current target operation is determined not to be prioritized in the priority determination process. When determining not to prioritize the current target operation in the priority determination process, the operation controller 610 causes the controller state to transition from the second priority determination state S33 to the regeneration wait state S31. When the controller state transitions from the second priority determination state to the regeneration wait state S31, a target operation for the arm 20 to move from the switch-time position to the intermediate stop position is regenerated, as described later.

The second priority determination state S33 is, in other words, a state in which the determination is performed as to whether to prioritize the current target operation for the arm 20 or the regeneration of a target operation for the arm 20 to move from the switch-time position to the intermediate stop position. In still other words, the second priority determination state S33 is a state in which the determination is performed as to whether to regenerate a target operation for the arm 20 to move from the switch-time position to the intermediate stop position.

Note that, when the common transition condition C99 is satisfied in response to an error in the control system 6 while the controller state is the second priority determination state S33, the operation controller 610 causes the controller state to transition from the second priority determination state S33 to the error correction state S99 independently of whether another condition such as the maintaining condition D37 is satisfied.

FIG. 16 is a flowchart of an example operation performed by the robot controller 600 while the controller state is the second priority determination state S33. After the controller state transitions to the second priority determination state S33, the determination is first performed as to whether the common transition condition C99 is satisfied in step s181. When the common transition condition C99 is determined to be satisfied, the controller state transitions to the error correction state S99 in step s186. In contrast, when the common transition condition C99 is determined not to be satisfied, the determination is performed as to whether the transition condition D36 is satisfied in step s182. When the transition condition D36 is determined to be satisfied, the controller state transitions to the in-operation monitoring state S2 in step s185. In contrast, when the transition condition D36 is determined not to be satisfied, the determination is performed as to whether the maintaining condition D37 or the transition condition D35 is satisfied in step s183. When the maintaining condition D37 is determined to be satisfied, the controller state is maintained to be the second priority determination state S33.

When the controller state is maintained to be the second priority determination state S33, the robot controller 600 operates based on the flowchart in FIG. 16 again in the subsequent control cycle. In contrast, when the transition condition D35 is determined to be satisfied, the controller state transitions to the regeneration wait state S31 in step s184.

In each of the first priority determination state S30 and the second priority determination state S33, the operation controller 610 determines the switch time.

To change the operation of the arm 20, the controller 60 takes time to regenerate a target operation for the arm 20 with the operation planner 648. The controller 60 thus cannot easily change the operation of the arm 20 immediately after a factor that causes a change in the operation for the arm 20 occurs. In other words, the controller 60 cannot easily switch the operation of the arm 20 immediately after a factor that causes a change in the operation of the arm 20 occurs.

Thus, the operation controller 610 sets the switch time to be later than the time at which the operation planner 648 completes the regeneration of a target operation for the arm 20. The operation controller 610 determines the switch time based on, for example, the processing time taken for the operation planner 648 to perform the target operation generation (also referred to as a target operation generation processing time). More specifically, the operation controller 610 identifies, from the generation target operation data indicating the current target operation (in other words, current generation target operation data), an index number included in the arm operation point data 151 that is currently being read by the communication controller 647 from the storage area 659 (also referred to as a current index number). The communication controller 647 that has read the generation target operation data from the storage area 659 writes the current index number into the storage area 657. The operation controller 610 can identify the current index number by reading the current index number from the storage area 657. The operation controller 610 determines, as the switch time, the operation elapsed time that is the operation elapsed time indicated by the current index number plus a predetermined time based on the target-operation generation processing time. The index number indicating the operation elapsed time determined as the switch time is hereafter referred to as a switch index number, among multiple index numbers included in the current generation target operation data.

After determining the switch time, the operation controller 610 performs the priority determination process. In the priority determination process, the operation controller 610 determines, for example, the amount of rotation of each of the joints 200 from the switch time to the earliest time at which the moving arm 20 can stop. The rotation amount is referred to as a braking rotation amount R1. The braking rotation amount R1 can be approximated by Formula 1 below.

$$R = W2/(2 \cdot Amax) \qquad (1)$$

In Formula 1, W is the rotational speed of the joint 200 at the switch time. In Formula 1, Amax is the upper rotational acceleration limit of the joint 200. Note that a margin may be added to the right side of Formula 1 to express the braking rotation amount R1.

In the priority determination process, the operation controller 610 determines the total amount of rotation (also referred to as a remaining rotation amount) of each of the joints 200 from the switch time to the time at which the arm 20 stops at the movement end position. The operation controller 610 can determine the remaining rotation amount of each of the joints 200 based on the current generation target operation data.

In the priority determination process, the operation controller 610 compares the remaining rotation amount with the braking rotation amount R1 for each of the joints 200. When the remaining rotation amount is smaller than the braking rotation amount R1 for at least one of the six joints 200, the operation controller 610 determines to prioritize the current target operation for the arm 20. In other words, the operation controller 610 determines not to regenerate a target operation to be performed by the arm 20 from the switch time. The operation of the arm 20 based on the current target operation thus continues when the current position of the arm 20 is near the movement end position. In contrast, when the remaining rotation amount is greater than or equal to the braking rotation amount R1 for all the six joints 200, the operation controller 610 determines not to prioritize the current target operation for the arm 20. In other words, the operation controller 610 determines to regenerate a target operation to be performed by the arm 20 from the switch time. A target operation to be performed by the arm 20 from the switch time is thus regenerated when the current position of the arm 20 is relatively far from the movement end position.

In the second priority determination state S33, the operation controller 610 determines the intermediate stop position at which the arm 20 stops. The operation controller 610 may determine the intermediate stop position based on, for example, the above braking rotation amount R1 of each of the joints 200. In this case, the operation controller 610 may determine, as the intermediate stop position, the position of the arm 20 in which each of the joints 200 has rotated by the above braking rotation amount R1 from the target rotation angle at the switch time. The operation controller 610 may instead determine, as the intermediate stop position, the position of the arm 20 in which each of the joints 200 has rotated by the above braking rotation amount R1 multiplied by a predetermined number from the target rotation angle at the switch time. The predetermined number is greater than 1.

When the transition condition D31 is satisfied while the controller state is the first priority determination state S30, the operation controller 610 updates the setting start position data in the storage area 668 to indicate the switch-time position. In this state, the setting end position data in the storage area 668 indicates the movement end position. When the controller state has transitioned to the first priority determination state S30 upon the satisfaction of the transition condition D21 and then transitions to the regeneration wait state S31 upon the satisfaction of the transition condition D31, the operation controller 610 updates the current upper limit combination in the storage area 668 to the upper limit combination to be used provided from the condition determiner 620. The operation controller 610 then causes the controller state to transition from the first priority determination state S30 to the regeneration wait state S31.

When the transition condition D35 is satisfied while the controller state is the second priority determination state S33, the operation controller 610 updates the setting start position data in the storage area 668 to indicate the switch-time position. The operation planner 648 also updates the setting end position data in the storage area 668 to indicate the intermediate stop position determined in the second priority determination state S33. The operation controller 610 then causes the controller state to transition from the second priority determination state S33 to the regeneration wait state S31. Updating the setting end position data in the storage area 668 to indicate the intermediate stop position determined in the second priority determination state S33 is, in other words, writing the stop position data indicating the intermediate stop position into the storage area 668.

When the current target operation is determined not to be prioritized and the controller state transitions to the regeneration wait state S31, the operation controller 610 updates the permissibility data in the storage area 668 to indicate permitted generation to instruct the operation planner 648 to regenerate a target operation to be performed by the arm 20 from the switch time.

When the permissibility data in the storage area 668 indicates permitted generation, the operation planner 648 performs the target operation generation process of regenerating a target operation based on the setting start position data, the setting end position data, the robot data, the object data, the obstacle data, and the upper limit combination in the storage area 668. When the controller state has transitioned from the first priority determination state S30 to the regeneration wait state S31, the setting start position data and the setting end position data in the storage area 668 respectively indicate the switch-time position and the movement end position. The operation planner 648 thus regenerates a target operation for the arm 20 to move from the switch-time position to the movement end position when the controller state transitions from the first priority determination state S30 to the regeneration wait state S31. In contrast, when the controller state has transitioned from the second priority determination state S33 to the regeneration wait state S31, the setting start position data and the setting end position data in the storage area 668 respectively indicate the switch-time position and the intermediate stop position. The operation planner 648 thus regenerates a target operation for the arm 20 to move from the switch-time position to the intermediate stop position when the controller state transitions from the second priority determination state S33 to the regeneration wait state S31.

Upon completing the regeneration of a target operation for the arm 20, the operation planner 648 writes the setting success notification data into the storage area 658. The setting success notification data may also be referred to as regeneration completion data indicating that the regeneration of a target operation for the arm 20 is complete. Upon completing the regeneration of a target operation for the arm 20, the operation planner 648 also writes the generation target operation data (also referred to as regeneration target operation data) indicating the regenerated target operation into the storage area 659. Thus, the current generation target operation data and the regeneration target operation data are stored in the storage area 659. The operation planner 648 also writes the start address of the regeneration target operation data into the storage area 658.

When the controller state transitions from the first priority determination state S30 to the regeneration wait state S31, the operation planner 648 produces the regeneration target operation data indicating a target operation to be performed from the switch-time position to the movement end position. Such regeneration target operation data may be hereafter referred to as first regeneration target operation data. In contrast, when the controller state transitions from the second priority determination state S33 to the regeneration wait state S31, the operation planner 648 produces the regeneration target operation data indicating a target operation to be performed from the switch-time position to the intermediate stop position. Such regeneration target operation data may be hereafter referred to as second regeneration target operation data.

The state conditions to be determined while the controller state is the regeneration wait state S31 include a maintaining condition C31 for maintaining the regeneration wait state S31, a transition condition C33 for causing the controller state to transition to the write state S32, transition conditions C32 and D34 for causing the controller state to transition to the error correction state S99, and the common transition condition C99. While the controller state is the regeneration wait state S31, the condition determiner 620 determines whether the maintaining condition C31, the transition condition C33, the transition condition C32, or the common transition condition C99 is satisfied. While the controller state is the regeneration wait state S31, the operation controller 610 determines whether the transition condition D34 is satisfied.

The maintaining condition C31 is satisfied when the operation planner 648 is performing the target operation generation process. The transition condition C33 is satisfied when the target operation generation process is complete upon successful regeneration of a target operation for the arm 20 in the target operation generation process. The transition condition C32 is satisfied when the regeneration of a target operation for the arm 20 fails in the target operation generation process.

The transition condition D34 is satisfied when the implementation time of the target operation generation process is overlong, in the same manner as or in a similar manner to the transition condition D11. More specifically, the transition condition D34 is satisfied when the implementation time of the target operation generation process reaches a fifth predetermined time. The determination for the satisfaction of the transition condition D34 is performed in the same manner as or in a similar manner to the determination for the satisfaction of the transition condition D11. The satisfaction of the transition condition D34 is prioritized over the satisfaction of the maintaining condition C31. When the operation controller 610 determines that the implementation time of the target operation generation process has reached the fifth predetermined time based on the output from the timer 60b while the controller state is the regeneration wait state S31, the operation controller 610 causes the controller state to transition from the regeneration wait state S31 to the error correction state S99 independently of whether the maintaining condition C31 is satisfied.

Note that, when the common transition condition C99 is satisfied in response to an error in the control system 6 while the controller state is the regeneration wait state S31, the operation controller 610 causes the controller state to transition from the regeneration wait state S31 to the error correction state S99 independently of whether another condition such as the maintaining condition C31 is satisfied.

When the transition condition C33 is satisfied upon successful generation of a target operation with the operation planner 648 while the controller state is the regeneration wait state S31, the operation controller 610 causes the controller state to transition from the regeneration wait state S31 to the write state S32.

When the transition condition C32 or D34 is satisfied while the controller state is the regeneration wait state S31, the operation controller 610 updates the permissibility data in the storage area 668 to indicate unpermitted generation and causes the controller state to transition from the regeneration wait state S31 to the error correction state S99. The operation of the arm 20 based on the current target operation thus stops when the operation planner 648 fails to regenerate a target operation or the target operation generation process times out.

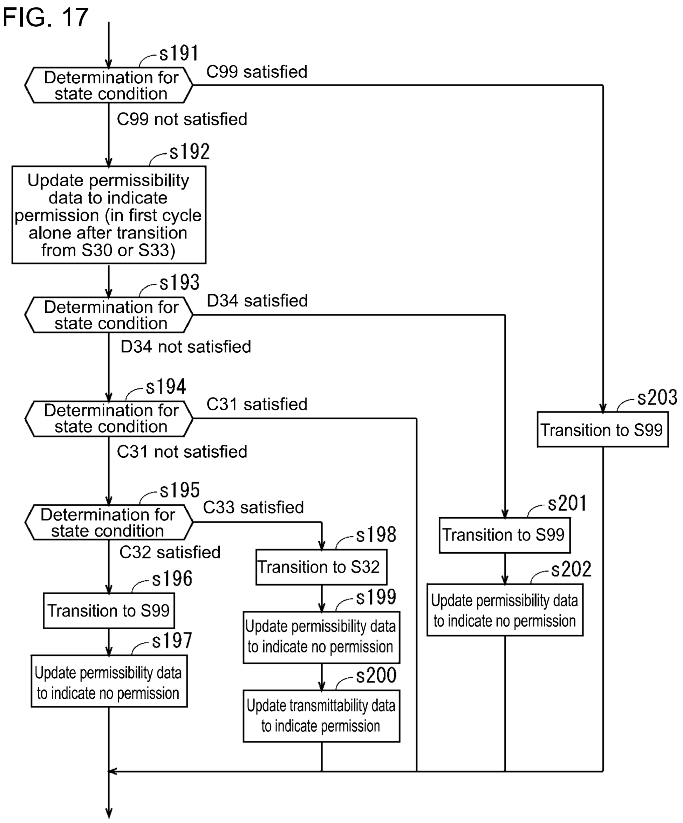

FIG. 17 is a flowchart of an example operation performed by the robot controller 600 while the controller state is the regeneration wait state S31. After the controller state transitions to the regeneration wait state S31, the determination is performed as to whether the common transition condition C99 is satisfied in step s191.

When the common transition condition C99 is determined to be satisfied, the controller state transitions to the error correction state S99 in step s203. In contrast, when the common transition condition C99 is determined not to be satisfied, the permissibility data is updated to indicate permitted generation in step s192. Then, in step s193, the determination is performed as to whether the transition condition D34 is satisfied. When the transition condition D34 is determined to be satisfied, the controller state transitions to the error correction state S99 in step s201. Then, in step s202, the permissibility data is updated to indicate unpermitted generation. In contrast, when the transition condition D34 is determined not to be satisfied, the determination is performed as to whether the maintaining condition C31 is satisfied in step s194.

When the maintaining condition C31 is determined to be satisfied, the controller state is maintained to be the regeneration wait state S31. When the controller state is maintained to be the regeneration wait state S31, the robot controller 600 operates based on the flowchart in FIG. 17 again in the subsequent control cycle. Note that step s192 is performed in the first cycle alone after the controller state transitions to the regeneration wait state S31. In contrast, when the maintaining condition C31 is determined not to be satisfied, the determination is performed as to whether the transition condition C32 or the transition condition C33 is satisfied in step s195. When the transition condition C32 is determined to be satisfied, the controller state transitions to the error correction state S99 in step s196. Then, in step s197, the permissibility data is updated to indicate unpermitted generation.

When the transition condition C33 is determined to be satisfied in step s195, the controller state transitions to the write state S32 in step s198. Then, in step s199, the permissibility data is updated to indicate unpermitted generation. Then, in step s200, the transmittability data is updated to indicate permitted transmission.

After the controller state transitions from the regeneration wait state S31 to the write state S32, the operation controller 610 reads the start address of the regeneration target operation data from the storage area 658, and writes the start address into the storage area 667. Further, the operation controller 610 writes the switch index number into the storage area 667. In the write state S32, the transmittability data in the storage area 667 indicates permitted transmission.

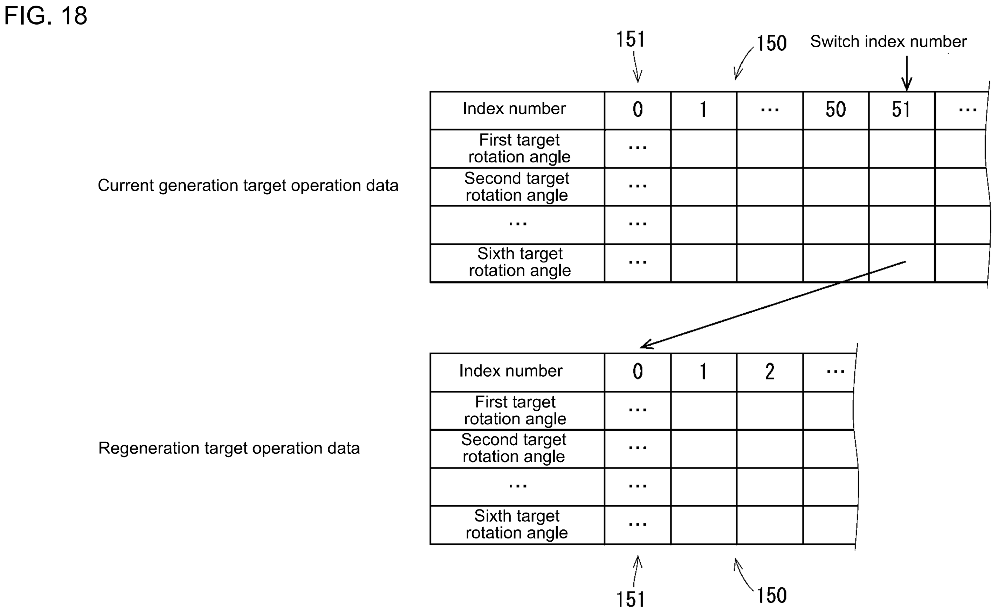

FIG. 18 is a table showing an example operation performed by the communication controller 647 while the controller state is the write state S32. The communication controller 647 refers to the switch index number in the storage area 667 while causing the communicator 68 to transmit the current generation target operation data 150. In the example in FIG. 18, the switch index number is "51." The communication controller 647 reads, from the storage area 659, the arm operation point data 151 including the index number smaller than the switch index number by 1 ("50" in the example in FIG. 18) in the current generation target operation data 150, and ends the reading of the current generation target operation data. The communication controller 647 then starts reading the regeneration target operation data150 from the storage area 659 based on the start address of the regeneration target operation data 150 in the storage area 667 and causes the communicator 68 to transmit the read data. The communicator 68 thus transmits the arm operation point data 151 including the index number "0" in the regeneration target operation data after transmitting the arm operation point data 151 including the index number smaller than the switch index number by 1 in the current generation target operation data.

The state conditions to be determined while the controller state is the write state S32 include a maintaining condition C36 for maintaining the write state S32, a transition condition C35 for causing the controller state to transition to the in-operation monitoring state S2, a transition condition D38 for causing the controller state to transition to the stop-related state S4, and the common transition condition C99.

The transition condition D38 is satisfied when a factor that causes the arm 20 to stop partway occurs. The controller state thus transitions from the write state S36 to the stop-related state S4 when a factor that causes the arm 20 to stop partway through the arm movement operation occurs. More specifically, when a factor that causes the arm 20 to stop partway through the arm movement operation occurs, the controller state may transition from the in-operation monitoring state S2 to the second priority determination state S33, and thereafter to the write state S32 through the regeneration wait state S31. In this case, the operation controller 610 determines that the transition condition D38 is satisfied. When a factor that causes the arm 20 to stop partway occurs, the communicator 68 starts transmitting the second regeneration target operation data indicating a regenerated target operation to be performed from the switch-time position to the intermediate stop position.

The transition condition C35 is satisfied both when a factor that causes the arm 20 to stop partway has not occurred and when the communicator 68 has started transmitting the target operation data. The controller state thus transitions from the write state S36 to the in-operation monitoring state S2 both when a factor that causes the arm 20 to stop partway through the arm movement operation has not occurred and when the communicator 68 has started transmitting the target operation data. When a factor that causes the arm 20 to stop partway has not occurred, the communicator 68 starts transmitting the first regeneration target operation data indicating a regenerated target operation to be performed from the switch-time position to the movement end position. In other words, the transition condition C35 is satisfied when the communicator 68 has started transmitting the first regeneration target operation data. The controller state transitions from the write state S32 to the in-operation monitoring state S2 when the communicator 68 has started transmitting the first regeneration target operation data.

The maintaining condition C36 is satisfied both when a factor that causes the arm 20 to stop partway has not occurred and when the communicator 68 has not started transmitting the regeneration target operation data. The write state S36 is thus maintained both when a factor that causes the arm 20 to stop partway through the arm movement operation has not occurred and when, for example, the operation controller 610 is updating the transmittability data in the storage area 667 to indicate permitted transmission.

Note that, when the common transition condition C99 is satisfied in response to an error in the control system 6 while the controller state is the write state S32, the operation controller 610 causes the controller state to transition from the write state S32 to the error correction state S99 independently of whether another condition such as the maintaining condition C36 is satisfied.

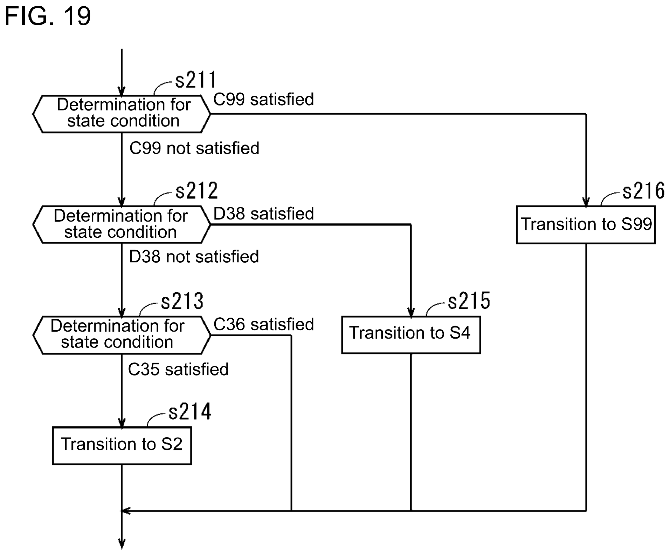

FIG. 19 is a flowchart of an example operation performed by the robot controller 600 while the controller state is the write state S32. After the controller state transitions to the write state S32, the determination is first performed as to whether the common transition condition C99 is satisfied in step s211. When the common transition condition C99 is determined to be satisfied, the controller state transitions to the error correction state S99 in step s216. In contrast, when the common transition condition C99 is determined not to be satisfied, the determination is performed as to whether the transition condition D38 is satisfied in step s212. When the transition condition D38 is determined to be satisfied, the controller state transitions to the stop-related state S4 in step s215. In contrast, when the transition condition D38 is determined not to be satisfied, the determination is performed as to whether the maintaining condition C36 or the transition condition C35 is satisfied in step s213. When the maintaining condition C36 is determined to be satisfied, the controller state is maintained to be the write state S32. When the controller state is maintained to be the write state S32, the robot controller 600 operates based on the flowchart in FIG. 19 again in the subsequent control cycle. In contrast, when the transition condition C35 is determined to be satisfied, the controller state transitions to the in-operation monitoring state S2 in step s214.

When the operation planner 648 regenerates a target operation to be performed by the arm 20 from the switch time during the operation of the arm 20 as described above, the operation planner 648 may cause the speed and the acceleration of the arm 20 at the switch time in the regenerated setting for the target operation for the arm 20 to respectively match the speed and the acceleration of the arm 20 at the switch time in the current setting for the target operation for the arm 20. In other words, the operation planner 648 may regenerate a target operation for the arm 20 to cause the speed and the acceleration of the arm 20 at the switch time in the regenerated target operation to respectively match the speed and the acceleration of the arm 20 at the switch time in the current target operation. In the example in FIG. 18, the operation planner 648 may cause the speed and the acceleration of the arm 20 at the time with the switch index number 0 in the regeneration target operation data to respectively match the speed and the acceleration of the arm 20 at the time with the switch index number 51 in the current generation target operation data.

The operation planner 648 causes the rotational speeds of the first joint 200, the second joint 200, the third joint 200, the fourth joint 200, the fifth joint 200, and the sixth joint 200 at the switch time in the regenerated setting to respectively match the rotational speeds of the first joint 200, the second joint 200, the third joint 200, the fourth joint 200, the fifth joint 200, and the sixth joint 200 at the switch time in the current setting. The operation planner 648 thus causes the speed of the arm 20 at the switch time in the regenerated setting to match the speed of the arm 20 at the switch time in the current setting. The operation planner 648 also causes the rotational accelerations of the first joint 200, the second joint 200, the third joint 200, the fourth joint 200, the fifth joint 200, and the sixth joint 200 at the switch time in the regenerated setting to respectively match the rotational accelerations of the first joint 200, the second joint 200, the third joint 200, the fourth joint 200, the fifth joint 200, and the sixth joint 200 at the switch time in the current setting. The operation planner 648 thus causes the acceleration of the arm 20 at the switch time in the regenerated setting to match the acceleration of the arm 20 at the switch time in the current setting.

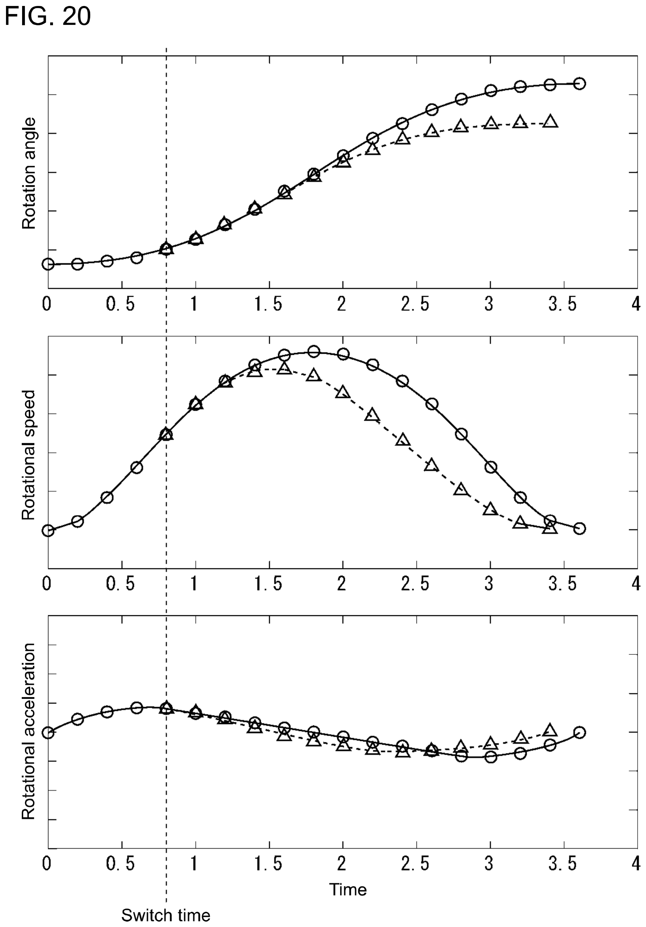

FIG. 20 is a graph showing the rotational speed and the rotational acceleration of a focused joint 200 at the switch time in the regenerated setting respectively matching the rotational speed and the rotational acceleration of the focused joint 200 at the switch time in the current setting. In FIG. 20, the circles indicate the rotation angle, the rotational speed, and the rotational acceleration of the focused joint 200 in the current setting for the target operation for the arm 20. In FIG. 20, the triangles indicate the rotation angle, the rotational speed, and the rotational acceleration of the focused joint 200 in the regenerated setting for the target operation for the arm 20 to be performed from the switch time.

In this manner, the speed and the acceleration of the arm 20 at the switch time in the regenerated setting for the target operation for the arm 20 may respectively match the speed and the acceleration of the arm 20 at the switch time in the current setting for the target operation for the arm 20, allowing a smooth change in the operation of the arm 20. This reduces the likelihood that the speed and the acceleration of the arm 20 change suddenly.
Stop-Related State

The stop-related state S4 is a state to which the regeneration-related state S3 can transition. The stop-related state S4 is a wait state for the arm 20 to stop at the intermediate stop position determined in the second priority determination state S33 in the regeneration-related state S3. The stop-related state S4 can transition to the collision mitigation-related state S5, the idle state S0, the generation-related state S1, or the error correction state S99.

For example, the stop-related state S4 includes two substates, or specifically, a stop wait state S40 and a condition satisfaction wait state S41. The stop wait state S40 is a wait state for the arm 20 to stop at the intermediate stop position. The condition satisfaction wait state S41 is a wait state for a transition condition to be satisfied for causing the controller state to transition from the stop-related state S4 to another state after the arm 20 stops at the intermediate stop position. When the transition condition D38 is satisfied while the controller state is the write state S32, the controller state transitions from the write state S32 to the stop wait state S40.

The state conditions to be determined while the controller state is the stop wait state S40 include a maintaining condition C41 for maintaining the stop-related state S4, a transition condition C43 for causing the controller state to transition to the condition satisfaction wait state S41, a transition condition C42 for causing the controller state to transition to the collision mitigation-related state S5, and the common transition condition C99.

The maintaining condition C41 is satisfied when the communicator 68 is transmitting the second regeneration target operation data. In other words, the maintaining condition C41 is satisfied when the arm 20 is moving toward the intermediate stop position.

The transition condition C42 is satisfied both when a collision of the robot 2 occurs as a factor that causes the arm 20 to stop partway and when the communicator 68 has completed the transmission of the second regeneration target operation data. In other words, the transition condition C42 is satisfied when a collision of the robot 2 occurs as a factor that causes the arm 20 to stop partway and the arm 20 stops at the intermediate stop position. When the transition condition C42 is satisfied, the operation controller 610 updates the transmittability data in the storage area 667 to indicate unpermitted transmission, and causes the controller state to transition from the stop wait state S40 to the collision mitigation-related state S5.

The transition condition C43 is satisfied both when a factor other than a collision of the robot 2 that causes the arm 20 to stop partway occurs and when the communicator 68 has completed the transmission of the second regeneration target operation data. In other words, the transition condition C43 is satisfied when a factor other than a collision of the robot 2 that causes the arm 20 to stop partway occurs and the arm 20 stops at the intermediate stop position. When the transition condition C43 is satisfied, the operation controller 610 updates the transmittability data in the storage area 667 to indicate unpermitted transmission, and causes the controller state to transition from the stop wait state S40 to the condition satisfaction wait state S41.

Note that, when the common transition condition C99 is satisfied in response to an error in the control system 6 while the controller state is the stop wait state S40, the operation controller 610 causes the controller state to transition from the stop wait state S40 to the error correction state S99 independently of whether another condition such as the maintaining condition C41 is satisfied.

The condition satisfaction wait state S41 is a wait state for one of a transition condition C44 or a transition condition C45 to be satisfied. The transition condition C44 is a condition for causing the controller state to transition from the condition satisfaction wait state S46 to the idle state S0. The transition condition C45 is a condition for causing the controller state to transition from the condition satisfaction wait state S46 to the generation wait state S10 in the generation-related state S1.

The state conditions to be determined while the controller state is the condition satisfaction wait state S41 include, in addition to the transition conditions C44 and C45, a maintaining condition C46 for maintaining the condition satisfaction wait condition C41 and the common transition condition C99.

The storage 65 stores priority data 700 (refer to FIG. 18 described later) indicating whether the operation of the robot 2 is to be prioritized or the safety associated with the robot 2 is to be prioritized. While the controller state is the condition satisfaction wait state S41, the condition determiner 21 determines whether the maintaining condition C46, the transition condition C44, or the transition condition C45 is satisfied based on the multiple pieces of determination data and the priority data 700. For example, the priority data 700 is input into the control system 6 through the input unit 67 and stored into the storage area 669.

The transition condition C44 is satisfied when the priority data 700 indicates that the safety associated with the robot 2 is to be prioritized. The controller state transitions from the condition satisfaction wait state S41 to the idle state S0 when the priority data 700 indicates that the safety associated with the robot 2 is to be prioritized. The arm 20 thus does not resume its operation unless the host controller 640 outputs the operation start request data, ensuring the safety associated with the robot 2. When the controller state transitions from the condition satisfaction wait state S41 to the idle state S0 and thereafter to the generation wait state S 10, the operation controller 610 updates the setting start position data to indicate the intermediate stop position (in other words, the current stop position of the arm 20). The operation controller 610 then updates the permissibility data in the storage area 668 to indicate permitted generation to instruct the operation planner 648 to generate a target operation for the arm 20 to move from the intermediate stop position to the movement end position.

The transition condition C45 is satisfied both when the priority data 700 indicates that the operation of the robot 2 is to be prioritized and when a factor that causes the arm 20 to stop partway is removed. The controller state transitions from the condition satisfaction wait state S41 to the generation wait state S10 both when the priority data 700 indicates that the operation of the robot 2 is to be prioritized and when a factor that causes the arm 20 to stop partway is removed. When the transition condition C45 is satisfied, the operation controller 610 updates the setting start position data to indicate the intermediate stop position (in other words, the current stop position of the arm 20). The operation controller 610 then causes the controller state to transition from the condition satisfaction wait state S41 to the generation wait state S10. After the controller state transitions from the condition satisfaction wait state S41 to the generation wait state S10, the operation controller 610 rewrites the permissibility data in the storage area 668 to indicate permitted generation to instruct the operation planner 648 to generate an operation for the arm 20 to move from the intermediate stop position to the movement end position. In this manner, when the transition condition C45 is satisfied, the arm 20 automatically resumes its operation, with a higher priority assigned to the operation of the robot 2.

The maintaining condition C46 is satisfied both when the priority data 700 indicates that the operation of the robot 2 is to be prioritized and when a factor that causes the arm 20 to stop partway occurs. The condition satisfaction wait state S41 is thus maintained both when the priority data 700 indicates that the operation of the robot 2 is to be prioritized and when a factor that causes the arm 20 to stop partway occurs.

Note that, when the common transition condition C99 is satisfied in response to an error in the control system 6 while the controller state is the condition wait state S41, the operation controller 610 causes the controller state to transition from the write state S32 to the error correction state S99 independently of whether another condition such as the maintaining condition C46 is satisfied.

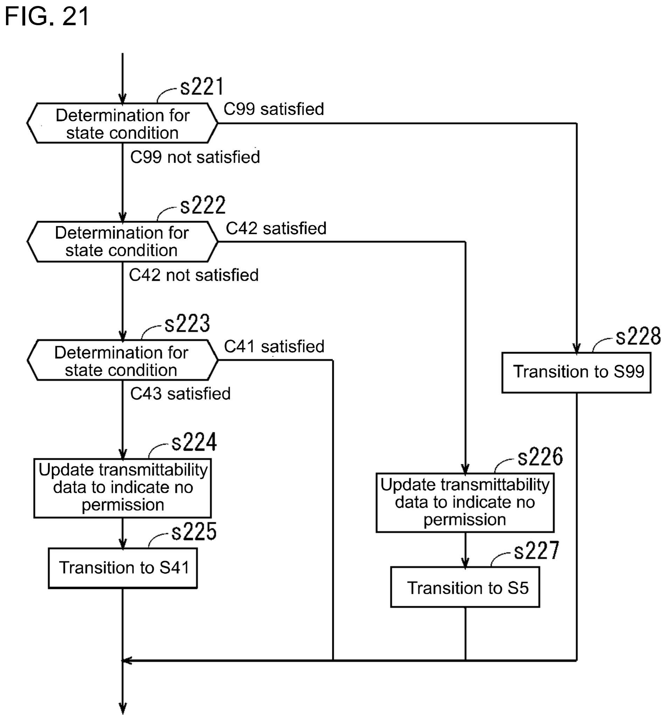

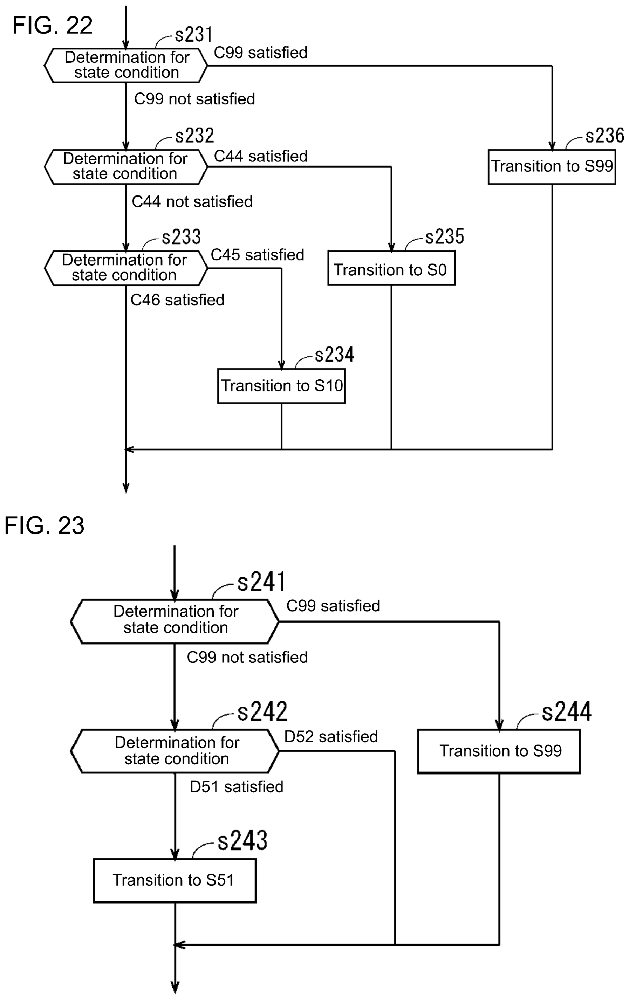

FIGs. 21 and 22 are each a flowchart of an example operation performed by the robot controller 600 while the controller state is the stop-related state S4. After the controller state transitions to the stop wait state S40, the determination is performed as to whether the common transition condition C99 is satisfied in step s221. When the common transition condition C99 is determined to be satisfied, the controller state transitions to the error correction state S99 in step s228. In contrast, when the common transition condition C99 is determined not to be satisfied, the determination is performed as to whether the transition condition C42 is satisfied in step s222. When the transition condition C42 is determined to be satisfied, the transmittability data is updated to indicate unpermitted transmission in step s226. Then, in step s227, the controller state transitions to the collision mitigation-related state S5. In contrast, when the transition condition C42 is determined not to be satisfied, the determination is performed as to whether the maintaining condition C41 or the transition condition C43 is satisfied in step s223.

When the maintaining condition C41 is determined to be satisfied, the controller state is maintained to be the stop wait state S40. When the controller state is maintained to be the stop wait state S40, the robot controller 600 operates based on the flowchart in FIG. 21 again in the subsequent control cycle. In contrast, when the transition condition C43 is determined to be satisfied, the transmittability data is updated to indicate unpermitted transmission in step s224. Then, in step s225, the controller state transitions to the condition satisfaction wait state S41.

After the controller state transitions to the condition satisfaction wait state S41, the determination is performed as to whether the common transition condition C99 is satisfied in step s231, as shown in FIG. 22. When the common transition condition C99 is determined to be satisfied, the controller state transitions to the error correction state S99 in step s236. In contrast, when the common transition condition C99 is determined not to be satisfied, the determination is performed as to whether the transition condition C44 is satisfied in step s232. When the transition condition C44 is determined to be satisfied, the controller state transitions to the idle state S0 in step s235. In contrast, when the transition condition C44 is determined not to be satisfied, the determination is performed as to whether the maintaining condition C46 or the transition condition C45 is satisfied in step s233.

When the maintaining condition C46 is determined to be satisfied, the controller state is maintained to be the condition satisfaction wait state S41. When the controller state is maintained to be the condition satisfaction wait state S41, the robot controller 600 operates based on the flowchart in FIG. 22 again in the subsequent control cycle. In contrast, when the transition condition C45 is determined to be satisfied, the controller state transitions to the generation wait state S10 in step s234.

Collision Mitigation-Related State

The collision mitigation-related state S5 is a state in which a process for mitigating a collision of the robot 2 is performed. In the collision mitigation-related state S5, the operation controller 610 determines the destination of the arm 20 for mitigating a collision of the robot 2 (also referred to as a mitigation destination). In the collision mitigation-related state S5, the operation controller 610 then causes the operation planner 648 to set a target operation for the arm 20 to move from the intermediate stop position to the mitigation destination determined in the second priority determination state S33 in the regeneration-related state S3. In the collision mitigation-related state S5, the operation controller 610 also causes the communication controller 647 to control the communicator 68 to transmit the generation target operation data to the arm controller 3. The generation target operation data indicates the generated target operation for the arm 20 to move from the intermediate stop position to the mitigation destination. This mitigates a collision of the robot 2. The controller 60 controls the arm 20 to cause the robot 2 to perform a collision mitigation process of mitigating a collision of the robot 2. The collision mitigation-related state S5 can transition to, for example, the idle state S0 or the error correction state S99.

For example, the collision mitigation-related state S5 includes four substates, or specifically, a destination determination state S50, a generation wait state S51, a write state S52, and a mitigation wait state S53. The destination determination state S50 is a state in which a mitigation destination determination process of determining the mitigation destination of the arm 20 is performed. When the transition condition C42 is satisfied while the controller state is the stop wait state S40, the controller state transitions from the stop wait state S40 to the destination determination state S50. The mitigation destination is also the stop position of the arm 20.

The state conditions to be determined while the controller state is the destination determination state S50 include a maintaining condition D52 for maintaining the destination determination state S50, a transition condition D51 for causing the controller state to transition to the generation wait state S51, and the common transition condition C99.

The maintaining condition D52 is satisfied when the mitigation destination determination process is being performed. The transition condition D51 is satisfied when the mitigation destination is determined in the mitigation destination determination process and the mitigation destination determination process is complete.

In the mitigation destination determination process, the operation controller 610 estimates, for example, a collision direction and a collision force of the robot 2. For example, the operation controller 610 can calculate, for each of the joints 200, the difference between the detected joint current indicated by the joint state detection data 51a and the estimated joint current indicated by the joint state estimation data 51b corresponding to the detected joint current, and estimate the collision direction and the collision force of the robot 2 based on the calculated difference for the joint 200. Note that the operation controller 610 may use the detected joint torque and the estimated joint torque to estimate the collision direction and the collision force of the robot 2 in the same manner as or in a similar manner to the above, in place of the detected joint current and the estimated joint current. The collision direction and the collision force estimated by the operation controller 610 may be hereafter respectively referred to as an estimated collision direction and an estimated collision force.

In the mitigation destination determination process, the operation controller 610 determines the mitigation destination of the arm 20 based on the estimated collision direction and the estimated collision force. For example, the operation controller 610 may determine the mitigation destination by shifting the entire arm 20 from the intermediate stop position (in other words, the current stop position of the arm 20) determined in the second priority determination state S33 in the estimated collision direction by a predetermined distance corresponding to the estimated collision force.

After the operation controller 610 determines the collision mitigation destination, the mitigation destination determination process ends and the transition condition D51 is satisfied. When the transition condition D51 is satisfied, the operation controller 610 updates the setting end position data in the storage area 668 to indicate the mitigation destination. The operation controller 610 also updates the setting start position data in the storage area 668 to indicate the intermediate stop position (in other words, the current stop position of the arm 20) determined in the second priority determination state S33. After updating the setting start position data and the setting end position data, the operation controller 610 causes the controller state to transition from the destination determination state S50 to the generation wait state S51.

Note that, when the common transition condition C99 is satisfied in response to an error in the control system 6 while the controller state is the destination determination state S50, the operation controller 610 causes the controller state to transition from the destination determination state S50 to the error correction state S99 independently of whether another condition such as the maintaining condition D52 is satisfied.

FIG. 23 is a flowchart of an example operation performed by the robot controller 600 while the controller state is the destination determination state S50. After the controller state transitions to the destination determination state S50, the determination is first performed as to whether the common transition condition C99 is satisfied in step s241. When the common transition condition C99 is determined to be satisfied, the controller state transitions to the error correction state S99 in step s244. In contrast, when the common transition condition C99 is determined not to be satisfied, the determination is performed as to whether the maintaining condition D52 or the transition condition D51 is satisfied in step s242. When the maintaining condition D52 is determined to be satisfied, the controller state is maintained to be the destination determination state S50. When the controller state is maintained to be the destination determination state 50, the robot controller 600 operates based on the flowchart in FIG. 23 again in the subsequent control cycle. In contrast, when the transition condition D51 is determined to be satisfied, the controller state transitions to the generation wait state S51 in step s243.

The generation wait state S51 is a wait state for the operation planner 648 to complete the generation of a target operation for the arm 20 to move from the intermediate stop position to the mitigation destination. After the controller state transitions from the destination determination state S50 to the generation wait state S51, the operation controller 610 updates the permissibility data in the storage area 668 to indicate permitted generation to instruct the operation planner 648 to generate a target operation for the arm 20 to move from the intermediate stop position to the mitigation destination. When the permissibility data in the storage area 668 indicates permitted generation, the operation planner 648 performs the target operation generation based on the setting start position data, the setting end position data, the robot data, the object data, the obstacle data, and the upper limit combination in the storage area 668. While the controller state is the generation wait state S51, the setting start position data indicates the intermediate stop position (the current stop position of the arm 20), and the setting end position data indicates the collision mitigation destination. Upon completing the generation of the target operation for the arm 20 to move from the intermediate stop position to the collision mitigation destination, the operation planner 648 writes the generation target operation data into the storage area 659 and also writes the start address of the generation target operation data into the storage area 658.

In this manner, when a collision of the robot 2 occurs, the robot controller 600 determines the destination of the arm 20 for mitigating the collision of the robot 2 and updates the permissibility data in the storage 65 to indicate permitted generation. When the permissibility data in the storage 65 indicates permitted generation after the arm 20 stops at the intermediate stop position, the operation planner 648 generates a target operation for the arm 20 to move from the intermediate stop position to the mitigation destination.

The state conditions to be determined while the controller state is the generation wait state S51 include, for example, a maintaining condition C51 for maintaining the generation wait state S51, a transition condition C53 for causing the controller state to transition to the write state S52, transition conditions C52 and D53 for causing the controller state to transition to the idle state S0, and the common transition condition C99.

The maintaining condition C51 is satisfied when the operation planner 648 is performing the target operation generation process. The transition condition C53 is satisfied when the target operation generation process is complete upon successful generation of a target operation for the arm 20 in the target operation generation process.

The transition condition C52 is satisfied when the generation of a target operation for the arm 20 fails in the target operation generation process. The transition condition D53 is satisfied when the implementation time of the target operation generation process is overlong, in the same manner as or in a similar manner to the transition conditions D11 and D34. More specifically, the transition condition D53 is satisfied when the implementation time of the target operation generation process reaches a sixth predetermined time. The determination for the satisfaction of the transition condition D53 is performed in the same manner as or in a similar manner to the determination for the satisfaction of the transition condition D11. The satisfaction of the transition condition D53 is prioritized over the satisfaction of the maintaining condition C51. When the operation controller 610 determines that the implementation time of the target operation generation process has reached the sixth predetermined time based on the output from the timer 60b while the controller state is the generation wait state S51, the operation controller 610 causes the controller state to transition from the generation wait state S51 to the idle state S0.

Note that, when the common transition condition C99 is satisfied in response to an error in the control system 6 while the controller state is the generation wait state S51, the operation controller 610 causes the controller state to transition from the generation wait state S51 to the error correction state S99 independently of whether another condition such as the maintaining condition C51 is satisfied.

When the transition condition C53 is satisfied upon successful generation of a target operation with the operation planner 648 while the controller state is the generation wait state S51, the operation controller 610 rewrites the permissibility data in the storage area 668 to indicate unpermitted generation, and causes the controller state to transition from the generation wait state S51 to the write state S52. When the transition condition C52 or D53 is satisfied, the operation controller 610 rewrites the permissibility data in the storage area 668 to indicate unpermitted generation, and causes the controller state to transition from the generation wait state S51 to the idle state S0. The arm 20 thus remains stopped at the intermediate stop position when the operation planner 648 fails to generate a target operation or the target operation generation process times out.

When the controller state transitions from the generation wait state S51 to the idle state S0 and thereafter to the generation wait state S 10, the operation controller 610 updates the setting start position data to indicate the intermediate stop position (in other words, the current stop position of the arm 20). The operation controller 610 then updates the permissibility data in the storage area 668 to indicate permitted generation to instruct the operation planner 648 to generate a target operation for the arm 20 to move from the intermediate stop position to the movement end position.

After the controller state transitions from the generation wait state S51 to the write state S52, the operation controller 610 reads the start address of the generation target operation data from the storage area 658, and writes the start address into the storage area 667. The operation controller 610 then updates the transmittability data in the storage area 667 to indicate permitted transmission.

When the transmittability data in the storage area 667 indicates permitted transmission, the communication controller 647 reads the generation target operation data from the storage area 659 based on the start address in the storage area 667. The communication controller 647 then causes the communicator 68 to transmit the read generation target operation data.

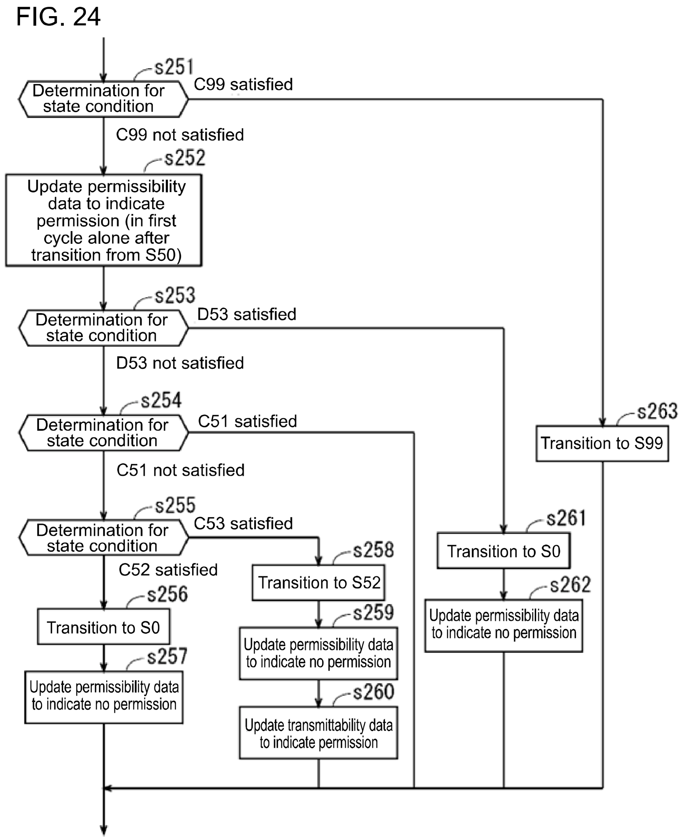

FIG. 24 is a flowchart of an example operation performed by the robot controller 600 while the controller state is the generation wait state S51. After the controller state transitions to the generation wait state S51, the determination is performed as to whether the common transition condition C99 is satisfied in step s251. When the common transition condition C99 is determined to be satisfied, the controller state transitions to the error correction state S99 in step s263. In contrast, when the common transition condition C99 is determined not to be satisfied, the permissibility data is updated to indicate permitted generation in step s252. Then, in step s253, the determination is performed as to whether the transition condition D53 is satisfied. When the transition condition D53 is determined to be satisfied, the controller state transitions to the idle state S0 in step s261. Then, in step s262, the permissibility data is updated to indicate unpermitted generation. In contrast, when the transition condition D53 is determined not to be satisfied, the determination is performed as to whether the maintaining condition C51 is satisfied in step s254.

When the maintaining condition C51 is determined to be satisfied, the controller state is maintained to be the generation wait state S51. When the controller state is maintained to be the generation wait state S51, the robot controller 600 operates based on the flowchart in FIG. 24 again in the subsequent control cycle. Note that step s251 is performed in a first cycle alone after the controller state transitions to the generation wait state S51. In contrast, when the maintaining condition C51 is determined not to be satisfied, the determination is performed as to whether the transition condition C52 or the transition condition C53 is satisfied in step s255. When the transition condition C52 is determined to be satisfied, the controller state transitions to the idle state S0 in step s256. Then, in step s257, the permissibility data is updated to indicate unpermitted generation.

When the transition condition C53 is determined to be satisfied in step s255, the controller state transitions to the write state S52 in step s258. Then, in step s259, the permissibility data is updated to indicate unpermitted generation. Then, in step s260, the transmittability data is updated to indicate permitted transmission.

The state conditions to be determined while the controller state is the write state S52 include a maintaining condition C55 for maintaining the write state S52, a transition condition C54 for causing the controller state to transition to the mitigation wait state S53, and the common transition condition C99.

The transition condition C54 is satisfied when the communicator 68 has started transmitting the generation target operation data 150. The controller state thus transitions from the write state S52 to the mitigation wait state S53 when the communicator 68 has started transmitting the generation target operation data 150. In other words, the controller state transitions from the write state S52 to the mitigation wait state S53 when the arm 20 starts moving toward the mitigation destination.

The maintaining condition C55 is satisfied when the communicator 68 has not started transmitting the generation target operation data 150. The write state S52 is thus maintained when, for example, the operation controller 610 is reading the start address of the generation target operation data 150 from the storage area 658.

Note that, when the common transition condition C99 is satisfied in response to an error in the control system 6, the operation controller 610 causes the controller state to transition from the write state S52 to the error correction state S99 independently of whether another condition such as the maintaining condition C55 is satisfied.

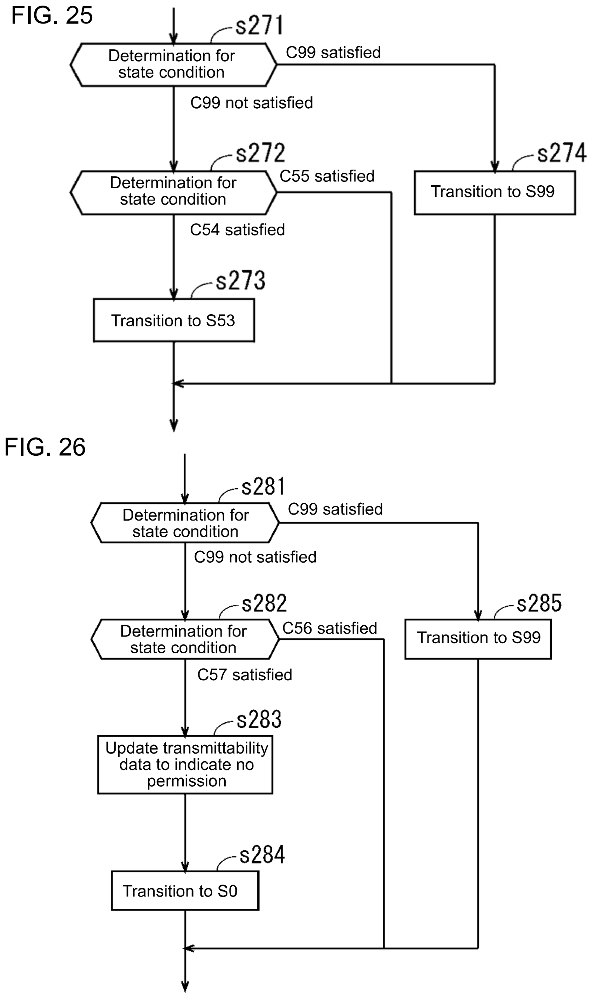

FIG. 25 is a flowchart of an example operation performed by the robot controller 600 while the controller state is the write state S52. After the controller state transitions to the write state S52, the determination is first performed as to whether the common transition condition C99 is satisfied in step s271. When the common transition condition C99 is determined to be satisfied, the controller state transitions to the error correction state S99 in step s274. In contrast, when the common transition condition C99 is determined not to be satisfied, the determination is performed as to whether the maintaining condition C55 or the transition condition C54 is satisfied in step s272. When the maintaining condition C55 is determined to be satisfied, the controller state is maintained to be the write state S52. When the controller state is maintained to be the write state 52, the robot controller 600 operates based on the flowchart in FIG. 25 again in the subsequent control cycle. In contrast, when the transition condition C54 is determined to be satisfied, the controller state transitions to the mitigation wait state S53 in step s273.

The mitigation wait state S53 is a wait state for the movement for mitigating a collision of the robot 2 to be complete. The state conditions to be determined while the controller state is the mitigation wait state S53 include, for example, a maintaining condition C56 for maintaining the mitigation wait state S53, a transition condition C57 for causing the controller state to transition to the idle state S0, and the common transition condition C99.

The maintaining condition C56 is satisfied when the communicator 68 is transmitting the generation target operation data 150. The transition condition C57 is satisfied when the communicator 68 has completed the transmission of the generation target operation data 150. When the communicator 68 completes the transmission of the generation target operation data 150, the arm 20 moves to the mitigation destination, thus completing the mitigation of a collision of the robot 2. When the transition condition C57 is satisfied, the operation controller 610 updates the transmittability data in the storage area 667 to indicate unpermitted transmission. The operation controller 610 then causes the controller state to transition from the mitigation wait state S53 to the idle state S0.

When the controller state transitions from the mitigation wait state S53 to the idle state S0 and thereafter to the generation wait state S 10, the operation controller 610 updates the setting start position data to indicate the mitigation destination (in other words, the current stop position of the arm 20). The operation controller 610 then updates the permissibility data in the storage area 668 to indicate permitted generation to instruct the operation planner 648 to generate a target operation for the arm 20 to move from the mitigation destination to the movement end position.

Note that, when the common transition condition C99 is satisfied in response to an error in the control system 6 while the controller state is the mitigation wait state S53, the operation controller 610 causes the controller state to transition from the mitigation wait state S53 to the error correction state S99 independently of whether another condition such as the maintaining condition C56 is satisfied.

FIG. 26 is a flowchart of an example operation performed by the robot controller 600 while the controller state is the mitigation wait state S53. After the controller state transitions to the mitigation wait state S53, the determination is first performed as to whether the common transition condition C99 is satisfied in step s281. When the common transition condition C99 is determined to be satisfied, the controller state transitions to the error correction state S99 in step s285. In contrast, when the common transition condition C99 is determined not to be satisfied, the determination is performed as to whether the maintaining condition C56 or the transition condition C57 is satisfied in step s282. When the maintaining condition C56 is determined to be satisfied, the controller state is maintained to be the mitigation wait state S53. When the controller state is maintained to be the mitigation wait state S53, the robot controller 600 operates based on the flowchart in FIG. 26 again in the subsequent control cycle. In contrast, when the transition condition C57 is determined to be satisfied, the transmittability data is updated to indicate unpermitted transmission in step s283. Then, in step s284, the controller state transitions to the idle state S0.

Error Correction State

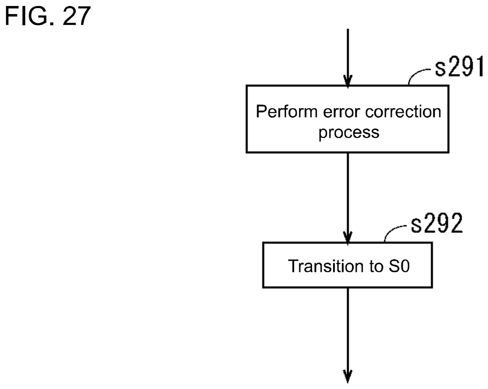

The error correction state S99 is a state in which a process of correcting an error in the control system 6 (also referred to as an error correction process) is performed. FIG. 27 is a flowchart of an example operation performed by the robot controller 600 while the controller state is the error correction state S99. After the controller state transitions to the error correction state S99, the operation controller 610 performs the error correction process in step s291. Then, in step s292, the operation controller 610 causes the controller state to transition from the error correction state S99 to the idle state S0.

In the error correction process, the operation controller 610 may write, for example, system error notification data indicating an error occurring in the control system 6 into the storage 65. In this case, for example, the host controller 640 may identify the system error notification data written in the storage 65 and cause the control system 6 to notify the user of an error occurring in the control system 6. When the control system 6 includes a display, for example, the host controller 640 may cause the display to display information indicating an error. When the control system 6 includes a beeper, the host controller 640 may cause the beeper to sound.

When the arm 20 is in operation at the transition to the error correction state S99, the operation controller 610 may stop the operation of the arm 20 in the error correction process. In this case, the operation controller 610 can stop the operation of the arm 20 by updating the transmittability data in the storage area 667 to indicate unpermitted transmission. When the controller state transitions from the error correction state S99 to the idle state S0 and thereafter to the generation wait state S 10, the operation controller 610 updates the setting start position data to indicate the current stop position of the arm 20. The operation controller 610 then updates the permissibility data in the storage area 668 to indicate permitted generation.

In the operation controller 610 having the multiple states described above, the controller state is initially the initialization wait state S100 after the control system 6 is activated. When the initialization of the control system 6 ends, the controller state transitions to the idle state S0. When the end effector 25 holds an object 10 while the controller state is the idle state S0, the host controller 640 outputs the operation start request data. The controller 640 outputting the operation start request data causes the controller state to transition to the generation-related state S1. When the arm 20 starts the hold movement operation and then reaches the movement end position of the hold movement operation while the controller state is the generation-related state S, the controller state transitions to the idle state S0. When the end effector 25 releases the object 10 while the controller state is the idle state S0, the host controller 640 outputs the operation start request data. The controller 640 outputting the operation start request data causes the controller state to transition to the generation-related state S1. When the arm 20 starts the non-hold movement operation and then reaches the movement end position of the non-hold movement operation while the controller state is the generation-related state S, the controller state transitions to the idle state S0. When the end effector 25 holds the next object 10, the host controller 640 outputs the operation start request data. The controller 640 outputting the operation start request data causes the controller state to transition to the generation-related state S1, starting the hold movement operation of the arm 20 again. The control system 6 thereafter operates in the same manner as or in a similar manner to the above to cause the robot 2 to transfer the objects 10 one by one from the source area to the destination area.

Example State Transition of Operation Controller

Changing Upper Limit Combination

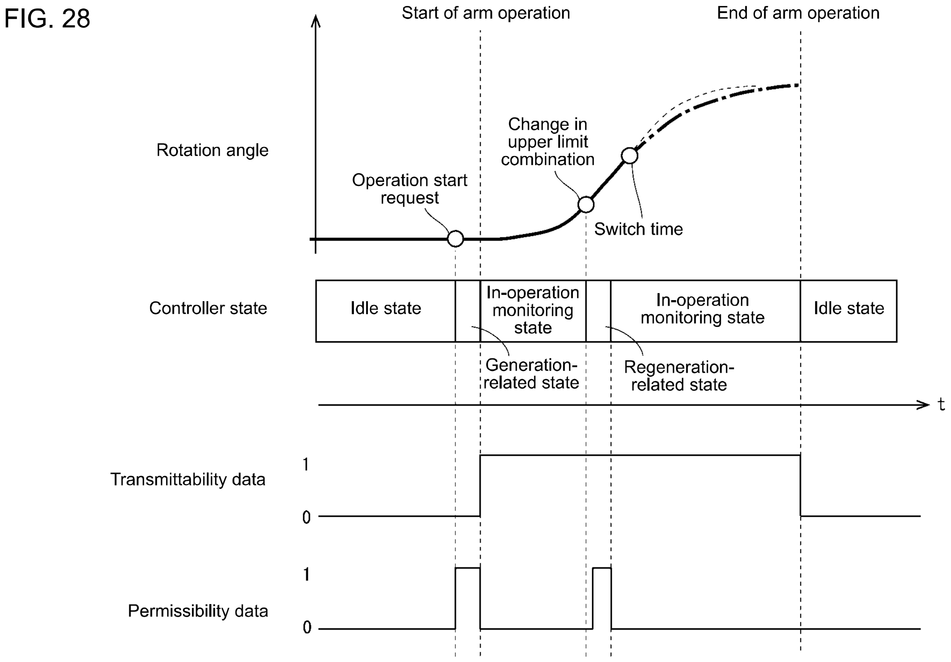

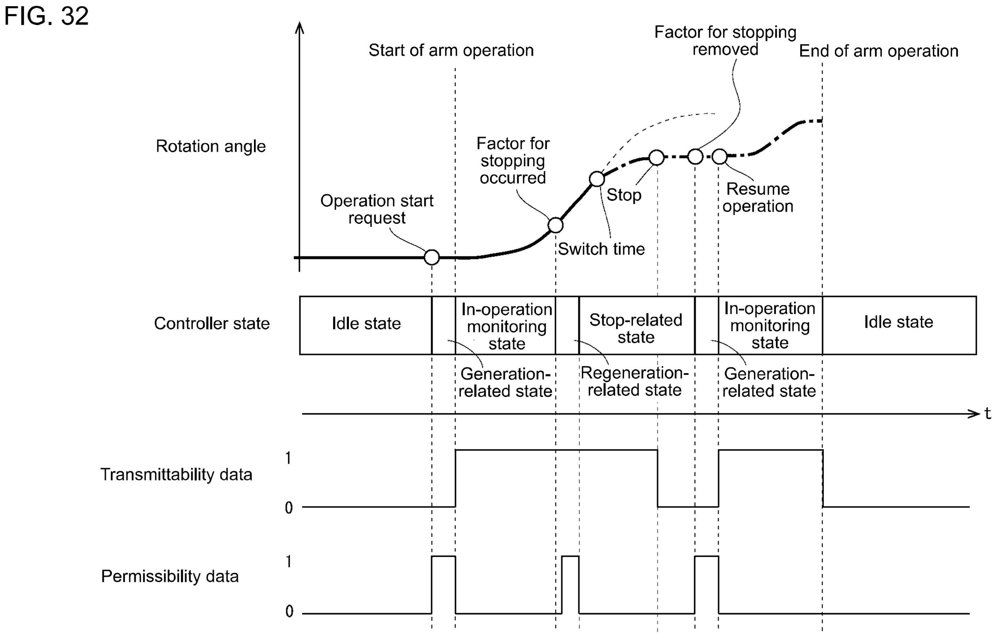

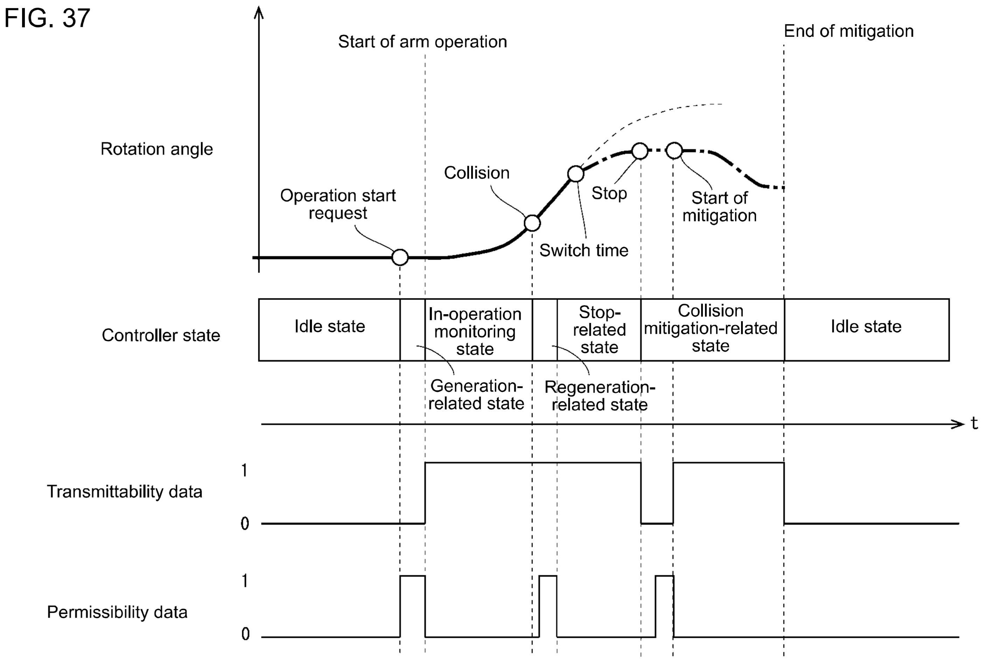

FIG. 28 is a graph showing example changes in the controller state when a target operation for the arm 20 is regenerated with a change in the upper limit combination during the operation of the arm 20. FIG. 28 also shows, in addition to changes in the controller state, changes in the rotation angle of the focused joint 200, changes in the transmittability data in the storage area 667, and changes in the permissibility data in the storage area 668 in an example. In the example in FIG. 28, the transmittability data indicates "1" for permitted transmission and indicates "0" for unpermitted transmission. In the example in FIG. 28, the permissibility data indicates "1" for permitted generation and indicates "0" for unpermitted generation. This also applies to FIGs. 32 and 37 (described later).

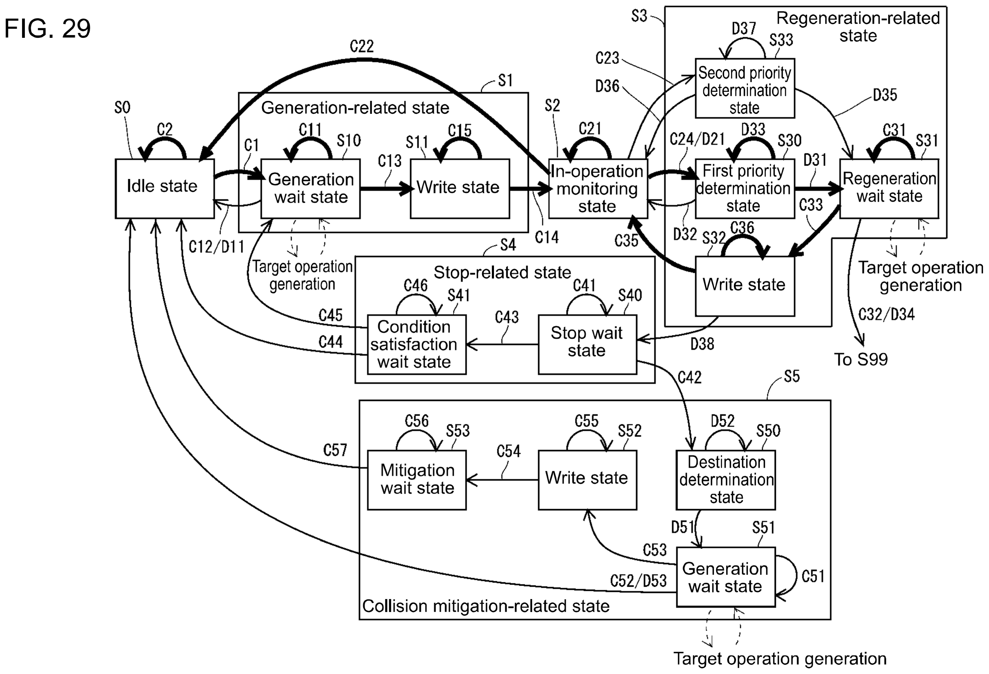

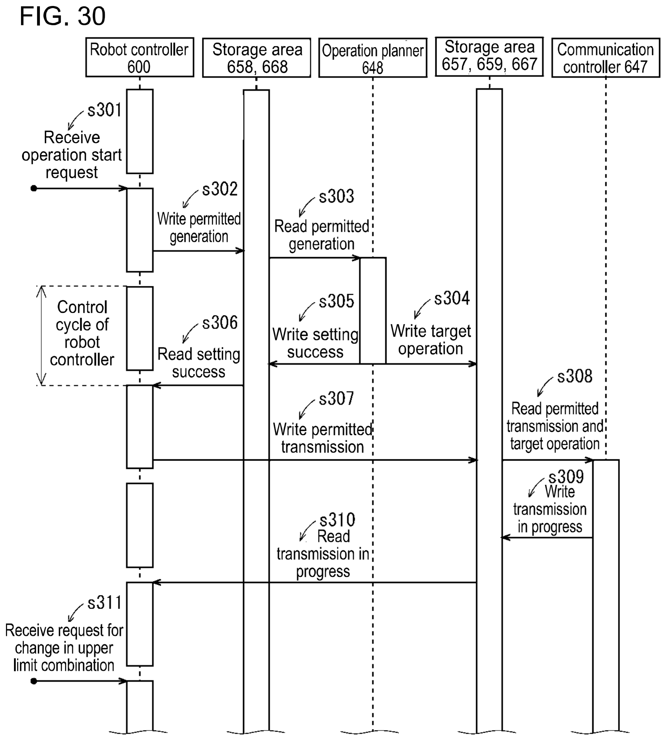

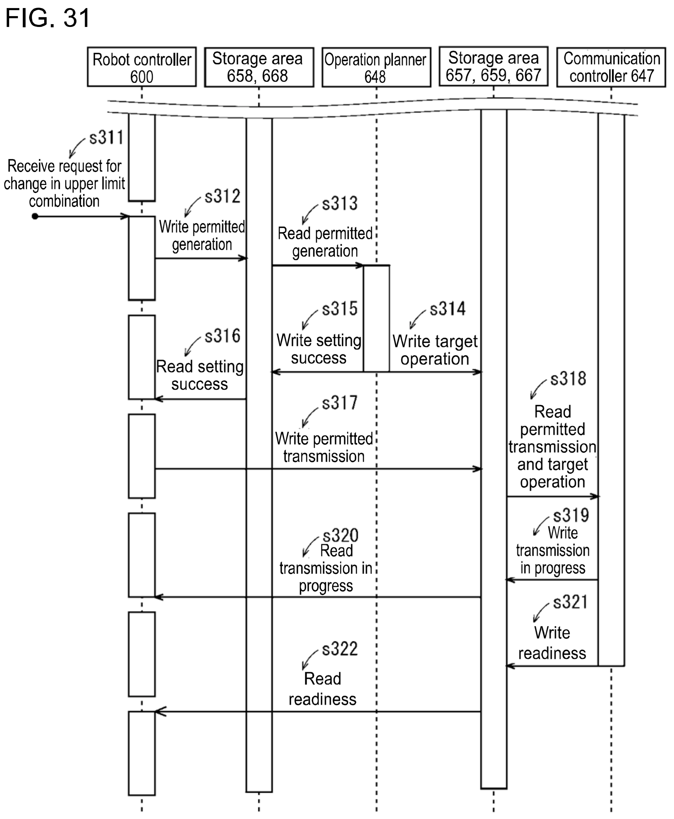

FIG. 29 is a block diagram illustrating example maintaining conditions and transition conditions that are satisfied when the controller state changes as shown in FIG. 28. In FIG. 29, the thick arrows indicate maintaining conditions and transition conditions that are satisfied. FIGs. 30 and 31 are each a schematic diagram illustrating example operations performed by the robot controller 600, the storage area 658, the storage area 668, the operation planner 648, the storage area 657, the storage area 659, the storage area 667, and the communication controller 647 when the controller state changes as shown in FIG. 28.

When the host controller 640 requests the robot controller 600 to start the operation of the arm 20 while the controller state is the idle state S0 (step s301 in FIG. 30), the controller state transitions from the idle state S0 to the generation-related state S1. When the controller state transitions to the generation-related state S1, the robot controller 600 updates the permissibility data in the storage area 668 to indicate permitted generation (step s302). When the operation planner 648 reads the permissibility data indicating permitted generation from the storage area 668 (step s303), the operation planner 648 generates a target operation for the arm 20 and writes the generation target operation data into the storage area 659 (step s304). The operation planner 648 writes, into the storage area 658, the setting success notification data indicating that the target operation generation process is complete upon successful generation of a target operation for the arm 20 in the target operation generation process (step s305). The robot controller 600 reads the setting success notification data from the storage area 658 (step s306), and then updates the transmittability data in the storage area 667 to indicate permitted transmission (step s307). When the communication controller 647 reads the transmittability data indicating permitted transmission from the storage area 667, the communication controller 647 reads the generation target operation data from the storage area 659 (step s308). The communication controller 647 then causes the communicator 68 to transmit the read generation target operation data. When the communicator 68 starts transmitting the generation target operation data, the communication controller 647 writes the transmission-in-progress notification data into the storage area 657 (step s309). The robot controller 600 reads the transmission-in-progress notification data from the storage area 657 (step s310), and then causes the controller state to transition from the generation-related state S1 to the in-operation monitoring state S2.

When the upper limit combination to be used determined by the condition determiner 620 does not match the current upper limit combination in the storage area 668, or in other words, when a request for a change in the upper limit combination is provided while the controller state is the in-operation monitoring state S2 (step s311), the operation controller 610 updates the current upper limit combination to the upper limit combination to be used. This changes the upper limit combination in the storage area 668. When the current upper limit combination is changed (the transition condition D21 is satisfied), the controller state transitions from the in-operation monitoring state S2 to the regeneration-related state S3.

When the operation controller 610 determines not to prioritize the current target operation (the transition condition D31 is satisfied) while the controller state is the regeneration-related state S3, the robot controller 600 updates the permissibility data in the storage area 668 to indicate permitted generation (step s312 in FIG. 31). When the operation planner 648 reads the permissibility data indicating permitted generation from the storage area 668 (step s313), the operation planner 648 regenerates a target operation to be performed by the arm 20 from the switch time to the time at which the arm 20 reaches the movement end position based on the changed upper limit combination in the storage area 668. The operation planner 648 then writes the first regeneration target operation data into the storage area 659 (step s314). The operation planner 648 also writes the setting success notification data into the storage area 658 (step s315). The robot controller 600 reads the setting success notification data from the storage area 658 (step s316), and then updates the transmittability data in the storage area 667 to indicate permitted transmission (step s317). When the communication controller 647 reads the transmittability data indicating permitted transmission from the storage area 667, the communication controller 647 reads the first regeneration target operation data from the storage area 659 (step s318). The communication controller 647 then causes the communicator 68 to transmit the read first regeneration target operation data. When the communicator 68 starts transmitting the first regeneration target operation data, the communication controller 647 writes the transmission-in-progress notification data into the storage area 657 (step s319). The robot controller 600 reads the transmission-in-progress notification data from the storage area 657 (step s320), and then causes the controller state to transition from the regeneration-related state S3 to the in-operation monitoring state S2. When the communicator 68 ends the transmission of the first regeneration target operation data, the communication controller 647 writes the readiness notification data into the storage area 657 (step s321). The robot controller 600 then reads the readiness notification data from the storage area 657 (step s322), and causes the controller state to transition to the idle state S0.

When the switch time occurs while the controller state is the in-operation monitoring state S2, the generated target operation for the arm 20 switches to the regenerated target operation. After the switching, the arm 20 moves to the movement end position and completes the arm movement operation, causing the controller state to transition from the in-operation monitoring state S2 to the idle state S0. In FIG. 28, the thick dot-dash line indicates changes in the rotation angle of the focused joint 200 when the operation of the arm 20 is switched at the switch time. The thin dotted line indicates changes in the rotation angle of the focused joint 200 when the operation of the arm 20 is not switched at the switch time. FIGs. 32 and 37 described later show the dot-dash lines and the dotted lines in the same or a similar manner.

Arm Automatically Resuming Operation After Stopping

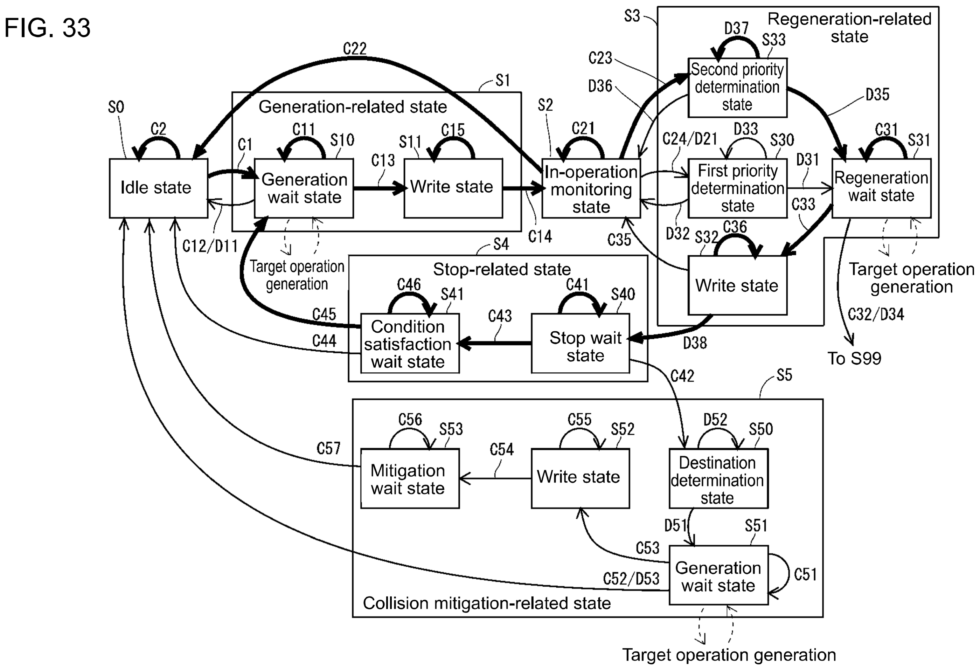

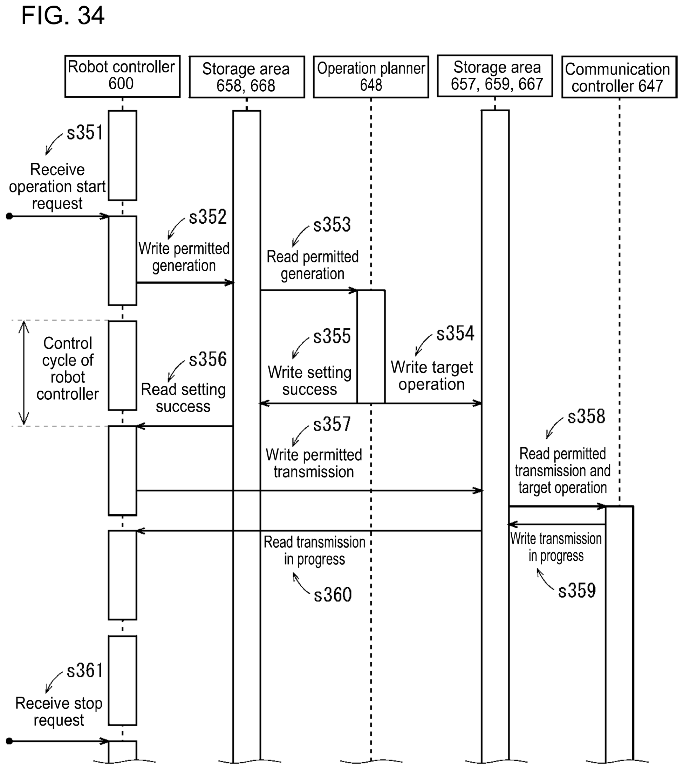

FIG. 32 is a graph showing example changes in the controller state when the arm 20 automatically resumes its operation after stopping. FIG. 32 also shows, in addition to changes in the controller state, changes in the rotation angle of the focused joint 200, changes in the transmittability data in the storage area 667, and changes in the permissibility data in the storage area 668 in an example. FIG. 33 is a block diagram illustrating example maintaining conditions and transition conditions that are satisfied when the controller state changes as shown in FIG. 32. In FIG. 32, the thick arrows indicate maintaining conditions and transition conditions that are satisfied. FIGs. 34 to 36 are each a schematic diagram illustrating example operations performed by the robot controller 600, the storage area 658, the storage area 668, the operation planner 648, the storage area 657, the storage area 659, the storage area 667, and the communication controller 647 when the controller state changes as shown in FIG. 32.

In the example in FIG. 32, the controller state transitions from the idle state S0 to the generation-related state S1 and thereafter to the in-operation monitoring state S2, as in the example in FIG. 28. In this case, as illustrated in FIG. 34, steps s351 to s360 that are the same as or similar to steps s301 to s310 in FIG. 30 are performed. While the controller state is the in-operation monitoring state S2, a factor other than a collision of the robot 2 that causes the arm 20 to stop partway can occur in response to, for example, the pause request data output from the host controller 640 (the transition condition C23 is satisfied). In other words, the robot controller 600 receives a stop request (step s361). This causes the controller state to transition from the in-operation monitoring state S2 to the regeneration-related state S3.

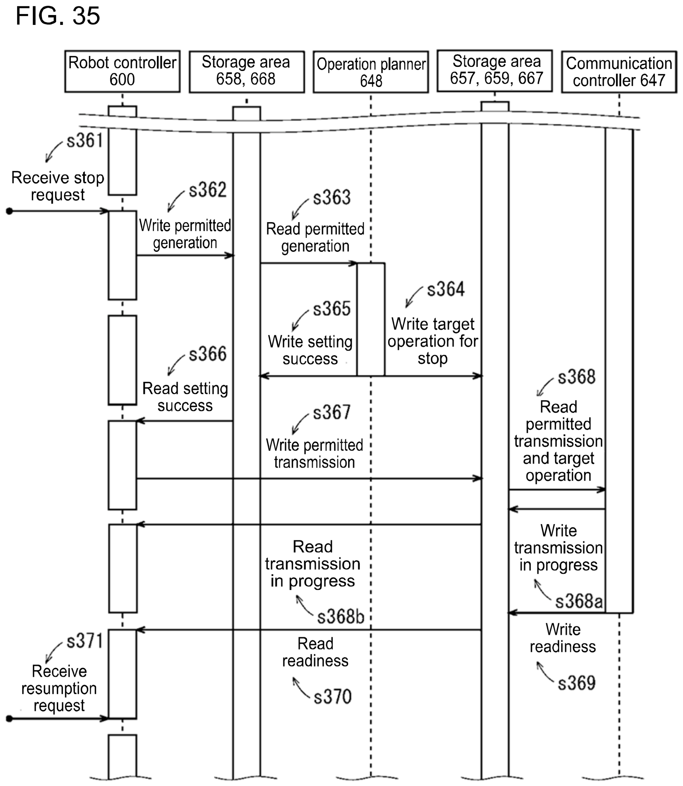

When the operation controller 610 determines not to prioritize the current target operation (the transition condition D35 is satisfied) while the controller state is the regeneration-related state S3, the robot controller 600 updates the permissibility data in the storage area 668 to indicate permitted generation (step s362 in FIG. 35). When the operation planner 648 reads the permissibility data indicating permitted generation from the storage area 668 (step s363), the operation planner 648 regenerates a target operation to be performed by the arm 20 from the switch time to the time at which the arm 20 reaches the intermediate stop position. The operation planner 648 then writes the second regeneration target operation data into the storage area 659 (step s364). The operation planner 648 also writes the setting success notification data into the storage area 658 (step s365). The robot controller 600 reads the setting success notification data from the storage area 658 (step s366), and then updates the transmittability data in the storage area 667 to indicate permitted transmission (step s367). When the communication controller 647 reads the transmittability data indicating permitted transmission from the storage area 667, the communication controller 647 reads the second regeneration target operation data from the storage area 659 (step s368). The communication controller 647 then causes the communicator 68 to transmit the read second regeneration target operation data. When the communicator 68 starts transmitting the second regeneration target operation data, the communication controller 647 writes the transmission-in-progress notification data into the storage area 657 (step s368a). The robot controller 600 reads the transmission-in-progress notification data from the storage area 657 (step s368b), and then causes the controller state to transition from the regeneration-related state S3 to the stop wait state S40 in the stop-related state S4. When the communicator 68 ends the transmission of the second regeneration target operation data, the communication controller 647 writes the readiness notification data into the storage area 657 (step s369). The robot controller 600 then reads the readiness notification data from the storage area 657 (step s370), and causes the controller state to transition to the condition satisfaction wait state S41.

When the switch time occurs while the controller state is the stop wait state S40, the generated target operation for the arm 20 switches to the regenerated target operation. The arm 20 then moves to the intermediate stop position and stops, causing the controller state to transition to the condition satisfaction wait state S41. The controller state then transitions from the condition satisfaction wait state S41 to the generation-related state S1 both when the priority data 700 indicates that the operation of the robot 2 is to be prioritized and when a factor that causes the arm 20 to stop partway is removed (the transition condition C45 is satisfied), or in other words, when the robot controller 600 receives a resumption request (step s371).

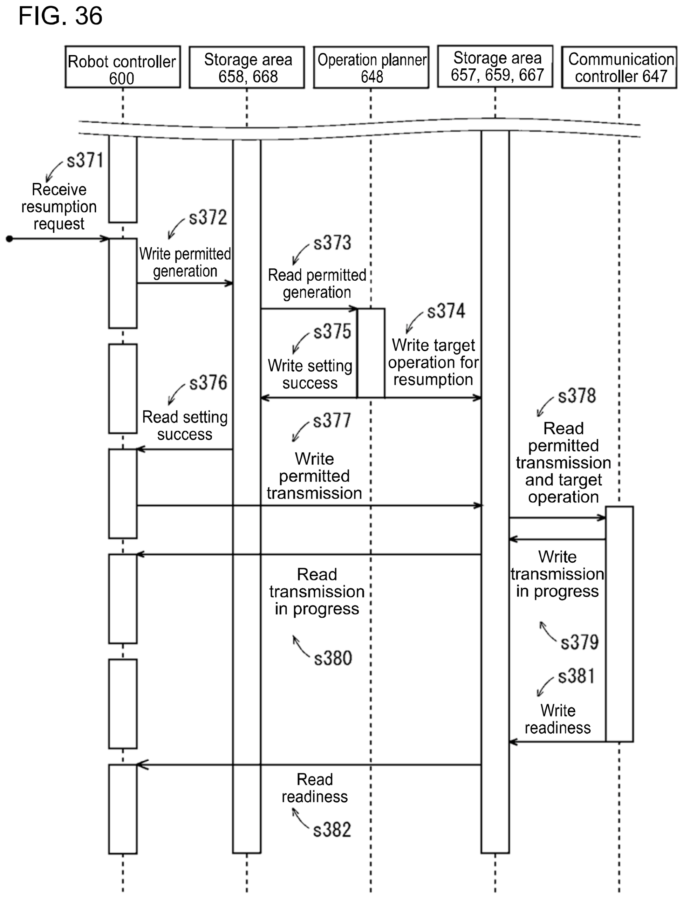

While the controller state is the generation-related state S1, the robot controller 600 updates the permissibility data in the storage area 668 to indicate permitted generation (step s372 in FIG. 36). When the operation planner 648 reads the permissibility data indicating permitted generation from the storage area 668 (step s373), the operation planner 648 generates a target operation for the arm 20 to move from the intermediate stop position to the movement end position and writes the generation target operation data into the storage area 659 (step s374). The operation planner 648 also writes the setting success notification data into the storage area 658 (step s375). The robot controller 600 reads the setting success notification data from the storage area 658 (step s376), and then updates the transmittability data in the storage area 667 to indicate permitted transmission (step s377). When the communication controller 647 reads the transmittability data indicating permitted transmission from the storage area 667, the communication controller 647 reads the generation target operation data from the storage area 659 (step s378). The communication controller 647 then causes the communicator 68 to transmit the read generation target operation data. This causes the arm 20 to resume its operation. When the communicator 68 starts transmitting the generation target operation data, the communication controller 647 writes the transmission-in-progress notification data into the storage area 657 (step s379). The robot controller 600 reads the transmission-in-progress notification data from the storage area 657 (step s380), and then causes the controller state to transition from the generation-related state S1 to the in-operation monitoring state S2.

When the communicator 68 ends the transmission of the generation target operation data, the communication controller 647 writes the readiness notification data into the storage area 657 (step s381). The robot controller 600 then reads the readiness notification data from the storage area 657 (step s382), and causes the controller state to transition to the idle state S0. Thus, while the controller state is the in-operation monitoring state S2, the controller state transitions from the in-operation monitoring state S2 to the idle state S0 when the arm 20 reaches the movement end position and completes the arm movement operation. Collision of Robot Occurring During Operation of Arm

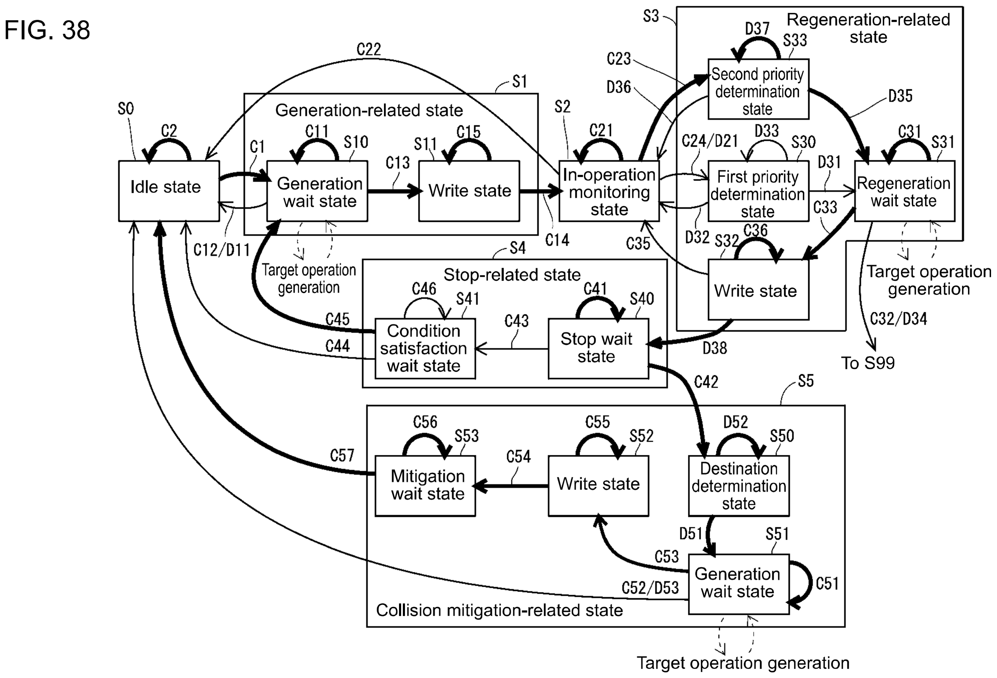

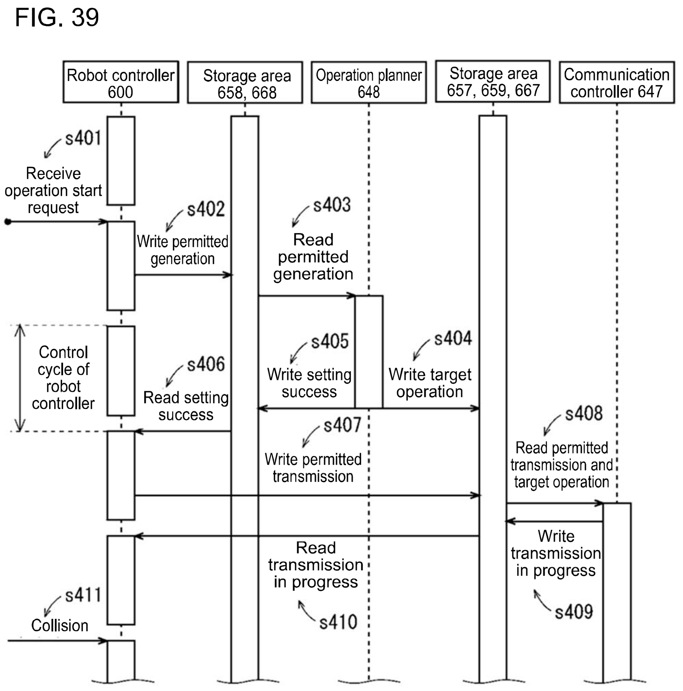

FIG. 37 is a graph showing example changes in the controller state when a collision of the robot 2 occurs during the operation of the arm 20. FIG. 37 also shows, in addition to changes in the controller state, changes in the rotation angle of the focused joint 200, changes in the transmittability data in the storage area 667, and changes in the permissibility data in the storage area 668 in an example. FIG. 38 is a block diagram illustrating example maintaining conditions and transition conditions that are satisfied when the controller state changes as shown in FIG. 37. In FIG. 38, the thick arrows indicate maintaining conditions and transition conditions that are satisfied. FIGs. 39 to 41 are each a schematic diagram illustrating example operations performed by the robot controller 600, the storage area 658, the storage area 668, the operation planner 648, the storage area 657, the storage area 659, the storage area 667, and the communication controller 647 when the controller state changes as shown in FIG. 37.

In the example in FIG. 37, the controller state transitions from the idle state S0 to the generation-related state S1 and thereafter to the in-operation monitoring state S2, as in the example in FIG. 28. In this case, as illustrated in FIG. 39, steps s401 to s410 that are the same as or similar to steps s301 to s310 in FIG. 30 are performed. While the controller state is the in-operation monitoring state S2, a collision of the robot 2 can occur as a factor that causes the arm 20 to stop partway (the transition condition C23 is satisfied, step s411). This causes the controller state to transition from the in-operation monitoring state S2 to the regeneration-related state S3.

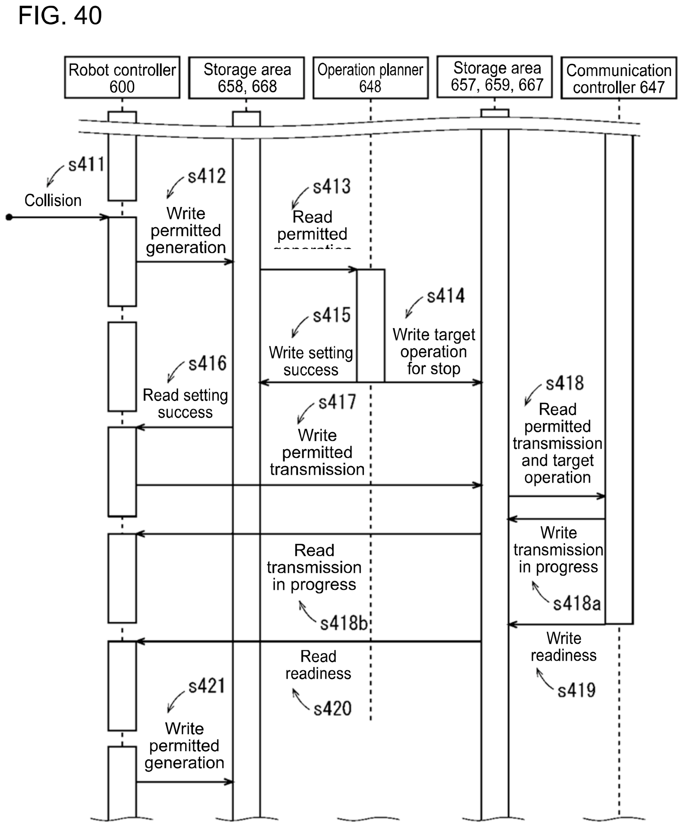

When the operation controller 610 determines not to prioritize the current target operation (the transition condition D35 is satisfied) while the controller state is the regeneration-related state S3, the operation planner 648 regenerates a target operation to be performed by the arm 20 from the switch time to the time at which the arm 20 reaches the intermediate stop position, and writes the second regeneration target operation data into the storage area 659. In this case, as illustrated in FIG. 40, steps s412 to s417 that are the same as or similar to steps s362 to s368 in FIG. 35 are performed. When the communicator 68 starts transmitting the second regeneration target operation data thereafter, the controller state transitions from the regeneration-related state S3 to the stop-related state S4. In this case, as illustrated in FIG. 40, steps s418, s418a, and s418b that are the same as or similar to steps s368, s368a, and s368b in FIG. 35 are performed.

When the switch time occurs while the controller state is the stop-related state S4, the generated target operation for the arm 20 switches to the regenerated target operation. The arm 20 then moves to the intermediate stop position and stops. In this case, as illustrated in FIG. 40, steps s419 and s420 that are the same as or similar to steps s369 and s370 in FIG. 35 are performed. When the arm 20 stops, the controller state transitions from the stop-related state S4 to the collision mitigation-related state S5.

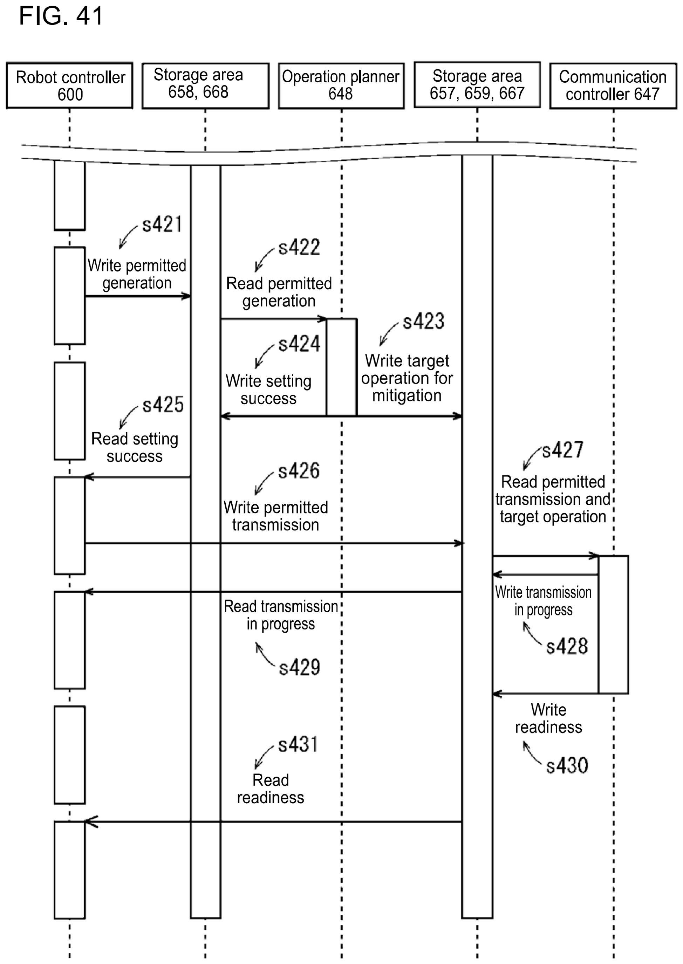

While the controller state is the collision mitigation-related state S5, the operation controller 610 determines the mitigation destination of the arm 20. The robot controller 600 then updates the permissibility data in the storage area 668 to indicate permitted generation (step s421 in FIG. 41). When the operation planner 648 reads the permissibility data indicating permitted generation from the storage area 668 (step s422), the operation planner 648 generates a target operation for the arm 20 to move from the intermediate stop position to the mitigation destination and writes the generation target operation data into the storage area 659 (step s423). The operation planner 648 also writes the setting success notification data into the storage area 658 (step s424). The robot controller 600 reads the setting success notification data from the storage area 658 (step s425), and then updates the transmittability data in the storage area 667 to indicate permitted transmission (step s426). When the communication controller 647 reads the transmittability data indicating permitted transmission from the storage area 667, the communication controller 647 reads the generation target operation data from the storage area 659 (step s427). The communication controller 647 then causes the communicator 68 to transmit the read generation target operation data. The communicator 68 starts transmitting the generation target operation data. This causes the arm 20 to resume its operation, starting the mitigation of a collision of the robot 2. When the communicator 68 starts transmitting the generation target operation data, the communication controller 647 writes the transmission-in-progress notification data into the storage area 657 (step s428). The robot controller 600 reads the transmission-in-progress notification data from the storage area 657 (step s429). When the communicator 68 ends the transmission of the generation target operation data, or in other words, when the mitigation of a collision of the robot 2 ends upon arrival of the arm 20 at the mitigation destination, the communication controller 647 writes the readiness notification data into the storage area 657 (step s430). The robot controller 600 then reads the readiness notification data from the storage area 657 (step s431), and causes the controller state to transition from the collision mitigation-related state S5 to the idle state S0.

As described above, in this example, the robot controller 600 cyclically starts the process for controlling the robot 2 without being based on the status of the operation planner 648 generating a target operation. This allows the robot controller 600 to operate cyclically. The robot 2 can thus be controlled stably.

Operation Example of Condition Determiner

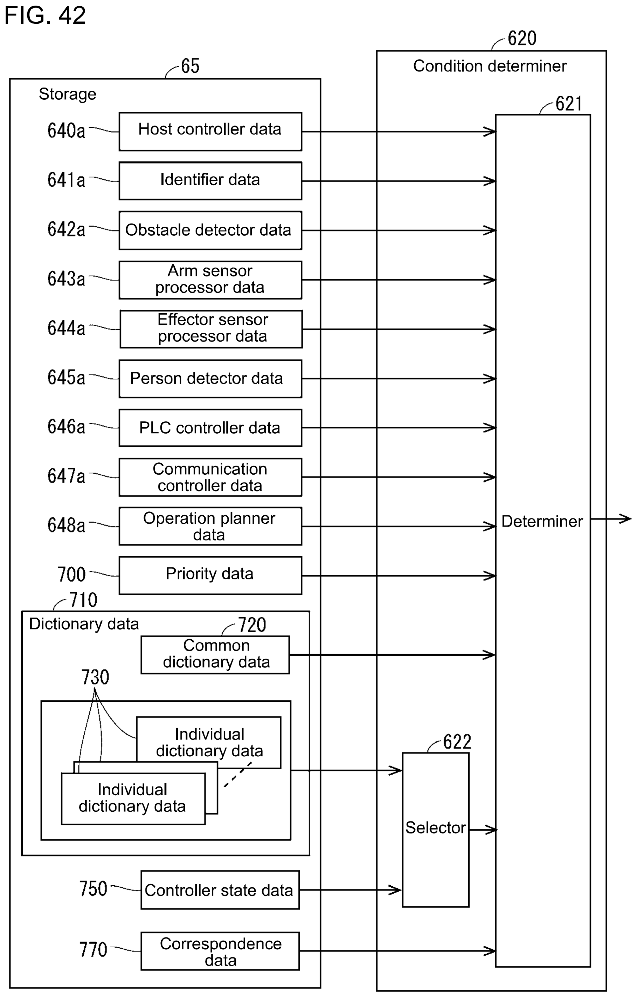

FIG. 42 is a block diagram illustrating an example structure of the condition determiner 620 and example data to be input into the condition determiner 620. As illustrated in FIG. 42, the storage 65 stores controller state data 750 indicating the current controller state. The operation controller 610 updates the controller state data 750 in response to a transition of the controller state.

The storage 65 also stores dictionary data 710 indicating conditions for satisfying state conditions C, for which satisfaction or nonsatisfaction is determined by the condition determiner 620. The condition determiner 620 determines whether each of the state conditions C is satisfied based on multiple pieces of determination data, the priority data 700, and the dictionary data 710 in the storage 65. The multiple pieces of determination data and the priority data 700, which are used to determine whether the state conditions C are satisfied, may each be hereafter referred to as determination target data unless these pieces of data are to be distinguished from one another.

To determine whether a state condition C is satisfied, at least one piece of determination target data is used. For each of the state conditions C, the dictionary data 710 includes the item of at least one piece of determination target data for satisfying the state condition C. The condition determiner 620 determines whether each of the state conditions C is satisfied by using the item of at least one piece of determination target data and the dictionary data 710 (e.g., by performing a logical operation).

The determination target data to be used to determine whether a state condition C is satisfied may be hereafter referred to as relevant determination target data. Among the multiple pieces of determination target data in the storage 65, a different piece of determination target data can serve as the relevant determination target data depending on the state condition C.

The dictionary data 710 includes, for example, common dictionary data 720 and multiple sets of individual dictionary data 730. The common dictionary data 720 is common to multiple states (specifically, multiple states other than the error correction state S99) of the operation controller 610. Each of the multiple sets of individual dictionary data 730 individually corresponds to one state of the operation controller 610. The dictionary data 710 is, for example, editable. The common dictionary data 720 and each of the sets of individual dictionary data 730 are, for example, editable.

The common dictionary data 720 indicates conditions for satisfying the transition condition C99 that causes the controller state to transition to the error correction state S99. The common dictionary data 720 includes the item of at least one piece of relevant determination target data for satisfying the common transition condition C99.

Each of the sets of individual dictionary data 730 corresponds to a state for which a state condition C is determined to be satisfied or not satisfied, among the multiple states of the operation controller 610. More specifically, the multiple sets of individual dictionary data 730 respectively correspond to the initialization wait state S100, the idle state S0, the generation wait state S10, the write state S11, the in-operation monitoring state S2, the regeneration wait state S31, the write state S32, the stop wait state S40, the condition satisfaction wait state S41, the generation wait state S51, the write state S52, and the mitigation wait state S53, for which state conditions C are determined to be satisfied or not satisfied. Each of the sets of individual dictionary data 730 indicates conditions for satisfying a state condition C for which satisfaction or nonsatisfaction is determined for the state corresponding to the individual dictionary data 730. Each of the sets of individual dictionary data 730 includes the item of at least one piece of relevant determination target data for satisfying a state condition C for which the determination is performed for the state corresponding to the set of individual dictionary data 730.

The condition determiner 620 includes a determiner 621 and a selector 622. When the operation controller 610 has a state other than the error correction state S99, the determiner 621 determines whether the common transition condition C99 is satisfied by using the item of at least one piece of relevant determination target data and the common dictionary data 720 (e.g., by performing a logical operation).

The selector 622 selects, from the multiple sets of individual dictionary data 730 in the storage 65, a set of individual dictionary data 730 corresponding to the current controller state indicated by the controller state data 750, and outputs the selected set of individual dictionary data 730 to the determiner 621. However, depending on the current controller state, the multiple sets of individual dictionary data 730 in the storage 65 may include no individual dictionary data 730 corresponding to the current controller state.

While the current controller state is any one of the initialization wait state S100, the idle state S0, the generation wait state S10, the write state S11, the in-operation monitoring state S2, the regeneration wait state S31, the write state 32, the stop wait state S40, the condition satisfaction wait state S41, the generation wait state S51, the write state S52, or the mitigation wait state S53, the determiner 621 determines whether a state condition C for the current controller state is satisfied by using the item of at least one piece of relevant determination target data and the individual dictionary data 730 input from the selector 622 (e.g., by performing a logical operation). The state condition C for the current controller state refers to a state condition C for which satisfaction or nonsatisfaction is determined by the condition determiner 620 for the current controller state.

The determiner 621 also determines the upper limit combination to be used based on the multiple pieces of determination data. The control system 6 has, for example, multiple combinations of upper limits. For example, the control system 6 has 25 upper limit combinations. The determiner 621 selects the upper limit combination to be used from the 25 upper limit combinations.

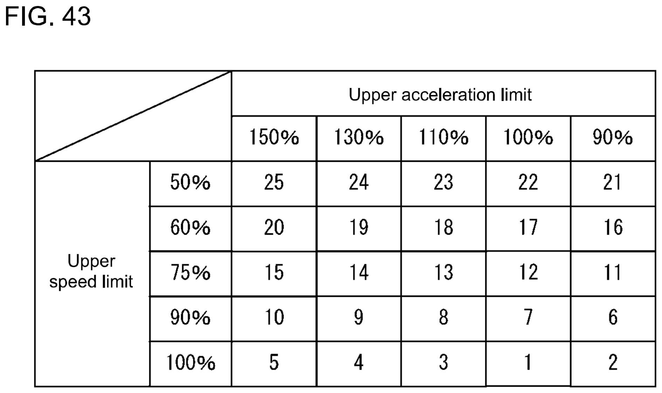

FIG. 43 is a table showing the 25 upper limit combinations in an example. The 25 upper limit combinations are respectively assigned with, for example, upper limit identification numbers 1 to 25. For the upper limit combinations with the upper limit identification numbers 1 to 5, the upper speed limit is 100% of the initial value. For the upper limit combinations with the upper limit identification numbers 6 to 10, the upper speed limit is 90% of the initial value. For the upper limit combinations with the upper limit identification numbers 11 to 15, the upper speed limit is 75% of the initial value. For the upper limit combinations with the upper limit identification numbers 16 to 20, the upper speed limit is 60% of the initial value. For the upper limit combinations with the upper limit identification numbers 21 to 25, the upper speed limit is 50% of the initial value.

For the upper limit combinations with the upper limit identification numbers 2, 6, 11, 16, and 21, the upper acceleration limit is 90% of the initial value. For the upper limit combinations with the upper limit identification numbers 1, 7, 12, 17, and 22, the upper acceleration limit is 100% of the initial value. For the upper limit combinations with the upper limit identification numbers 3, 8, 13, 18, and 23, the upper acceleration limit is 110% of the initial value. For the upper limit combinations with the upper limit identification numbers 4, 9, 14, 19, and 24, the upper acceleration limit is 130% of the initial value. For the upper limit combinations with the upper limit identification numbers 5, 10, 15, 20, and 25, the upper acceleration limit is 150% of the initial value.

The storage 65 stores correspondence data 770 used by the determiner 621 to determine the upper limit combination to be used. The correspondence data 770 indicates the correspondence between each item of each piece of determination data and the upper limit combination. The determiner 621 determines the upper limit combination to be used based on the items of the multiple pieces of determination data and the correspondence data 770. For determination data indicating a specific item, the determiner 621 identifies the upper limit combination associated with the specific item in the correspondence data 770, and determines the identified upper limit combination as the upper limit combination to be used.

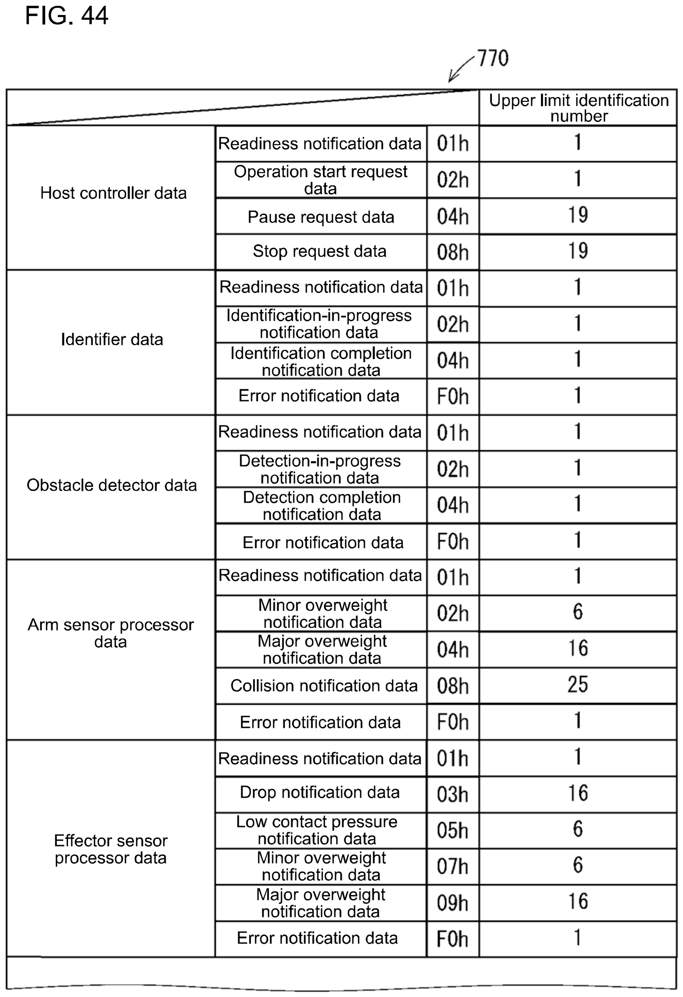

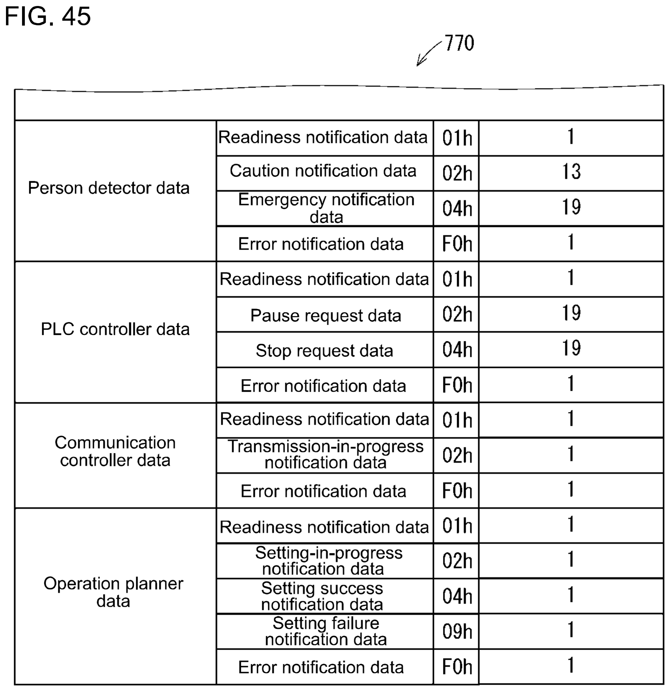

FIGs. 44 and 45 are each a table showing the correspondence data 770 in an example. In the correspondence data 770, the upper limit combination is indicated by an upper limit identification number. As shown in FIGs. 44 and 45, the correspondence data 770 associates each type that can be indicated by the determination data (in other words, each item that can be indicated by the determination data) with an upper limit identification number.

In the examples in FIGs. 44 and 45, the host controller data 640a can indicate data "01h" (readiness notification data), data "02h" (operation start request data), data "04h" (pause request data), and data "08h" (stop request data) that are respectively associated with the upper limit identification number 1, the upper limit identification number 1, the upper limit identification number 19, and the upper limit identification number 19. For example, when the host controller data 640a indicates 01h (readiness notification data), the determiner 621 determines the upper limit combination with the upper limit identification number 1 as the upper limit combination to be used. When the host controller data 640a indicates 04h (pause request data), the determiner 621 determines the upper limit combination with the upper limit identification number 19 as the upper limit combination to be used. When the host controller 640 outputs the pause request data or the stop request data, the upper limit combination to be used includes an upper acceleration limit higher than the initial value and an upper speed limit lower than the initial value. The arm 20 thus takes less time to stop when the arm 20 stops partway in response to a pause request or a stop request for the arm 20 provided from the host controller 640 to the robot controller 600.

In the examples in FIGs. 44 and 45, the identifier data 641a can indicate data "01h" (readiness notification data), data "02h" (identification-in-progress notification data), data "04h" (identification completion notification data), and data "FOh" (error notification data) that are each associated with the upper limit identification number 1.

In the examples in FIGs. 44 and 45, the obstacle detector data 642a can indicate data "01h" (readiness notification data), data "02h" (detection-in-progress notification data), data "04h" (detection completion notification data), and data "FOh" (error notification data) that are each associated with the upper limit identification number 1.

In the examples in FIGs. 44 and 45, the arm sensor processor data 643a can indicate data "01h" (readiness notification data), data "02h" (minor overweight notification data), data "04h" (major overweight notification data), data "08h" (collision notification data), and data "FOh" (error notification data) that are respectively associated with the upper limit identification number 1, the upper limit identification number 6, the upper limit identification number 16, the upper limit identification number 25, and the upper limit identification number 1.

When the arm sensor processor 643 outputs the minor overweight notification data or the major overweight notification data, the upper limit combination to be used includes an upper acceleration limit and an upper speed limit that are both lower than the initial values. The lower upper acceleration limit reduces the likelihood that the object 10 drops from the end effector 25. The lower upper speed limit allows the arm 20 to take less time to stop. The arm 20 thus takes less time to stop with the object 10 being less likely to drop from the end effector 25 when the arm 20 stops partway in response to the object weight showing minor overweight or major overweight. When the arm sensor processor 643 outputs the major overweight notification data, the upper limit combination to be used includes an upper speed limit that is lower than when the arm sensor processor 643 outputs the minor overweight notification data. The arm 20 thus takes still less time to stop.

When the arm sensor processor 643 outputs the collision notification data, the upper limit combination to be used includes an upper acceleration limit higher than the initial value and an upper speed limit lower than the initial value. The arm 20 thus takes less time to stop when the arm 20 stops partway in response to a collision of the robot 2.

In the examples in FIGs. 44 and 45, the effector sensor processor data 644a can indicate data "01h" (readiness notification data), data "03h" (drop notification data), data "05h" (low contact pressure notification data), data "07h" (minor overweight notification data), data "09h" (major overweight notification data), and data "FOh" (error notification data) that are respectively associated with the upper limit identification number 1, the upper limit identification number 16, the upper limit identification number 6, the upper limit identification number 6, the upper limit identification number 16, and the upper limit identification number 1.

When the effector sensor processor 644 outputs the drop notification data, the low contact pressure notification data, the minor overweight notification data, or the major overweight notification data, the upper limit combination to be used includes an upper acceleration limit and an upper speed limit that are both lower than the initial values. Thus, when the arm 20 stops partway in response to the object 10 dropping from the end effector 25, the arm 20 takes less time to stop. When the arm 20 stops partway in response to a low contact pressure between the end effector 25 and the object 10, the arm 20 takes less time to stop with the object 10 being less likely to drop from the end effector 25.

When the arm sensor processor 643 outputs the drop notification data or the major overweight notification data, the upper limit combination to be used includes an upper speed limit that is lower than when the arm sensor processor 643 outputs the low contact pressure notification data or the minor overweight notification data. The arm 20 thus takes still less time to stop when the arm 20 stops partway in response to the object 10 dropping from the end effector 25 or the object weight showing major overweight.

In the examples in FIGs. 44 and 45, the person detector data 645a can indicate data "01h" (readiness notification data), data "02h" (caution notification data), data "04h" (emergency notification data), and data "FOh" (error notification data) that are respectively associated with the upper limit identification number 1, the upper limit identification number 13, the upper limit identification number 19, and the upper limit identification number 1.

When the person detector 645 outputs the caution notification data or the emergency notification data, the upper limit combination to be used includes an upper acceleration limit higher than the initial value and an upper speed limit lower than the initial value. The arm 20 thus takes less time to stop when the arm 20 stops partway in response to a person detected in the person detection area AR2. When the person detector 645 outputs the emergency notification data, the upper limit combination to be used includes a higher upper acceleration limit and a lower upper speed limit than when the person detector 645 outputs the caution notification data. The arm 20 thus takes still less time to stop when the arm 20 stops partway in response to a person detected at a position relatively near the robot 2 in the person detection area AR2.

In the examples in FIGs. 44 and 45, the PLC controller data 646a can indicate data "01h" (readiness notification data), data "02h" (pause request data), data "04h" (stop request data), and data "FOh" (error notification data) that are respectively associated with the upper limit identification number 1, the upper limit identification number 19, the upper limit identification number 19, and the upper limit identification number 1. When the PLC controller 646 outputs the pause request data or the stop request data, the upper limit combination to be used includes an upper acceleration limit higher than the initial value and an upper speed limit lower than the initial value. The arm 20 thus takes less time to stop when the arm 20 stops partway in response to a pause request or a stop request for the arm 20 provided from the PLC controller 646 to the robot controller 600.

In the examples in FIGs. 44 and 45, the communication controller data 647a can indicate data "01h" (readiness notification data), data "02h" (transmission-in-progress data), and data "FOh" (error notification data) that are each associated with the upper limit identification number 1.

In the examples in FIGs. 44 and 45, the operation planner data 648a can indicate data "01h" (readiness notification data), data "02h" (setting-in-progress notification data), data "04h" (setting success notification data), data "09h" (setting failure notification data), and data "FOh" (error notification data) that are each associated with the upper limit identification number 1.

Note that, when the current items of multiple pieces of determination data correspond to upper limit identification numbers that are different from one another, the determiner 621 selects, as the upper limit combination to be used, the upper limit combination having a maximum upper limit identification number from the multiple upper limit identification numbers. For example, the identifier data 641a, the arm sensor processor data 643a, and the person detector data 645a may indicate "02h," and the other pieces of determination data may indicate "01h." In this case, the determiner 621 selects, as the upper limit combination to be used, the upper limit combination having the upper limit identification number 13 corresponding to "02h" of the person detector data 645a. The upper limit identification number may indicate the priority level based on which a candidate upper limit combination is selected from multiple candidates as the upper limit combination to be used.

Note that, although 25 upper limit combinations are used in the above example, any number of upper limit combinations may be used. The upper limit combinations may also include upper acceleration limits and upper speed limits having values other than those in the example in FIG. 43.

Specific Example of Dictionary Data

Examples of the common dictionary data 720 and the individual dictionary data 730 will now be described. In the example described below, the priority data 700 indicates data "01h" when the operation of the robot 2 is to be prioritized, and indicates data "02h" when the safety associated with the robot 2 is to be prioritized.

Example of Common Dictionary Data

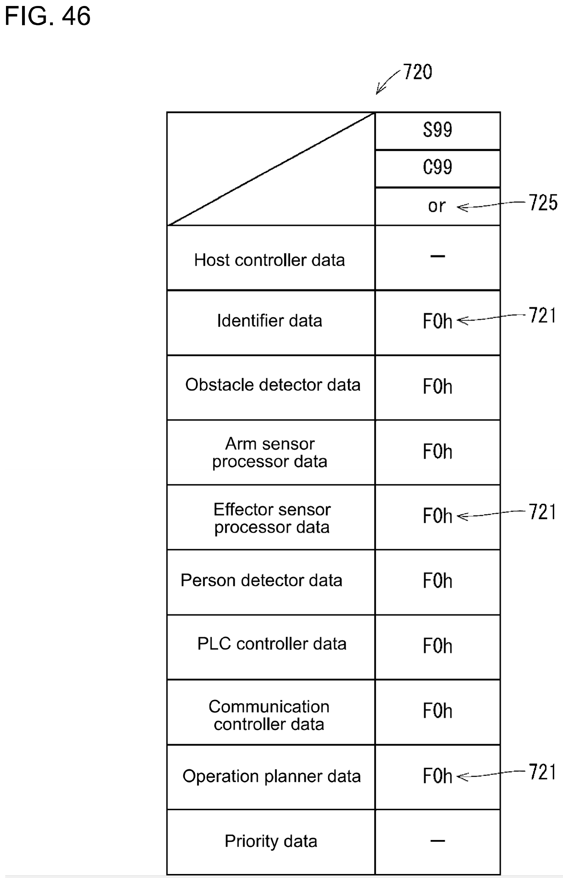

FIG. 46 is a table showing an example of the common dictionary data 720. The common dictionary data 720 includes data 721 (also referred to as specific data 721) to be indicated by the relevant determination target data to satisfy the transition condition C99. One of the multiple pieces of data that can be indicated by the relevant determination target data may be the specific data 721. Two or more of the multiple pieces of data that can be indicated by the relevant determination target data may each be the specific data 721.

Multiple pieces of relevant determination target data may be used to determine whether the transition condition C99 is satisfied. In this case, the common dictionary data 720 includes relational data 725 indicating whether all the multiple pieces of relevant determination target data are each to indicate the specific data 721 or at least one of the multiple pieces of relevant determination target data is to indicate the specific data 721 to satisfy the transition condition 99. When all the multiple pieces of relevant determination target data are each to indicate the specific data 721 to satisfy the transition condition 99, such a state is hereafter referred to as "and." When at least one of the multiple pieces of relevant determination target data is to indicate the specific data 721 to satisfy the transition condition 99, such a state is hereafter referred to as "or."

In the example in FIG. 46, the pieces of data other than the host controller data and the priority data among the multiple pieces of determination target data are each the relevant determination target data. In FIG. 46 and FIGs. 47 to 58 described later, a piece of determination target data that is not the relevant determination target data, or in other words, a piece of determination data that is not used to determine whether a state condition C is satisfied, is indicated by "-," among the multiple pieces of determination target data.

In the example in FIG. 46, the relational data 725 indicates "or." In this case, the determiner 621 determines that the common transition condition C99 is satisfied when at least one piece of relevant determination target data indicates the specific data 721, among multiple pieces of relevant determination target data to be used for the transition condition C99. Note that, for the relational data 725 indicating "and," the determiner 621 determines that the common transition condition C99 is satisfied when all the multiple pieces of relevant determination target data each indicate the specific data 721.

In the example in FIG. 46, the specific data 721 is "FOh" for each of the identifier data, the obstacle detector data, the arm sensor processor data, the effector sensor processor data, the person detector data, the PLC controller data, the communication controller data, and the operation planner data. When at least one of the identifier data, the obstacle detector data, the arm sensor processor data, the effector sensor processor data, the person detector data, the PLC controller data, the communication controller data, or the operation planner data indicates "F0h," the determiner 621 determines that the common transition condition 99 is satisfied independently of the items of the host controller data and the priority data that are each not the relevant determination target data. The controller state thus transitions to the error correction state S99 in response to an error in at least one of the identifier 641, the obstacle detector 642, the arm sensor processor 643, the effector sensor processor 644, the person detector 645, the PLC controller 646, the communication controller 647, or the operation planner 648, or in other words, in response to an error in the control system 6. Example of Individual Dictionary Data

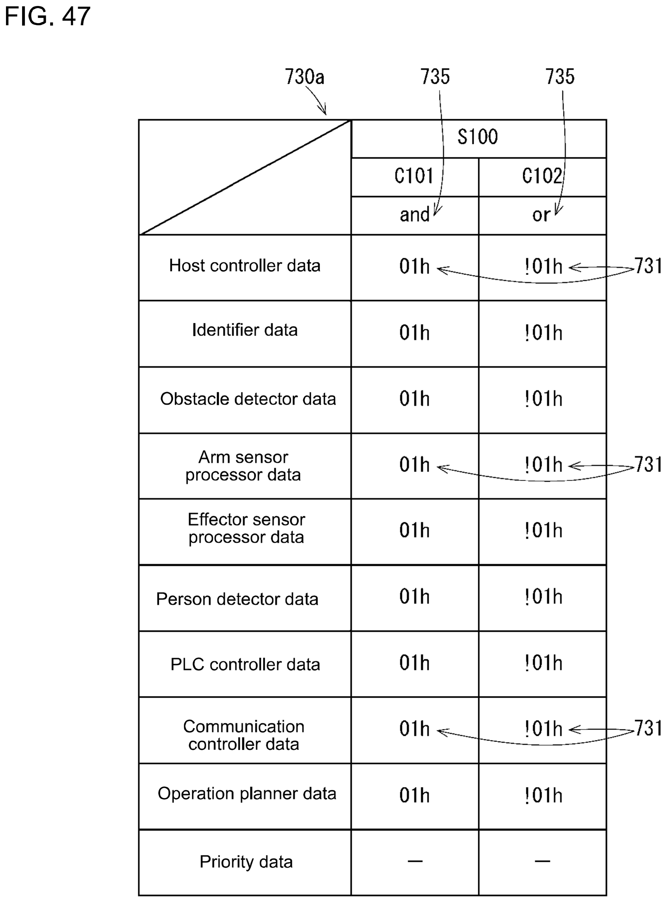

FIGs. 47 to 58 are each a table showing an example of the individual dictionary data 730. FIGs. 47 to 58 respectively show examples of multiple sets of individual dictionary data 730 corresponding to the initialization wait state S100, the idle state S0, the generation wait state S10, the write state S11, the in-operation monitoring state S2, the regeneration wait state S31, the write state S32, the stop wait state S40, the condition satisfaction wait state S41, the generation wait state S51, the write state S52, and the mitigation wait state S53.

The individual dictionary data 730 includes data 731 (also referred to as specific data 731) to be indicated by the relevant determination target data to satisfy a state condition C, in the same manner as or in a similar manner to the common dictionary data 720. One of the multiple pieces of data that can be indicated by the relevant determination target data may be the specific data 731. Two or more of the multiple pieces of data that can be indicated by the relevant determination target data may each be the specific data 731.

Multiple pieces of relevant determination target data may be used to determine whether a state condition C is satisfied. In this case, in the same manner as or in a similar manner to the common dictionary data 720, the individual dictionary data 730 includes relational data 735 indicating whether all the multiple pieces of relevant determination target data are each to indicate the specific data 731 or at least one of the multiple pieces of relevant determination target data is to indicate the specific data 731 to satisfy the state condition C. When all the multiple pieces of relevant determination target data are each to indicate the specific data 731 to satisfy the state condition C, such a state is hereafter referred to as "and." When at least one of the multiple pieces of relevant determination target data is to indicate the specific data 731 to satisfy the state condition C, such a state is hereafter referred to as "or." Example of Individual Dictionary Data Corresponding to Initialization Wait State

While the controller state is the initialization wait state S100, the selector 622 selects a set of individual dictionary data 730 (also referred to as individual dictionary data 730a) corresponding to the initialization wait state S100 from the multiple sets of individual dictionary data 730 in the storage 65, and outputs the selected set of individual dictionary data 730 to the determiner 621.

The individual dictionary data 730a indicates conditions for satisfying the maintaining condition C102 and conditions for satisfying the transition condition C101. The individual dictionary data 730a includes the item of at least one piece of relevant determination target data for satisfying the maintaining condition C102 and the item of at least one piece of relevant determination target data for satisfying the transition condition 101.

As shown in FIG. 47, in the individual dictionary data 730a, the relational data 735 for the transition condition C101 indicates "and." For the transition condition C101, the pieces of data other than the priority data among the multiple pieces of determination target data are each the relevant determination target data. For the transition condition C101, the specific data 731 is "01h" for each of the host controller data, the identifier data, the obstacle detector data, the arm sensor processor data, the effector sensor processor data, the person detector data, the PLC controller data, the communication controller data, and the operation planner data.

The relational data 735 for the maintaining condition C102 indicates "or." For the maintaining condition C102, the pieces of data other than the priority data among the multiple pieces of determination target data are each the relevant determination target data. For the maintaining condition C102, the specific data 731 is any data other than "01h" for each of the host controller data, the identifier data, the obstacle detector data, the arm sensor processor data, the effector sensor processor data, the person detector data, the PLC controller data, the communication controller data, and the operation planner data. In other words, each of the person detector data, the PLC controller data, the communication controller data, and the operation planner data indicates the specific data 731 when each of these pieces of data indicates any data other than "01h." In FIG. 47, the specific data 731 being any data other than "01h" is indicated by "!01h." Data other than "01h" is, in other words, data different from "01h."

While the controller state is the initialization wait state S100, the determiner 621 determines that the transition condition C101 is satisfied when all the host controller data, the identifier data, the obstacle detector data, the arm sensor processor data, the effector sensor processor data, the person detector data, the PLC controller data, the communication controller data, and the operation planner data indicate "01h" (readiness notification data). When the initialization of the control system 6 is complete, all the host controller data, the identifier data, the obstacle detector data, the arm sensor processor data, the effector sensor processor data, the person detector data, the PLC controller data, the communication controller data, and the operation planner data indicate "01h." Thus, the controller state transitions from the initialization wait state S100 to the idle state S0 when the initialization of the control system 6 is complete.

While the controller state is the initialization wait state S100, the determiner 621 determines that the maintaining condition C102 is satisfied when at least one of the host controller data, the identifier data, the obstacle detector data, the arm sensor processor data, the effector sensor processor data, the person detector data, the PLC controller data, the communication controller data, or the operation planner data indicates data other than "01h." During the initialization of the control system 6, at least one of the host controller data, the identifier data, the obstacle detector data, the arm sensor processor data, the effector sensor processor data, the person detector data, the PLC controller data, the communication controller data, or the operation planner data indicates data other than "01h." Thus, during the initialization of the control system 6, the initialization wait state S 100 is maintained.

Example of Individual Dictionary Data Corresponding to Idle State

While the controller state is the idle state S0, the selector 622 selects a set of individual dictionary data 730 (also referred to as individual dictionary data 730b) corresponding to the idle state S0 from the multiple sets of individual dictionary data 730 in the storage 65, and outputs the selected set of individual dictionary data 730 to the determiner 621.

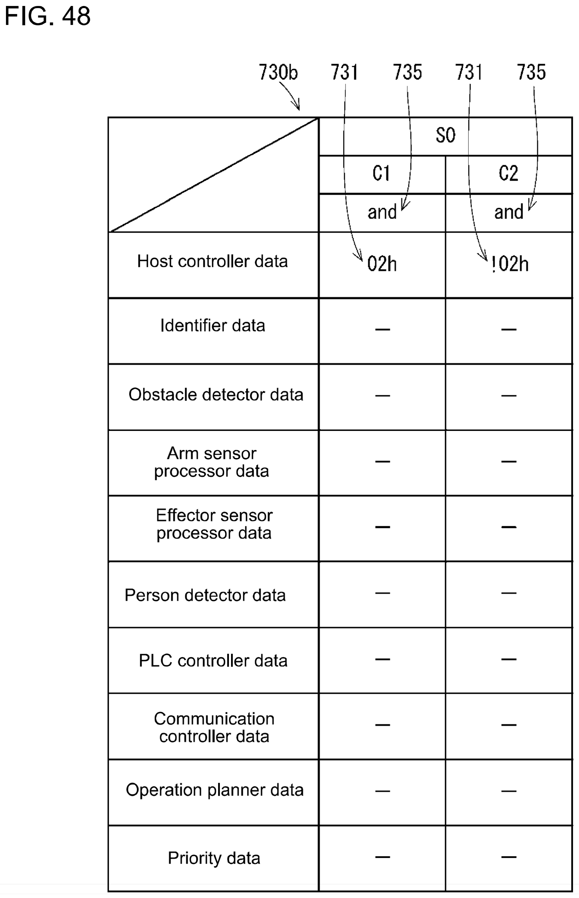

The individual dictionary data 730b indicates conditions for satisfying the transition condition C1 and conditions for satisfying the maintaining condition C2. As shown in FIG. 48, the relational data 735 for the transition condition C1 indicates "and." For the transition condition C1, the host controller data alone among the multiple pieces of determination target data is the relevant determination target data. The specific data 721 for the host controller data for the transition condition C1 is "02h."

The relational data 735 for the maintaining condition C2 indicates "and." For the maintaining condition C2, the host controller data alone among the multiple pieces of determination target data is the relevant determination target data. The specific data 731 for the host controller data for the maintaining condition C2 is any data other than "02h." In FIG. 48, the specific data 731 being any data other than "02h" is indicated by "!02h."

While the controller state is the idle state S0, the determiner 621 determines that the transition condition C1 is satisfied when the host controller data indicates "02h" (operation start request data). The controller state thus transitions from the idle state S0 to the generation wait state S10 when the host controller 640 requests the robot controller 600 to start the operation of the arm 20. In contrast, when the host controller data indicates data other than "02h," the determiner 621 determines that the maintaining condition C2 is satisfied. The idle state S0 is thus maintained when the host controller 640 does not request the robot controller 600 to start the operation of the arm 20.

Example of Individual Dictionary Data Corresponding to Generation Wait State in Generation-Related State

While the controller state is the generation wait state S10, the selector 622 selects a set of individual dictionary data 730 (also referred to as individual dictionary data 730c) corresponding to the generation wait state S10 from the multiple sets of individual dictionary data 730 in the storage 65, and outputs the selected set of individual dictionary data 730 to the determiner 621.

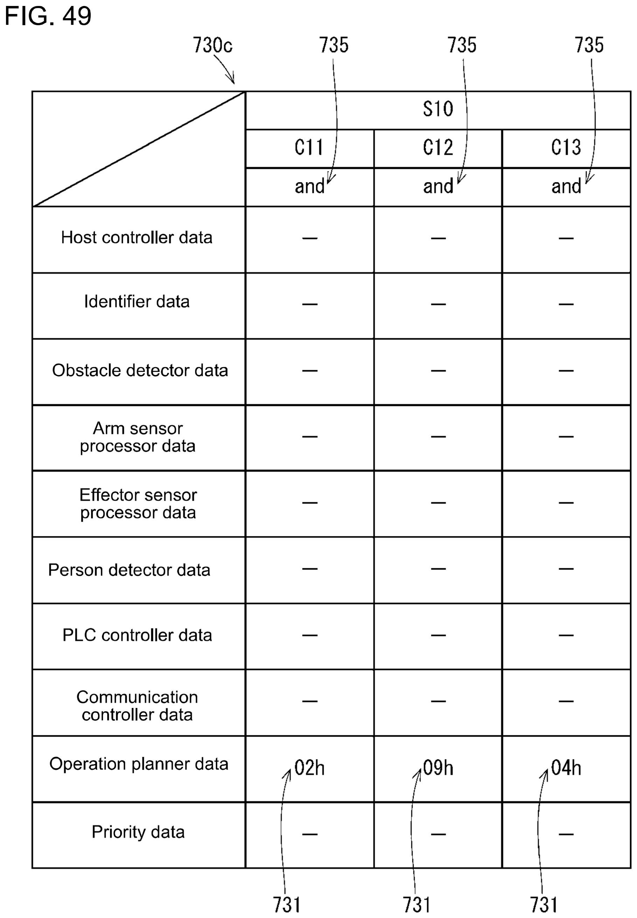

The individual dictionary data 730c indicates conditions for satisfying the maintaining condition C11, conditions for satisfying the transition condition C12, and conditions for satisfying the transition condition C13. As shown in FIG. 49, the relational data 735 for the maintaining condition C11 indicates "and." For the maintaining condition C11, the operation planner data alone is the relevant determination target data. The specific data 731 for the operation planner data for the maintaining condition C11 is "02h."

The relational data 735 for the transition condition C12 indicates "and." For the transition condition C12, the operation planner data alone is the relevant determination target data. The specific data 731 for the operation planner data for the transition condition C12 is "09h."

The relational data 735 for the transition condition C13 indicates "and." For the transition condition C13, the operation planner data alone is the relevant determination target data. The specific data 731 for the operation planner data for the transition condition C13 is "04h."

While the controller state is the generation wait state S10, the determiner 621 determines that the maintaining condition C11 is satisfied when the operation planner data indicates "02h" (setting-in-progress notification data). The generation wait state S10 is thus maintained when the operation planner 648 is performing the target operation generation process.

While the controller state is the generation wait state S10, the determiner 621 determines that the transition condition C12 is satisfied when the operation planner data indicates "09h" (setting failure data). The controller state thus transitions from the generation wait state S10 to the idle state S0 in response to a failure of the generation of a target operation for the arm 20 in the target operation generation process.

While the controller state is the generation wait state S10, the determiner 621 determines that the transition condition C13 is satisfied when the operation planner data indicates "04h" (setting success notification data). The controller state thus transitions from the generation wait state S10 to the write state S11 when the target operation generation process is complete upon successful generation of a target operation for the arm 20 in the target operation generation process.

Example of Individual Dictionary Data Corresponding to Write State in Generation-Related State

While the controller state is the write state S11, the selector 622 selects a set of individual dictionary data 730 (also referred to as individual dictionary data 730d) corresponding to the write state S11 from the multiple sets of individual dictionary data 730 in the storage 65, and outputs the selected set of individual dictionary data 730 to the determiner 621. The individual dictionary data 730d indicates conditions for satisfying the transition condition C14 and conditions for satisfying the maintaining condition C15.

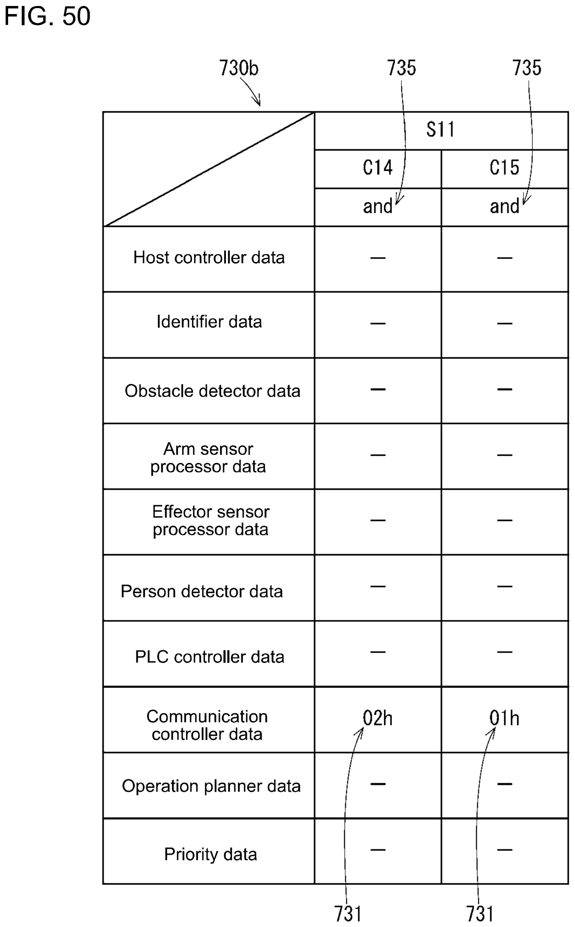

As shown in FIG. 50, the relational data 735 for the transition condition C14 indicates "and." For the transition condition C14, the communication controller data alone is the relevant determination target data. The specific data 731 for the communication controller data for the transition condition C14 is "02h."

The relational data 735 for the maintaining condition C15 indicates "and." For the maintaining condition C15, the communication controller data alone is the relevant determination target data. The specific data 731 for the communication controller data for the maintaining condition C15 is "01h."

While the controller state is the write state S11, the determiner 621 determines that the transition condition C14 is satisfied when the communication controller data indicates "02h" (transmission-in-progress notification data). The controller state thus transitions from the write state S11 to the in-operation monitoring state S2 when the communicator 68 starts transmitting the generation target operation data 150. In contrast, when the communication controller data indicates "01h" (readiness notification data), the determiner 621 determines that the maintaining condition C15 is satisfied. The write state S11 is thus maintained when the communicator 68 has not started transmitting the generation target operation data 150. Example of Individual Dictionary Data Corresponding to In-Operation Monitoring State

While the controller state is the in-operation monitoring state S2, the selector 622 selects a set of individual dictionary data 730 (also referred to as individual dictionary data 730e) corresponding to the in-operation monitoring state S2 from the multiple sets of individual dictionary data 730 in the storage 65, and outputs the selected set of individual dictionary data 730 to the determiner 621. The individual dictionary data 730e indicates conditions for satisfying the maintaining condition C21, conditions for satisfying the transition condition C22, conditions for satisfying the transition condition C23, and conditions for satisfying the transition condition C24.

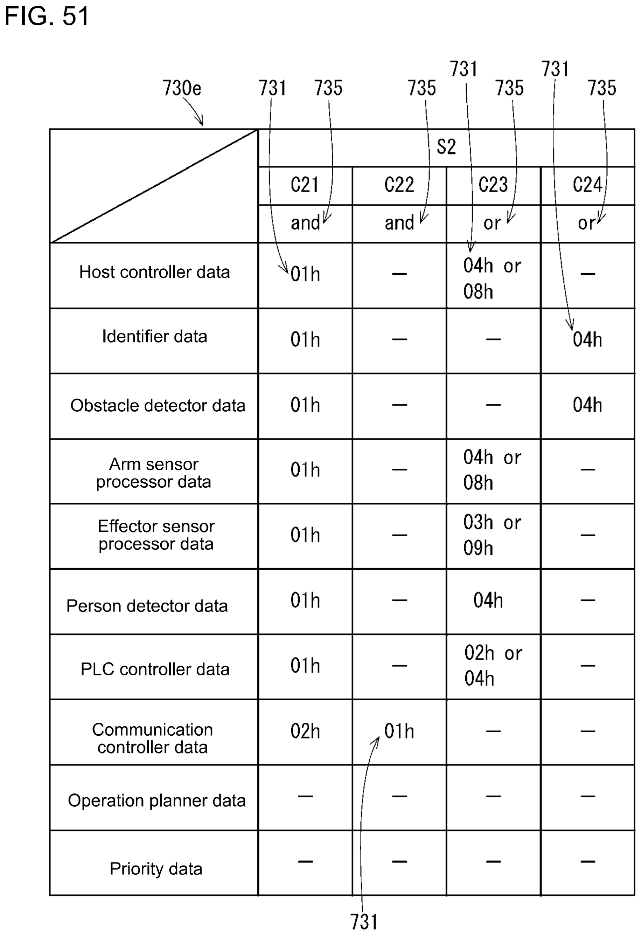

As shown in FIG. 51, the relational data 735 for the maintaining condition C21 indicates "and." For the maintaining condition C21, the pieces of data other than the operation planner data and the priority data among the multiple pieces of determination data are each the relevant determination target data. The specific data 731 for each of the host controller data, the identifier data, the obstacle detector data, the arm sensor processor data, the effector sensor processor data, the person detector data, and the PLC controller data for the maintaining condition C21 is "01h." The specific data 731 for the communication controller data for the maintaining condition C21 is "02h."

The relational data 735 for the transition condition C22 indicates "and." For the transition condition C22, the communication controller data alone is the relevant determination target data. The specific data 731 for the communication controller data for the transition condition C22 is "01h."

The relational data 735 for the transition condition C23 indicates "or." For the transition condition C24, the host controller data, the arm sensor processor data, the effector sensor processor data, the person detector data, and the PLC controller data are each the relevant determination target data. The specific data 731 for the host controller data for the transition condition C23 is "04h" or "08h." In other words, the host controller data indicates the specific data 731 independently of whether the host controller data indicates "04h" or "08h." The specific data 731 for the arm sensor processor data for the transition condition C23 is "04h" or "08h." The specific data 731 for the effector sensor processor data for the transition condition C23 is "03h" or "09h." The specific data 731 for the person detector data for the transition condition C23 is "04h." The specific data 731 for the PLC controller data for the transition condition C23 is "02h" or "04h."

The relational data 735 for the transition condition C24 indicates "or." For the transition condition C24, the identifier data and the obstacle detector data are each the relevant determination target data. The specific data 731 for each of the identifier data and the obstacle detector data for the transition condition C24 is "04h."

In this example, the host controller data indicating "04h" (pause request data) indicates the occurrence of a factor that causes the arm 20 to stop partway, or in other words, the occurrence of a factor that causes a change in the operation of the arm 20 for stopping the arm 20. The host controller data indicating "08h" (stop request data), the arm sensor processor data indicating "04h" (major overweight notification data), the arm sensor processor data indicating "08h" (collision notification data), the effector sensor processor data indicating "03h" (drop notification data), and the effector sensor processor data indicating "09h" (major overweight notification data) also indicate the same or a similar situation. The person detector data indicating "04h" (emergency notification data), the PLC controller data indicating "02h" (pause request data), and the PLC controller data indicating "04h" (stop request data) also indicate the same or a similar situation.

In this embodiment, a pause request provided to the robot controller 600 from the host controller 640 is a factor that causes the arm 20 to stop partway. A stop request provided to the robot controller 600 from the host controller 640 is also a factor that causes the arm 20 to stop partway. An object weight being greatly heavier than an intended value (in other words, major overweight) is also a factor that causes the arm 20 to stop partway. A collision of the robot 2 is also a factor that causes the arm 20 to stop partway. Dropping of an object 10 from the end effector 25 is also a factor that causes the arm 20 to stop partway. Detection of a person near the robot 2 in the person detection area AR2 with the person detector 645 is also a factor that causes the arm 20 to stop partway. A pause request provided to the robot controller 600 from the PLC controller 646 is also a factor that causes the arm 20 to stop partway. A stop request provided to the robot controller 600 from the PLC controller 646 is also a factor that causes the arm 20 to stop partway.

In this example, the identifier data indicating "04h" (identification completion notification data) indicates that a change in the operation without involving stopping is to be performed, or in other words, indicates the occurrence of a factor that causes a change in the operation of the arm 20 without stopping the arm 20 partway through the arm movement operation. A change in the operation without involving stopping is thus to be performed when, for example, the identifier 641 newly identifies the movement end position of the arm 20. In the same or a similar manner, the obstacle detector data indicating "04h" (detection completion notification data) indicates that a change in the operation without involving stopping is to be performed. A change in the operation without involving stopping is thus to be performed when the obstacle detector 642 newly detects an obstacle.

While the controller state is the in-operation monitoring state S2, at least two of the transition condition C22, the transition condition C23, or the transition condition C24 can be satisfied at the same time. In this case, the operation controller 610 causes the transition condition C22 to be satisfied with the highest priority, and causes the transition condition C23 to be satisfied with the second highest priority. Thus, when the transition condition C22 and at least one of the transition condition C23 or the transition condition C24 are satisfied at the same time, for example, the operation controller 610 causes the controller state to transition to the idle state S0. When, for example, the transition condition C23 and the transition condition C24 are satisfied at the same time, the operation controller 610 causes the controller state to transition to the second priority determination state S33.

While the controller state is the in-operation monitoring state S2, the determiner 621 determines that the maintaining condition C21 is satisfied both when each of the host controller data, the identifier data, the obstacle detector data, the arm sensor processor data, the effector sensor processor data, the person detector data, and the PLC controller data indicates "01h" (readiness notification data) and when the communication controller data indicates "02h" (transmission-in-progress notification data). The in-operation monitoring state S2 is thus maintained both when the communicator 68 is transmitting the current generation target operation data 150 and when a factor that causes a change in the operation of the arm 20 has not occurred. In other words, the in-operation monitoring state S2 is maintained when a factor that causes a change in the operation of the arm 20 partway through the arm movement operation has not occurred.

While the controller state is the in-operation monitoring state S2, the determiner 621 determines that the transition condition C22 is satisfied when the communication controller data indicates "01h" (readiness notification data). The controller state thus transitions from the in-operation monitoring state S2 to the idle state S0 when the transmission of the current generation target operation data 150 is complete. In other words, the controller state transitions from the in-operation monitoring state S2 to the idle state S0 when the arm 20 reaches the movement end position.

While the controller state is the in-operation monitoring state S2, the determiner 621 determines that the transition condition C23 is satisfied when the host controller data indicates "04h." The controller state thus transitions from the in-operation monitoring state S2 to the second priority determination state S33 when the host controller 640 provides a pause request to the robot controller 600 during the arm movement operation.

While the controller state is the in-operation monitoring state S2, the determiner 621 determines that the transition condition C23 is satisfied when the host controller data indicates "08h." The controller state thus transitions from the in-operation monitoring state S2 to the second priority determination state S33 when the host controller 640 provides a stop request to the robot controller 600 during the arm movement operation.

While the controller state is the in-operation monitoring state S2, the determiner 621 determines that the transition condition C23 is satisfied when the arm sensor processor data indicates "04h." The controller state thus transitions from the in-operation monitoring state S2 to the second priority determination state S33 when the object weight shows major overweight during the arm movement operation.

While the controller state is the in-operation monitoring state S2, the transition condition C23 is determined to be satisfied when the arm sensor processor data indicates "08h." The controller state thus transitions from the in-operation monitoring state S2 to the second priority determination state S33 when a collision of the robot 2 occurs during the arm movement operation.

While the controller state is the in-operation monitoring state S2, the transition condition C23 is determined to be satisfied when the effector sensor processor data indicates "03h." The controller state thus transitions from the in-operation monitoring state S2 to the second priority determination state S33 when the end effector 25 drops an object 10 during the arm movement operation.

While the controller state is the in-operation monitoring state S2, the determiner 621 determines that the transition condition C23 is satisfied when the person detector data indicates "04h." The controller state thus transitions from the in-operation monitoring state S2 to the second priority determination state S33 when a person is detected near the robot 2 in the person detection area AR2 during the arm movement operation.

While the controller state is the in-operation monitoring state S2, the determiner 621 determines that the transition condition C23 is satisfied when the PLC controller data indicates "02h." The controller state thus transitions from the in-operation monitoring state S2 to the second priority determination state S33 when the PLC controller 646 provides a pause request to the robot controller 600 during the arm movement operation.

While the controller state is the in-operation monitoring state S2, the determiner 621 determines that the transition condition C23 is satisfied when the PLC controller data indicates "04h." The controller state thus transitions from the in-operation monitoring state S2 to the second priority determination state S33 when the PLC controller 646 provides a stop request to the robot controller 600 during the arm movement operation.

While the controller state is the in-operation monitoring state S2, the determiner 621 determines that the transition condition C24 is satisfied when the identifier data indicates "04h." The controller state thus transitions from the in-operation monitoring state S2 to the first priority determination state S30 when the identifier 641 newly identifies the movement end position of the arm 20 during the arm movement operation.

While the controller state is the in-operation monitoring state S2, the determiner 621 determines that the transition condition C24 is satisfied when the obstacle detector data indicates "04h." The controller state thus transitions from the in-operation monitoring state S2 to the first priority determination state S30 when the obstacle detector 642 newly detects an obstacle during the arm movement operation.

Example of Individual Dictionary Data Corresponding to Regeneration Wait State in Regeneration-Related State

While the controller state is the regeneration wait state S31, the selector 622 selects a set of individual dictionary data 730 (also referred to as individual dictionary data 730f) corresponding to the regeneration wait state S31 from the multiple sets of individual dictionary data 730 in the storage 65, and outputs the selected set of individual dictionary data 730 to the determiner 621. The individual dictionary data 730f indicates conditions for satisfying the maintaining condition C31, conditions for satisfying the transition condition C32, and conditions for satisfying the transition condition C33.

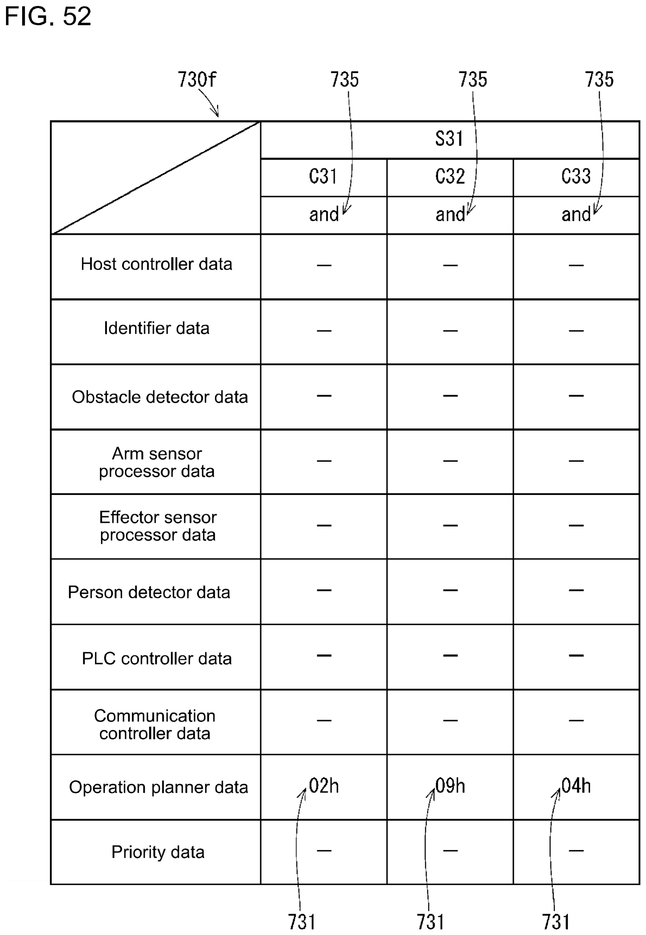

As shown in FIG. 52, the relational data 735 for the maintaining condition C31 indicates "and." For the maintaining condition C31, the operation planner data is the relevant determination target data. The specific data 731 for the operation planner data for the maintaining condition C31 is "02h."

The relational data 735 for the transition condition C32 indicates "and." For the transition condition C32, the operation planner data is the relevant determination target data. The specific data 731 for the operation planner data for the transition condition C32 is "09h."

The relational data 735 for the transition condition C33 indicates "and." For the transition condition C33, the operation planner data is the relevant determination target data. The specific data 731 for the operation planner data for the transition condition C33 is "04h."

While the controller state is the regeneration wait state S31, the determiner 621 determines that the maintaining condition C31 is satisfied when the operation planner data indicates "02h" (setting-in-progress notification data). The regeneration wait state S31 is thus maintained when the operation planner 648 is performing the target operation generation process of regenerating a target operation for the arm 20.

While the controller state is the generation wait state S31, the determiner 621 determines that the transition condition C32 is satisfied when the operation planner data indicates "09h" (setting failure data). The controller state thus transitions from the regeneration wait state S31 to the error correction state S99 in response to a failure of the regeneration of a target operation for the arm 20 in the target operation generation process.

While the controller state is the regeneration wait state S31, the determiner 621 determines that the transition condition C33 is satisfied when the operation planner data indicates "04h" (setting success notification data). The controller state thus transitions from the regeneration wait state S31 to the write state S32 when the target operation generation process is complete upon successful regeneration of a target operation for the arm 20 in the target operation generation process.

Example of Individual Dictionary Data Corresponding to Write State in Regeneration-Related State

While the controller state is the write state S32, the selector 622 selects a set of individual dictionary data 730 (also referred to as individual dictionary data 730g) corresponding to the write state S32 from the multiple sets of individual dictionary data 730 in the storage 65, and outputs the selected set of individual dictionary data 730 to the determiner 621. The individual dictionary data 730g indicates conditions for satisfying the transition condition C35 and conditions for satisfying the maintaining condition C36.

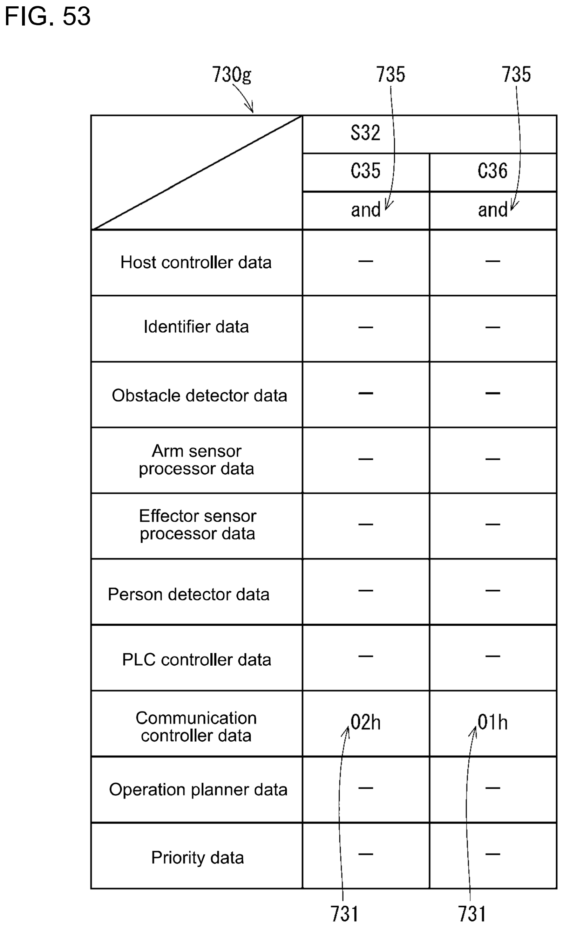

As shown in FIG. 53, the relational data 735 for the transition condition C35 indicates "and." For the transition condition C35, the communication controller data is the relevant determination target data. The specific data 731 for the communication controller data for the transition condition C35 is "02h."

The relational data 735 for the maintaining condition C36 indicates "and." For the maintaining condition C36, the communication controller data is the relevant determination target data. The specific data 731 for the communication controller data for the maintaining condition C36 is "01h."

While the controller state is the write state S32, the determiner 621 determines that the transition condition C35 is satisfied when the communication controller data indicates "02h" (transmission-in-progress notification data). The controller state thus transitions from the write state S32 to the in-operation monitoring state S2 both when a factor that causes the arm 20 to stop partway has not occurred and when the communicator 68 has started transmitting the generation target operation data 150.

While the controller state is the write state S32, the determiner 621 determines that the maintaining condition C36 is satisfied when the communication controller data indicates "01h" (readiness notification data). The write state S32 is thus maintained both when a factor that causes the arm 20 to stop partway has not occurred and when the communicator 68 has not started transmitting the generation target operation data 150. Example of Individual Dictionary Data Corresponding to Stop Wait State in Stop-Related State

While the controller state is the stop wait state S40, the selector 622 selects a set of individual dictionary data 730 (also referred to as individual dictionary data 730h) corresponding to the stop wait state S40 from the multiple sets of individual dictionary data 730 in the storage 65, and outputs the selected set of individual dictionary data 730 to the determiner 621. The individual dictionary data 730h indicates conditions for satisfying the maintaining condition C41, conditions for satisfying the transition condition C42, and conditions for satisfying the transition condition C43.

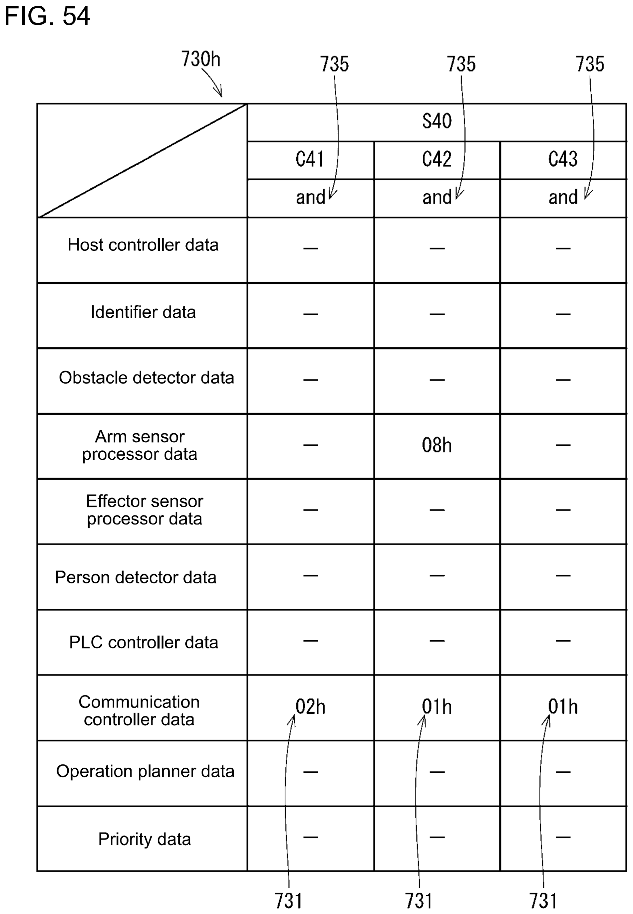

As shown in FIG. 54, the relational data 735 for the maintaining condition C41 indicates "and." For the transition condition C14, the communication controller data is the relevant determination target data. The specific data for the communication controller data for the maintaining condition C41 is "02h."

The relational data 735 for the transition condition C42 indicates "and." For the transition condition C43, the arm sensor processor data and the communication controller data are each the relevant determination target data. The specific data 731 for the arm sensor processor data for the transition condition C42 is "08h." The specific data 731 for the communication controller data for the transition condition C42 is "01h."

The relational data 735 for the transition condition C43 indicates "and." For the transition condition C43, the communication controller data is the relevant determination target data. The specific data 731 for the communication controller data for the transition condition C44 is "01h."

While the controller state is the stop wait state S40, the transition condition C42 and the transition condition C43 can be satisfied at the same time. In this case, the operation controller 610 prioritizes the satisfaction of the transition condition C42. Thus, when the transition condition C42 and the transition condition C43 are satisfied at the same time, the operation controller 610 causes the controller state to transition to the destination determination state S50.

While the controller state is the stop wait state S40, the determiner 621 determines that the maintaining condition C41 is satisfied when the communication controller data indicates "02h" (transmission-in-progress notification data). The stop wait state S40 is thus maintained when the communicator 68 is transmitting the second regeneration target operation data.

While the controller state is the stop wait state S40, the determiner 621 determines that the transition condition C42 is satisfied both when the arm sensor processor data indicates "08h" (collision notification data) and when the communication controller data indicates "01h" (readiness notification data). The controller state thus transitions from the stop wait state S40 to the destination determination state S50 both when a collision of the robot 2 occurs as a factor that causes the arm 20 to stop partway and when the communicator 68 has completed the transmission of the second regeneration target operation data 150. In other words, the controller state transitions from the stop wait state S40 to the destination determination state S50 when a collision of the robot 2 occurs as a factor that causes the arm 20 to stop partway and the arm 20 stops at the intermediate stop position.

While the controller state is the stop wait state S40, the determiner 621 determines that the transition condition C43 is satisfied when the communication controller data indicates "01h" (readiness notification data). The controller state thus transitions from the stop wait state S40 to the condition satisfaction wait state S46 both when a factor other than a collision of the robot 2 that causes the arm 20 to stop partway occurs and when the communicator 68 has completed the transmission of the second regeneration target operation data. In other words, the controller state transitions from the stop wait state S40 to the condition satisfaction wait state S46 when a factor other than a collision of the robot 2 that causes the arm 20 to stop partway occurs and the arm 20 stops at the intermediate stop position.

Example of Individual Dictionary Data Corresponding to Condition Satisfaction Wait State in Stop-Related State

While the controller state is the condition satisfaction wait state S41, the selector 622 selects a set of individual dictionary data 730 (also referred to as individual dictionary data 730i) corresponding to the condition satisfaction wait state S41 from the multiple sets of individual dictionary data 730 in the storage 65, and outputs the selected set of individual dictionary data 730 to the determiner 621. The individual dictionary data 730i indicates conditions for satisfying the transition condition C44, conditions for satisfying the transition condition C45, and conditions for satisfying the maintaining condition C46.

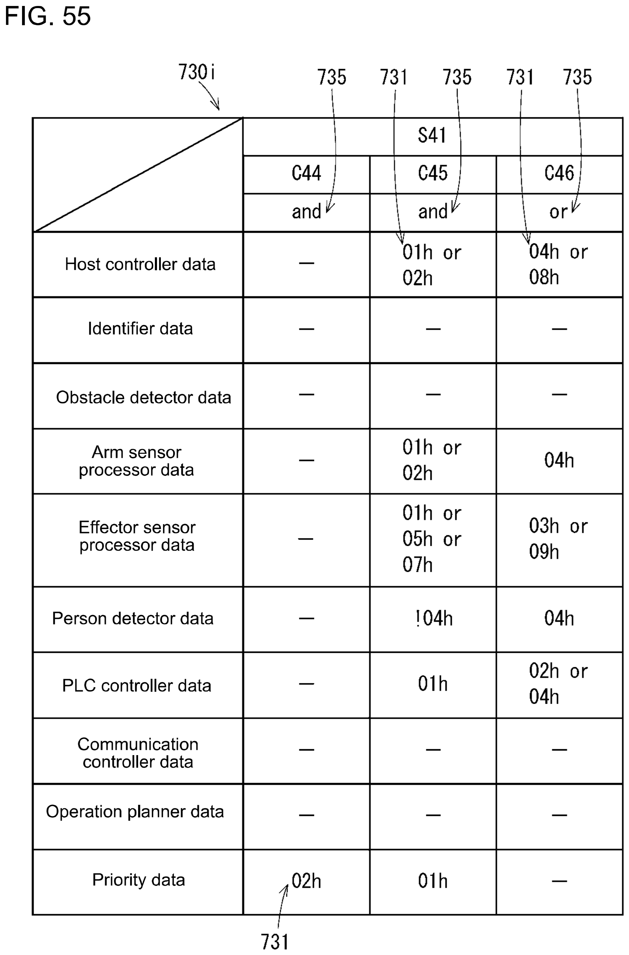

As shown in FIG. 55, the relational data 735 for the transition condition C44 indicates "and." For the transition condition C44, the priority data alone is the relevant determination target data. The specific data 731 for the safety data for the transition condition C44 is "02h."

The relational data 735 for the transition condition C45 indicates "and." For the transition condition C45, the host controller data, the arm sensor processor data, the effector sensor processor data, the person detector data, the PLC controller data, and the priority data are each the relevant determination target data. The specific data 731 for the host controller data for the transition condition C45 is "01h" or "02h." The specific data 731 for the arm sensor processor data for the transition condition C45 is "01h" or "02h." The specific data 731 for the effector sensor processor data for the transition condition C45 is "01h," "05h," or "07h." The specific data 731 for the person detector data for the transition condition C45 is any data other than "04h." The specific data 731 for the PLC controller data for the transition condition C45 is "01h." The specific data 731 for the priority data for the transition condition C45 is "01h."

The relational data 735 for the maintaining condition C46 indicates "or." For the maintaining condition C46, the host controller data, the arm sensor processor data, the effector sensor processor data, the person detector data, and the PLC controller data are each the relevant determination target data. The specific data 731 for the host controller data for the maintaining condition C46 is "04h" or "08h." The specific data 731 for the arm sensor processor data for the maintaining condition C46 is "04h." The specific data 731 for the effector sensor processor data for the maintaining condition C46 is "03h" or "09h." The specific data 731 for the person detector data for the maintaining condition C46 is "04h." The specific data 731 for the PLC controller data for the maintaining condition C46 is "02h" or "04h."

While the controller state is the condition satisfaction wait state S41, the transition condition C44 and the maintaining condition C46 can be satisfied at the same time. In this case, the operation controller 610 prioritizes the satisfaction of the transition condition C44. Thus, when the transition condition C44 and the maintaining condition C46 are satisfied at the same time, the operation controller 610 causes the controller state to transition to the idle state S0.

While the controller state is the condition satisfaction wait state S41, the determiner 621 determines that the transition condition C44 is satisfied when the priority data indicates "02h." The controller state thus transitions from the condition satisfaction wait state to the idle state S0 when the priority data 700 indicates that the safety associated with the robot 2 is to be prioritized.

While the controller state is the condition satisfaction wait state S41, the determiner 621 determines that the transition condition C45 is satisfied when the priority data indicates "01h," the host controller data indicates "01h" or "02h," the arm sensor processor data indicates "01h" or "02h," the effector sensor processor data indicates "01h," "05h," or "07h," the person detector data indicates data other than "04h," and the PLC controller data indicates "01h." The controller state thus transitions from the condition satisfaction wait state to the generation wait state S10 when the operation of the robot 2 is to be prioritized and a factor that causes the arm 20 to stop partway is removed.

While the controller state is the condition satisfaction wait state S41, the determiner 621 determines that the maintaining condition C46 is satisfied when the host controller data indicates "04h." The determiner 621 also determines that the maintaining condition C46 is satisfied when the host controller data indicates "08h." The determiner 621 also determines that the maintaining condition C46 is satisfied when the arm sensor processor data indicates "04h." The determiner 621 also determines that the maintaining condition C46 is satisfied when the effector sensor processor data indicates "03h." The determiner 621 also determines that the maintaining condition C46 is satisfied when the effector sensor processor data indicates "09h." The determiner 621 also determines that the maintaining condition C46 is satisfied when the person detector data indicates "04h." The determiner 621 also determines that the maintaining condition C46 is satisfied when the PLC controller data indicates "02h." The determiner 621 also determines that the maintaining condition C46 is satisfied when the PLC controller data indicates "04h."

As described above, the host controller data indicating "04h" is a factor that causes the arm 20 to stop partway. Factors that cause the arm 20 to stop partway also include the host controller data indicating "08h," the arm sensor processor data indicating "04h," the effector sensor processor data indicating "03h" or "09h," the person detector data indicating "04h," and the PLC controller data indicating "02h" or "04h." The condition wait state S41 is thus maintained when the operation of the robot 2 is to be prioritized and a factor that causes the arm 20 to stop partway occurs.

As described above, the controller state transitions from the stop wait state S40 to the condition satisfaction wait state S41 when the arm 20 stops at the intermediate stop position. In other words, the robot controller 600 refers to the priority data in the storage 65 in response to the arm 20 stopping at the intermediate stop position.

As described above, the controller state transitions from the condition satisfaction wait state to the generation wait state S10 both when the priority data indicates that the operation of the robot 2 is to be prioritized and when a factor that causes the arm 20 to stop is removed. When the controller state transitions to the generation wait state S 10, the operation controller 610 updates the permissibility data in the storage 65 to indicate permitted generation to instruct the operation planner 648 to generate a target operation for the arm 20 to move from the intermediate stop position. Thus, both when the priority data indicates that the operation of the robot 2 is to be prioritized and when a factor that causes the arm 20 to stop is removed, the robot controller 600 may update the permissibility data in the storage to indicate permitted generation to instruct the operation planner 648 to generate a target operation for the arm to move from the intermediate stop position. In contrast, when the priority data indicates that the safety associated with the robot 2 is to be prioritized, the robot controller 600 does not update the permissibility data in the storage 65.

Example of Individual Dictionary Data Corresponding to Generation Wait State in Collision Mitigation-Related State

While the controller state is the generation wait state S51, the selector 622 selects a set of individual dictionary data 730 (also referred to as individual dictionary data 730j) corresponding to the generation wait state S51 from the multiple sets of individual dictionary data 730 in the storage 65, and outputs the selected set of individual dictionary data 730 to the determiner 621. The individual dictionary data 730j indicates conditions for satisfying the maintaining condition C51, conditions for satisfying the transition condition C52, and conditions for satisfying the transition condition C53.

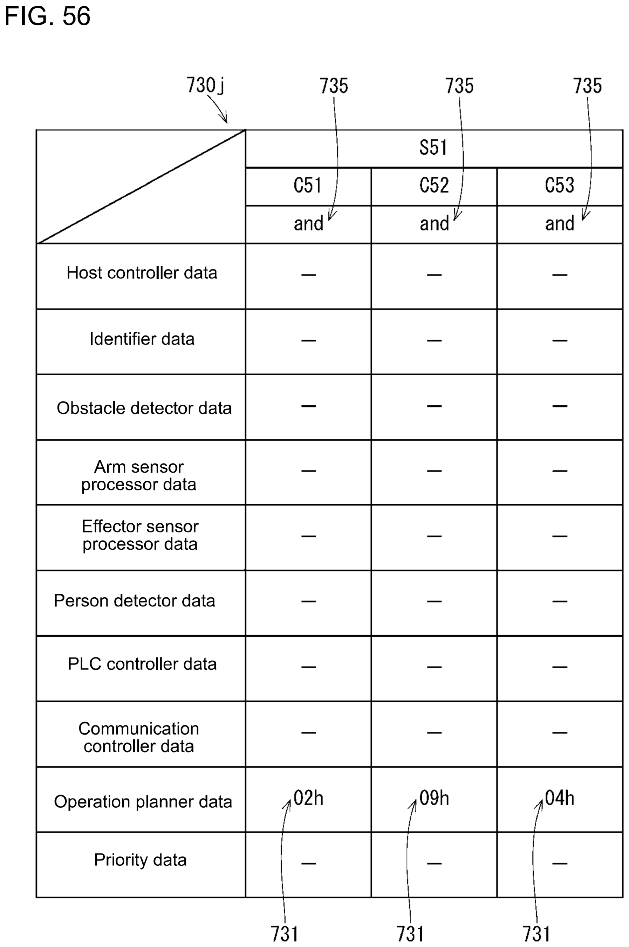

As shown in FIG. 56, the relational data 735 for the maintaining condition C51 indicates "and." For the maintaining condition C51, the operation planner data is the relevant determination target data. The specific data 731 for the operation planner data for the maintaining condition C51 is "02h."

The relational data 735 for the transition condition C52 indicates "and." For the transition condition C52, the operation planner data is the relevant determination target data. The specific data 731 for the operation planner data for the transition condition C52 is "09h."

The relational data 735 for the transition condition C53 indicates "and." For the transition condition C53, the operation planner data is the relevant determination target data. The specific data 731 for the operation planner data for the transition condition C53 is "04h."

While the controller state is the generation wait state S51, the determiner 621 determines that the maintaining condition C51 is satisfied when the operation planner data indicates "02h" (setting-in-progress notification data). The generation wait state S51 is thus maintained when the operation planner 648 is performing the target operation generation process of generating a target operation for the arm 20 to move from the intermediate stop position to the mitigation destination.

While the controller state is the generation wait state S51, the determiner 621 determines that the transition condition C52 is satisfied when the operation planner data indicates "09h" (setting failure data). The controller state thus transitions from the generation wait state S51 to the idle state S0 in response to a failure of the generation of a target operation for the arm 20 to move to the mitigation destination in the target operation generation process.

While the controller state is the generation wait state S51, the determiner 621 determines that the transition condition C53 is satisfied when the operation planner data indicates "04h" (setting success notification data). The controller state thus transitions from the generation wait state S51 to the write state S52 when the target operation generation process is complete upon successful generation of a target operation for the arm 20 to move to the mitigation destination in the target operation generation process.

Example of Individual Dictionary Data Corresponding to Write State in Collision Mitigation-Related State

While the controller state is the write state S52, the selector 622 selects a set of individual dictionary data 730 (also referred to as individual dictionary data 730k) corresponding to the write state S52 from the multiple sets of individual dictionary data 730 in the storage 65, and outputs the selected set of individual dictionary data 730 to the determiner 621. The individual dictionary data 730k indicates conditions for satisfying the transition condition C54 and conditions for satisfying the maintaining condition C55.

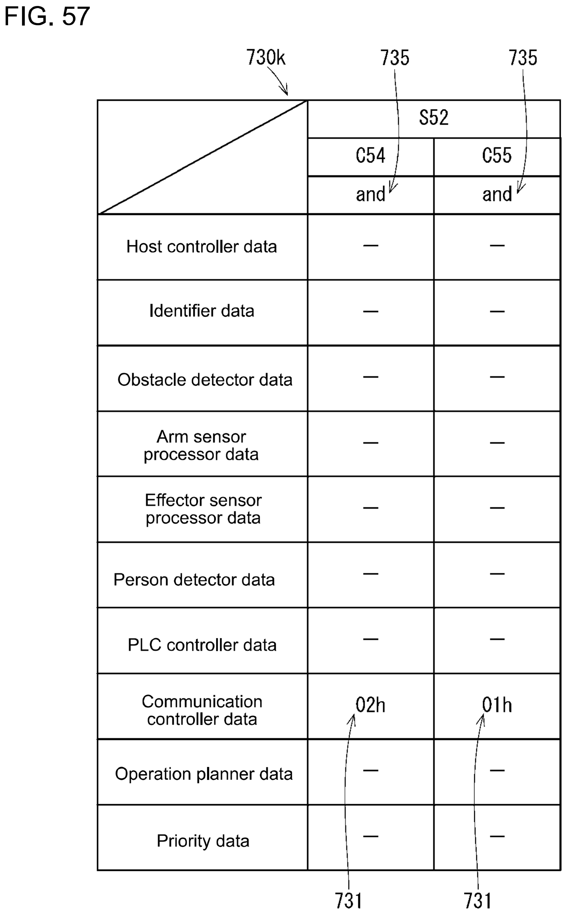

As shown in FIG. 57, the relational data 735 for the transition condition C54 indicates "and." For the transition condition C54, the communication controller data is the relevant determination target data. The specific data 731 for the communication controller data for the transition condition C54 is "02h."

The relational data 735 for the maintaining condition C55 indicates "and." For the maintaining condition C55, the communication controller data is the relevant determination target data. The specific data 731 for the communication controller data for the maintaining condition C55 is "01h."

While the controller state is the write state S52, the determiner 621 determines that the transition condition C54 is satisfied when the communication controller data indicates "02h" (transmission-in-progress notification data). The controller state thus transitions from the write state S52 to the mitigation wait state S53 when the communicator 68 starts transmitting the generation target operation data 150. In other words, the controller state transitions from the write state S52 to the mitigation wait state S53 when the arm 20 resumes moving to start the mitigation of a collision of the robot 2. In contrast, when the communication controller data indicates "01h" (readiness notification data), the determiner 621 determines that the maintaining condition C55 is satisfied. The write state S52 is thus maintained when the communicator 68 has not started transmitting the generation target operation data 150. In other words, the write state S52 is maintained when the mitigation of a collision of the robot 2 has not started.

Example of Individual Dictionary Data Corresponding to Mitigation Wait State in Collision Mitigation-Related State

While the controller state is the mitigation wait state S53, the selector 622 selects a set of individual dictionary data 730 (also referred to as individual dictionary data 7301) corresponding to the mitigation wait state S53 from the multiple sets of individual dictionary data 730 in the storage 65, and outputs the selected set of individual dictionary data 730 to the determiner 621. The individual dictionary data 7301 indicates conditions for satisfying the maintaining condition C56 and conditions for satisfying the transition condition C57.

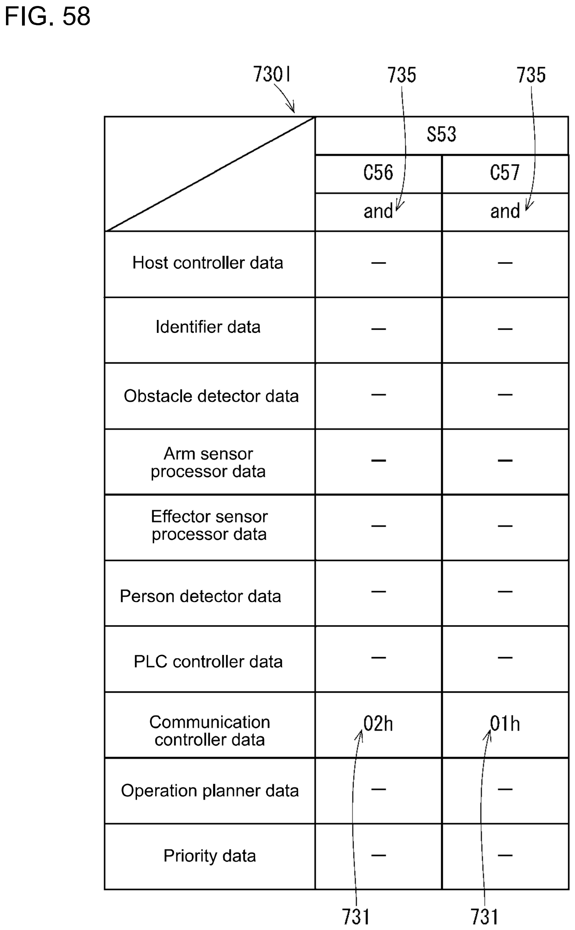

As shown in FIG. 58, the relational data 735 for the maintaining condition C56 indicates "and." For the maintaining condition C56, the communication controller data is the relevant determination target data. The specific data 731 for the communication controller data for the maintaining condition C56 is "02h."

The relational data 735 for the transition condition C57 indicates "and." For the transition condition C57, the communication controller data is the relevant determination target data. The specific data 731 for the communication controller data for the transition condition C57 is "01h."

While the controller state is the mitigation wait state S56, the determiner 621 determines that the maintaining condition C56 is satisfied when the communication controller data indicates "02h" (transmission-in-progress notification data). The mitigation wait state S53 is thus maintained when the communicator 68 is transmitting the generation target operation data 150. In other words, the mitigation wait state S53 is maintained when the mitigation of a collision of the robot 2 is being performed. In contrast, when the communication controller data indicates "01h" (readiness notification data), the determiner 621 determines that the transition condition C57 is satisfied. The controller state thus transitions from the mitigation wait state S53 to the idle state S0 when the communicator 68 ends the transmission of the generation target operation data 150. In other words, the controller state transitions from the mitigation wait state S53 to the idle state S0 when the mitigation of a collision of the robot 2 is complete and the arm 20 stops at the mitigation destination.

As described above, the dictionary data 710 is the data for deriving, from multiple pieces of determination data, control information indicating whether the state conditions C are satisfied. The control information is used to control the robot 2. The robot controller 600 controls the robot 2 based on the multiple pieces of determination data and the dictionary data 710. For the robot 2 that is controlled based on the dictionary data 710 in this manner, the behavior of the robot 2 can be changed by correcting the dictionary data 710 when the control-related processors are increased, decreased, or changed. This facilitates changes in the behavior of the robot 2 when the control-related processors are increased, decreased, or changed.

Other Examples of Control System

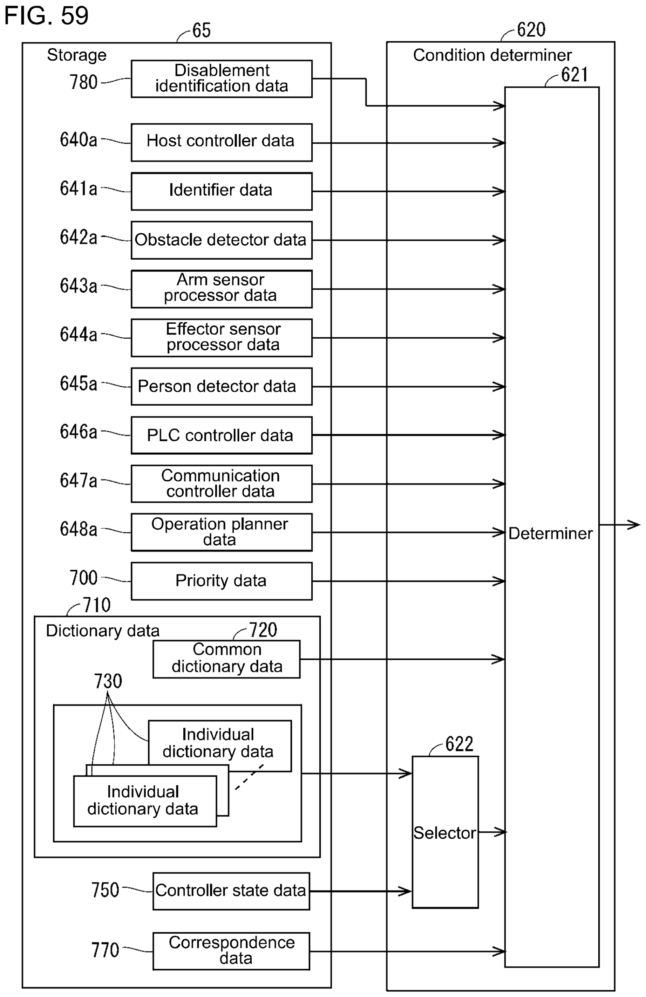

As illustrated in FIG. 59, the storage 65 may store disablement identification data 780 for identifying a target item to be disabled from the items of the multiple pieces of determination data indicated by the dictionary data 710. The disablement identification data 780 is input through, for example, the input unit 67 into the host controller 640, which then writes the disablement identification data 780 into the storage 65.

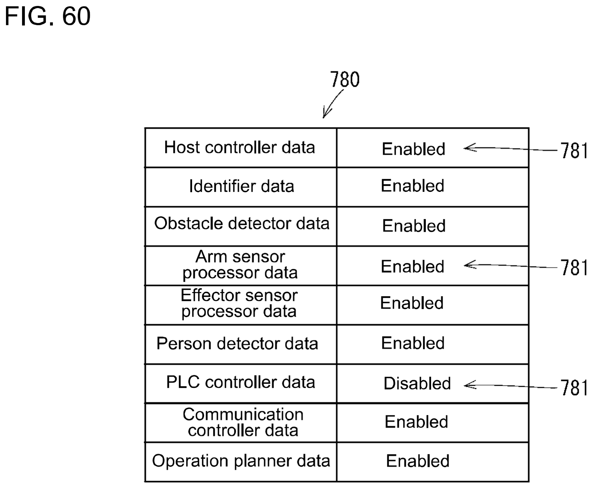

FIG. 60 is a table showing an example of the disablement identification data 780. As shown in FIG. 60, the disablement identification data 780 includes enablement-disablement information 781 indicating whether an item of determination data is to be enabled or disabled for each of the multiple pieces of determination data. The determiner 621 disables the item of determination data (in other words, the target item) in the dictionary data 710 indicated as being disabled in the disablement identification data 780. In other words, the determiner 621 determines whether each of the state conditions C is satisfied without reflecting the item of determination data in the dictionary data 710 indicated as being disabled in the disablement identification data 780.

In the example in FIG. 60, the item of the PLC controller data is disabled. In this case, the determiner 621 determines whether each of the state conditions C is satisfied without reflecting the item of the PLC control data in the dictionary data 710. For example, the determiner 621 may determine whether the maintaining condition C21 is satisfied based on the individual dictionary data 730e (refer to FIG. 51) while the controller state is the in-operation monitoring state S2. In this case, the determiner 621 determines that the maintaining condition C21 is satisfied when each of the host controller data, the identifier data, the obstacle detector data, the arm sensor processor data, the effector sensor processor data, and the person detector data indicates "01h" and the communication controller data indicates "02h," without reflecting the item of the PLC control data, or in other words, without using the PLC control data as the relevant determination target data.

When one of the pieces of determination data output from the multiple control-related processors is not used to determine whether a state condition C is satisfied, the disablement identification data 780 stored in the storage 65 can be updated accordingly without changing the dictionary data 710. When a module malfunctions during a task, the disablement identification data 780 allows the operation of the robot 2 to be changed based on the states of the other modules, without being based on the state of the malfunctioning module. Note that the item to be disabled may be other than the PLC controller data.

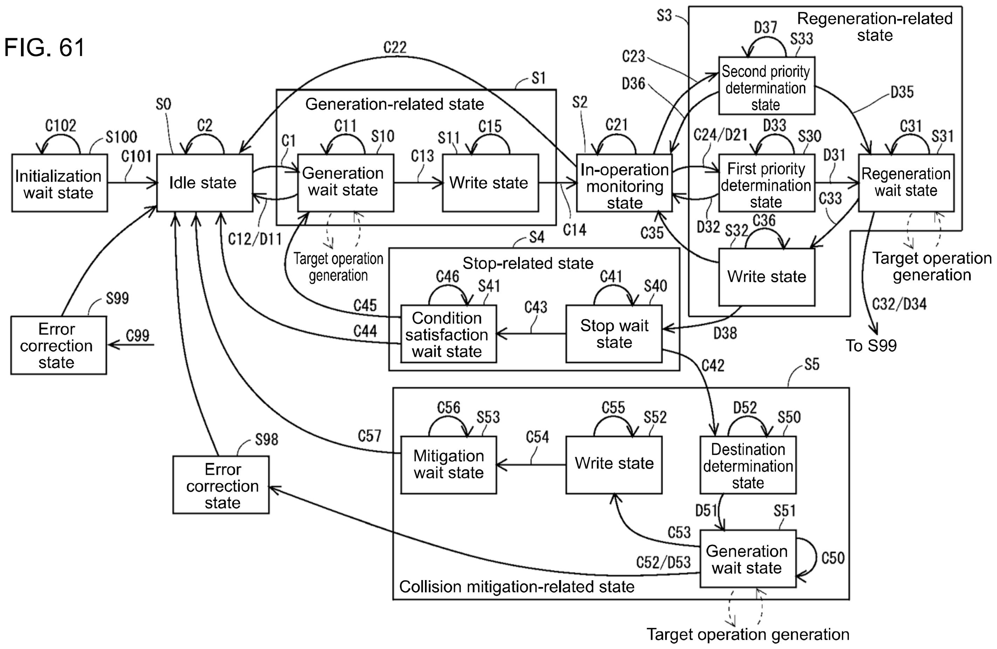

When the transition condition C52 or the transition condition D53 is satisfied while the controller state is the generation wait state S51 in the collision mitigation-related state S5, the controller state may transition to an error correction state S98 to perform the error correction process described above as illustrate in FIG. 61. In this case, the operation controller 610 may cause the controller state to transition from the error correction state S98 to the idle state S0 after performing the error correction process in the error correction state S98.

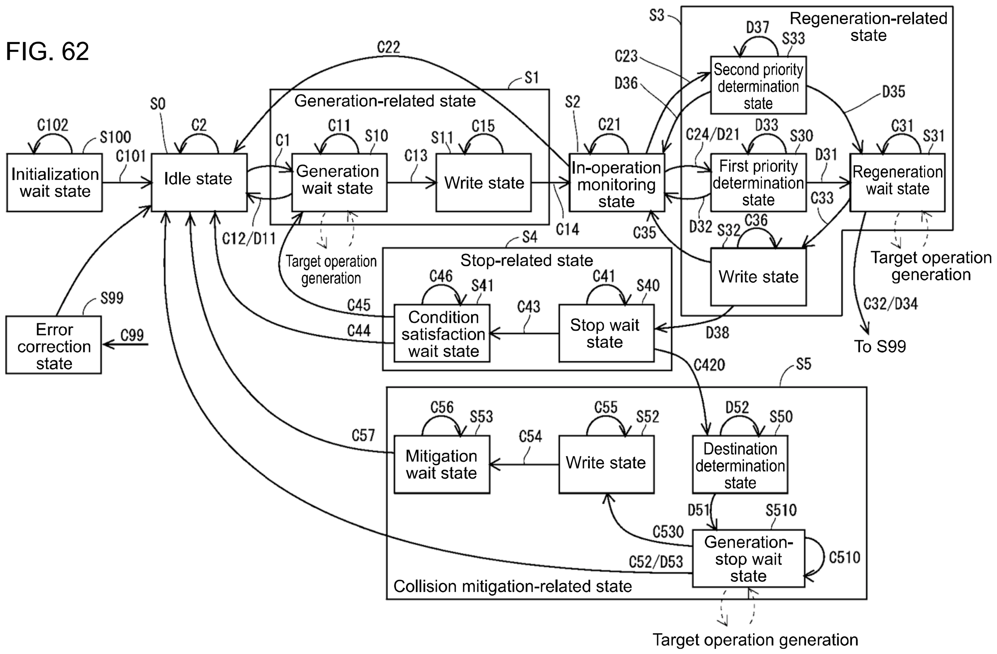

In the above example, the controller state transitions to the destination determination state S50 after the arm 20 stops at the intermediate stop position in response to a collision of the robot 2. However, the controller state may transition to the destination determination state S50 immediately after the arm 20 starts moving toward the intermediate stop position. FIG. 62 is a block diagram illustrating example multiple states of the operation controller 610 in this case.

In the example in FIG. 62, the operation controller 610 has a generation-stop wait state S510 in place of the generation wait state S51. The generation-stop wait state S510 is a wait state for the operation planner 648 to complete the generation of a target operation for the arm 20 to move from the intermediate stop position to the mitigation destination and is a wait state for the arm 20 to stop at the intermediate stop position.

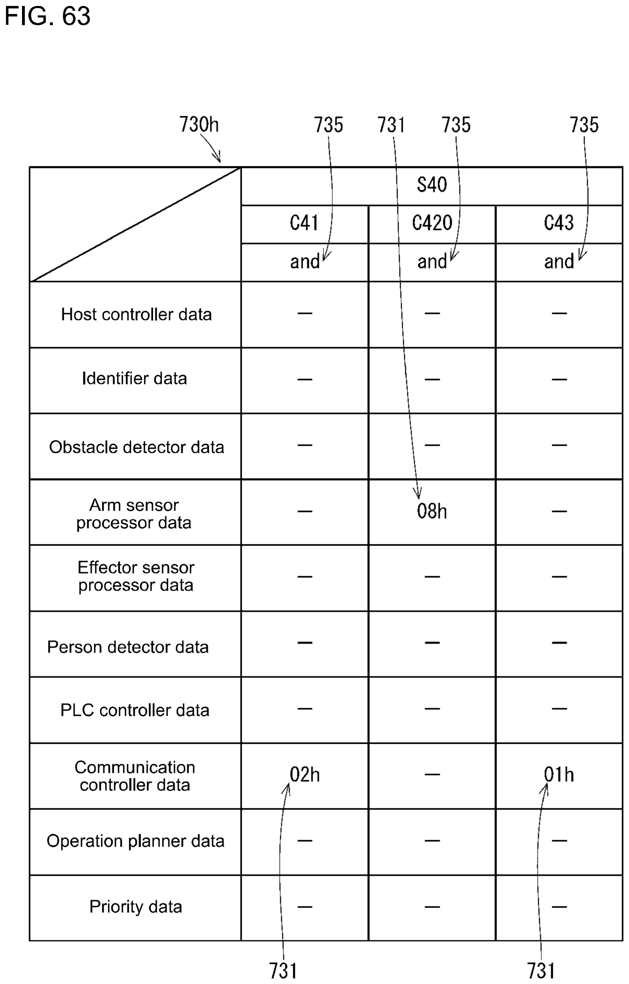

In the example in FIG. 62, the determination is performed for a transition condition 420, in place of the transition condition 42, while the controller state is the stop wait state S40. FIG. 63 is a table showing an example of the individual dictionary data 730h corresponding to the stop wait state S40 in this example. As shown in FIG. 63, the relational data 735 for the transition condition C420 indicates "and." For the transition condition C420, the arm sensor processor data is the relevant determination target data. The specific data 731 for the arm sensor processor data for the transition condition C420 is "08h."

In the example in FIG. 63, the transition condition C420 and either the maintaining condition C41 or the transition condition C43 can be satisfied at the same time. In this case, the operation controller 610 prioritizes the satisfaction of the transition condition C420. Thus, when the transition condition C420 and the maintaining condition C41 are satisfied at the same time, the operation controller 610 causes the controller state to transition to the destination determination state S50. When the transition condition C420 and the transition condition C43 are satisfied at the same time, the operation controller 610 causes the controller state to transition to the destination determination state S50.

While the controller state is the stop wait state S40, the determiner 621 determines that the transition condition C420 is satisfied when the arm sensor processor data indicates "08h" (collision notification data). The controller state thus transitions from the stop wait state S40 to the destination determination state S50 both when a collision of the robot 2 occurs and when the communicator 68 starts transmitting the second regeneration target operation data 150. In other words, the controller state transitions from the stop wait state S40 to the destination determination state S50 when a collision of the robot 2 occurs and the arm 20 starts moving toward the intermediate stop position.

While the controller state is the destination determination state S50, the controller state transitions from the destination determination state to the generation-stop wait state S510 when the mitigation destination is determined. The state conditions to be determined while the controller state is the generation-stop wait state S510 include the transition conditions C52 and D53 described above, the transition condition 530, and the maintaining condition 510.

While the controller state is the generation-stop wait state S510, the selector 622 selects a set of individual dictionary data 730 (also referred to as individual dictionary data 730m) corresponding to the generation-stop wait state S510 from the multiple sets of individual dictionary data 730 in the storage 65, and outputs the selected set of individual dictionary data 730 to the determiner 621. The individual dictionary data 730m indicates conditions for satisfying the maintaining condition C510, conditions for satisfying the transition condition C52, and conditions for satisfying the transition condition C530.

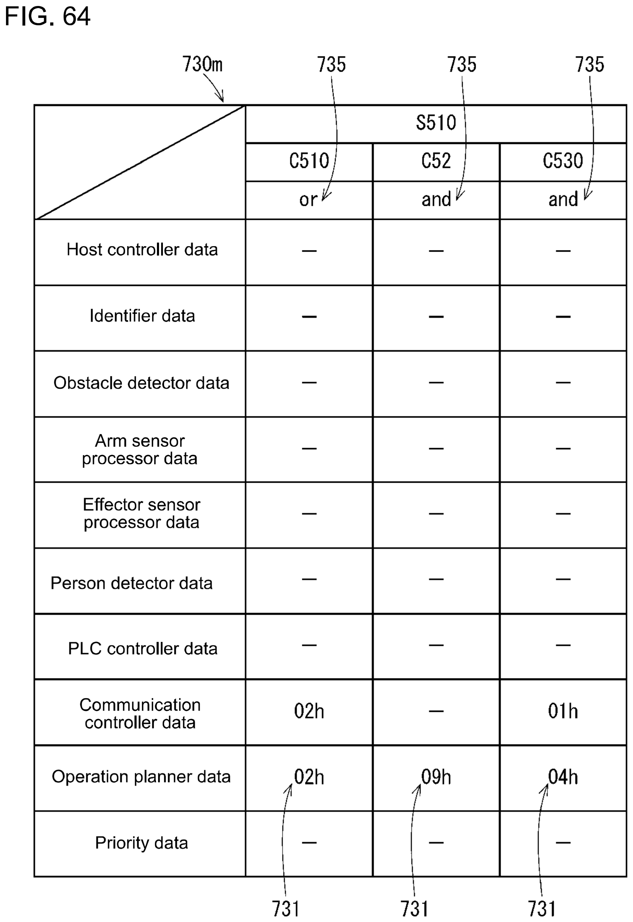

FIG. 64 is a table showing an example of the individual dictionary data 730m. As shown in FIG. 64, the relational data 735 for the maintaining condition C510 indicates "or." For the maintaining condition C510, the communication controller data and the operation planner data are each the relevant determination target data. The specific data 731 for the communication controller data for the maintaining condition C510 is "02h." The specific data 731 for the operation planner data for the maintaining condition C510 is "02h."

The relational data 735 for the transition condition C530 indicates "and." For the transition condition 530, the communication controller data and the operation planner data are each the relevant determination target data. The specific data 731 for the communication controller data for the transition condition C530 is "01h." The specific data 731 for the operation planner data for the transition condition C530 is "04h."

In the example in FIG. 64, the maintaining condition C510 and the transition condition C52 can be satisfied at the same time. In this case, the operation controller 610 prioritizes the satisfaction of the maintaining condition C510. Thus, when the maintaining condition C510 and the transition condition C52 are satisfied at the same time, the operation controller 610 maintains the generation-stop wait state S510.

While the controller state is the generation-stop wait state S510, the determiner 621 determines that the maintaining condition C510 is satisfied when the operation planner data indicates "02h" (setting-in-progress notification data). The determiner 621 also determines that the maintaining condition C510 is satisfied when the communication controller data indicates "02h" (transmission-in-progress notification data). The generation-stop wait state S510 is thus maintained when the operation planner 648 is performing the target operation generation process of generating a target operation for the arm 20 to move from the intermediate stop position to the mitigation destination or when the arm 20 is moving toward the intermediate stop position. In other words, the maintaining condition C510 is satisfied at least when the target operation generation process is being performed or when the communicator 68 is transmitting the second regeneration target operation data.

While the controller state is the generation-stop wait state S510, the determiner 621 determines that the transition condition C530 is satisfied both when the communication controller data indicates "01h" (readiness notification data) and when the operation planner data indicates "04h" (setting success notification data). The controller state thus transitions from the generation-stop wait state S510 to the write state S52 both when the target operation generation process is complete upon successful generation of a target operation for the arm 20 to move to the mitigation destination in the target operation generation process and when the arm 20 stops at the intermediate stop position. In other words, the transition condition C530 is satisfied both when the target operation generation process is complete upon successful generation of a target operation for the arm 20 to move to the mitigation destination and when the communicator 68 has completed the transmission of the second regeneration target operation data.

Note that, in the example in FIG. 62, the controller state may transition from the generation-stop wait state S510 to the error correction state S98 when the transition condition C52 or the transition condition D53 is satisfied while the controller state is the generation-stop wait state S510, as in FIG. 61.

In this manner, the process of determining the mitigation destination is started before the arm 20 stops at the intermediate stop position. The mitigation of a collision of the robot 2 can thus start immediately after the arm 20 stops at the intermediate stop position. This improves the safety associated with the robot 2.

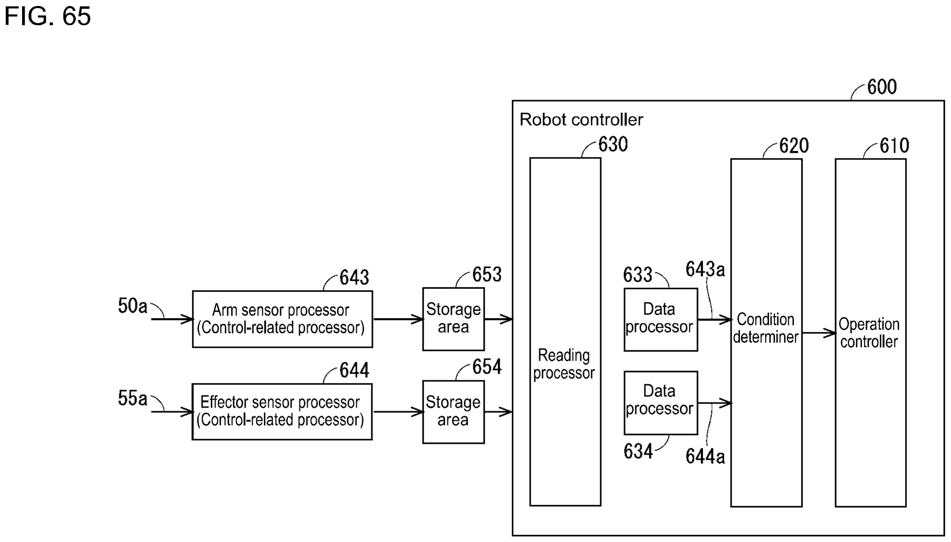

Although the determination data 643a (in other words, the arm sensor processor data 643a) is produced by the arm sensor processor 643 in the above example, the determination data 643a may be produced by the robot controller 600. Although the determination data 644a (in other words, the effector sensor processor data 644a) is produced by the effector sensor processor 644, the determination data 644a may be produced by the robot controller 600. FIG. 65 is a block diagram of the robot controller 600 in this example, illustrating an example structure.

In the example in FIG. 65, the robot controller 600 includes a data processor 633 and a data processor 634. The data processor 633 produces the determination data 643a based on the output data from the arm sensor processor 643. The data processor 634 produces the determination data 644a based on the output data from the effector sensor processor 644.

In the example in FIG. 65, the arm sensor processor 643 writes the arm state detection data 50a into the storage area 653. The process of writing the arm state detection data 50a to be used for controlling the robot 2 into the storage area 653 may correspond to a process for controlling the robot 2 or a process using the detection result obtained by the arm sensor unit 50.

The effector sensor processor 644 writes the effector state detection data 55a into the storage area 654. The process of writing the effector state detection data 55a to be used for controlling the robot 2 into the storage area 654 may correspond to a process for controlling the robot 2 or a process using the detection result obtained by the effector sensor unit 55.

The reading processor 630 reads the arm state detection data 50a and the effector state detection data 55a from the storage areas 653 and 654, and writes the read data into the storage area 669.

The data processor 633 reads the arm state detection data 50a from the storage 65, produces the determination data 643a based on the read arm state detection data 50a, and outputs the determination data 643a to the condition determiner 620. The data processor 634 reads the effector state detection data 55a from the storage 65, produces the determination data 644a based on the read effector state detection data 55a, and outputs the determination data 644a to the condition determiner 620. The condition determiner 620 determines whether each of the state conditions C is satisfied based on the items of the determination data 640a, 641a, 642a, 645a, 647a, and 648a respectively output from the control-related processors 640, 641, 642, 645, 646, 647, and 648, and the items of the determination data 643a and 644a respectively output from the data processors 633 and 634. The state of the operation controller 610 transitions based on the items of the determination data 640a, 641a, 642a, 645a, 647a, and 648a respectively output from the control-related processors 640, 641, 642, 645, 646, 647, and 648, and the items of the determination data 643a and 644a respectively output from the data processors 633 and 634. Each of the data processors 633 and 634 may correspond to a processor that performs the process for controlling the robot 2.

The data processor 633 performs the first weight determination process and the collision determination process described above based on the arm state detection data 50a. In the first weight determination process, the data processor 633 outputs the determination data 643a indicating the minor overweight notification data to the condition determiner 620 when determining that the object weight shows minor overweight. In the first weight determination process, the data processor 633 outputs the determination data 643a indicating the major overweight notification data to the condition determiner 620 when determining that the object weight shows major overweight. In the collision determination process, the data processor 633 outputs the determination data 643a indicating the collision notification data to the condition determiner 620 when determining that a collision of the arm 20 has occurred. When no new arm state detection data 50a is written into the storage 65, the data processor 633 determines that an error has occurred in the arm sensor processor 643 and outputs the determination data 643a indicating the error notification data to the condition determiner 620. When new arm state detection data 50a is written into the storage 65 as appropriate and the minor overweight notification data, the major overweight notification data, the collision notification data, or the error notification data is not output, the data processor 633 determines that the arm sensor processor 643 is ready and outputs the determination data 643a indicating the readiness notification data to the condition determiner 620.

The data processor 634 performs the holding state determination process, the second weight determination process, and the collision determination process described above based on the effector state detection data 55a. In the holding state determination process, the data processor 634 outputs the determination data 644a indicating the drop notification data to the condition determiner 620 when determining that the end effector 25 has dropped an object 10. In the holding state determination process, the data processor 634 outputs the determination data 644a indicating the low contact pressure notification data to the condition determiner 620 when determining that the contact pressure between the end effector 25 and the object 10 is a low contact pressure. In the second weight determination process, the data processor 634 outputs the determination data 644a indicating the minor overweight notification data to the condition determiner 620 when determining that the object weight shows minor overweight. In the second weight determination process, the data processor 634 outputs the determination data 644a indicating the major overweight notification data to the condition determiner 620 when determining that the object weight shows major overweight. When no new effector state detection data 55a is written into the storage 65, the data processor 634 determines that an error has occurred in the effector sensor processor 644 and outputs determination data 644a indicating the error notification data to the condition determiner 620. When new effector state detection data 55a is written into the storage 65 as appropriate and the drop notification data, the low contact pressure notification data, the minor overweight notification data, the major overweight notification data, or the error notification data is not output, the data processor 634 determines that the effector sensor processor 644 is ready and outputs the determination data 644a indicating the readiness notification data to the condition determiner 620.

Although the robot controller 600 includes the reading processor 630, the condition determiner 620, and the operation controller 610 in the above example, the robot controller 600 may include any other components that can control the robot 2 in the same manner as or in a similar manner to the above based on the multiple pieces of determination data. For example, the operation controller 610 may or may not operate as a state machine.

Although the multiple control-related processors and the robot controller 600 operate asynchronously with one another in the above example, two or more of the multiple control-related processors and the robot controller 600 may or may not operate asynchronously with each other. For example, the operation planner 648 alone of the multiple control-related processors and the robot controller 600 may operate asynchronously with each other. When the operation planner 648 and the robot controller 600 operate asynchronously with each other, each of the operation planner 648 and the robot controller 600 is less susceptible to the operation performed by the other. The operation planner 648 and the robot controller 600 can thus be designed or altered easily. This thus allows the control system 6 to be designed or altered easily.

The robotic system and the control system have been described in detail, but the above structures are illustrative in all respects, and the disclosure is not limited to the above structures. The above embodiments may be combined in any manner unless any contradiction arises. Examples other than those illustrated above may also be covered without departing from the scope of the present disclosure.

Although the robotic system includes a robotic arm as the robot in the above example, the robot is not limited to the robotic arm. For example, the robotic system may include an automatic guided vehicle (AGV) or a drone as the robot. In this case, the robot controller that controls the robot, such as the AGV or the drone, cyclically performs the predetermined process. In this case, the drivable portion corresponds to a housing of the AGV or the drone, and the drive corresponds to, for example, wheels or a propeller with a motor. The drivable portion is driven by the drive to perform, for example, a movement operation. The operation planner may generate, for example, the movement path of the AGV or the drone as a target operation. More specifically, for the AGV, the operation planner may calculate a target rotation angle for the wheels. For the drone, the operation planner may calculate a target rotation angular speed for the propeller. In this case, for example, the control-related processors include a camera. When the robot controller determines that the robot is to pause to avoid a collision with a person, for example, the robot controller can write data indicating permission to generate a pause operation into the storage.

The present disclosure provides the structures described below.

In one embodiment, (1) a control system includes a plurality of processors, a storage, and a robot controller. The plurality of processors each performs a process for controlling a robot. The storage stores dictionary data for deriving control information to be used to control the robot from a plurality of pieces of output data output from the plurality of respective processors. The robot controller derives the control information from the plurality of pieces of output data and the dictionary data, and controls the robot based on the control information.

(2) In the control system according to (1), the robot controller includes an operation controller and a condition determiner. The operation controller controls an operation of a drivable portion of the robot. The operation controller is operable as a state machine having a state to transition based on items of the plurality of pieces of output data. The condition determiner determines, based on the items of the plurality of pieces of output data, whether a maintaining condition or a transition condition is satisfied for the state of the operation controller. The operation controller transitions from one state to another state based on a determination result obtained by the condition determiner. The dictionary data indicates the maintaining condition and the transition condition. The condition determiner determines whether the maintaining condition or the transition condition is satisfied based on the items of the plurality of pieces of output data and the dictionary data.

(3) In the control system according to (2), the storage stores disablement identification data for identifying a target item to be disabled from the items of the plurality of pieces of output data included in the dictionary data. The condition determiner disables the target item identified in the dictionary data based on the disablement identification data to determine whether the maintaining condition or the transition condition is satisfied based on the dictionary data.

(4) In the control system according to (2) or (3), the dictionary data includes a plurality of sets of individual dictionary data respectively corresponding to a plurality of states of the operation controller. Each of the plurality of sets of individual dictionary data indicates a condition for satisfying each of the maintaining condition and the transition condition for a state corresponding to the set of individual dictionary data. The condition determiner selects, from the plurality of sets of individual dictionary data, a set of individual dictionary data corresponding to a current state of the operation controller, and determines, based on the selected set of individual dictionary data, whether the maintaining condition or the transition condition is satisfied for the current state.

(5) In the control system according to (4), the dictionary data includes common dictionary data common to the plurality of states. The common dictionary data indicates a condition for satisfying a transition condition for a transition to a state other than the plurality of states. The operation controller determines, for each of the plurality of states, whether the transition condition for a transition to the other state is satisfied based on the common dictionary data.

(6) In the control system according to any one of (2) to (5), the plurality of processors includes an operation planner and a communication controller. The operation planner generates a target operation for the drivable portion. The communication controller controls a communicator that transmits data to a drive controller that controls the drivable portion. The operation controller has a regeneration-related state being set during the operation of the drivable portion. The regeneration-related state is a state in which the operation controller instructs the operation planner to regenerate a target operation to be performed by the drivable portion from a specific time in a future during the operation of the drivable portion and in which the operation controller instructs the communication controller to control the communicator to transmit first generation target operation data to the drive controller. The first generation target operation data indicates a regenerated target operation for the drivable portion.

(7) In the control system according to (6), the operation controller has an in-operation monitoring state in which the operation controller monitors the determination result obtained by the condition determiner during the operation of the drivable portion. In the regeneration-related state, the operation controller measures a processing time taken by the operation planner to regenerate the target operation for the drivable portion. When the processing time reaches a predetermined time, the operation controller transitions from the regeneration-related state to the in-operation monitoring state.

(8) In the control system according to (6) or (7), the operation planner regenerates the target operation to be performed by the drivable portion from the specific time to cause a speed and an acceleration of the drivable portion at the specific time in the regenerated target operation for the drivable portion to respectively match a speed and an acceleration of the drivable portion at the specific time in a current target operation for the drivable portion.

(9) In the control system according to any one of (6) to (8), in the regeneration-related state, the operation controller determines an intermediate stop position at which the drivable portion stops before reaching an end position of a movement operation of the drivable portion, and instructs the operation planner to regenerate the target operation to be performed by the drivable portion from the specific time to a time at which the drivable portion stops at the intermediate stop position.

(10) The control system according to (9) further includes a storage that stores priority data indicating whether the operation of the robot is to be prioritized or safety associated with the robot is to be prioritized. The operation controller has an idle state, a generation-related state, and a stop-related state. The idle state is set when the drivable portion is stopped. The idle state is a state in which the operation controller monitors the determination result obtained by the condition determiner. The generation-related state is set when the drivable portion is stopped. The generation-related state is a state in which the operation controller instructs the operation planner to generate a target operation for the drivable portion in a stopped state and in which the operation controller instructs the communication controller to control the communicator to transmit second generation target operation data to the drive controller. The second generation target operation data indicates a generated target operation for the drivable portion. The stop-related state is a state to which the regeneration-related state transitions. The stop-related state is a state in which the operation controller waits for the drivable portion to stop at the task intermediate stop position. In the stop-related state, the condition determiner determines that a first transition condition for a transition from the stop-related state to the generation-related state is satisfied when the priority data indicates that the operation of the robot is to be prioritized and when a factor causing the drivable portion to stop is removed. In the stop-related state, the condition determiner determines that a second transition condition for a transition from the stop-related state to the idle state is satisfied when the priority data indicates that safety associated with the robot is to be prioritized.

(11) In the control system according to (9) or (10), the operation controller has a collision mitigation-related state in which the operation controller determines a destination of the drivable portion for mitigating a collision of the robot, in which the operation controller instructs the operation planner to generate a target operation for the drivable portion to move from the task intermediate stop position to the destination, and in which the operation controller instructs the communication controller to control the communicator to transmit third generation target operation data to the drive controller. The third generation target operation data indicates a generated target operation for the drivable portion to move from the intermediate stop position to the destination.

(12) In the control system according to any one of (6) to (11), the operation controller has an in-operation monitoring state in which the operation controller monitors the determination result obtained by the condition determiner during the operation of the drivable portion. In the regeneration-related state, the operation controller determines whether a current target operation for the drivable portion is to be prioritized. When the current target operation for the drivable portion is to be prioritized, the operation controller transitions from the regeneration-related state to the in-operation monitoring state. When the current target operation for the drivable portion is not to be prioritized, the operation controller causes the operation planner to regenerate the target operation to be performed by the drivable portion from the specific time.

(13) In the control system according to any one of (6) to (12), the condition determiner determines, of an acceleration upper limit and a speed upper limit of the drivable portion, at least the acceleration upper limit based on the plurality of pieces of output data. The operation planner generates the target operation based on at least the acceleration upper limit determined by the condition determiner.

REFERENCE SIGNS

2 robot
3 arm controller
6 control system
20 arm
50 first sensor unit
50a arm state detection data
55 second sensor unit
55a hand state detection data
65 storage
150 setting target operation data
600 robot controller
610 operation controller
620 condition determiner
633, 634 data processor
640, 641, 642, 643, 644, 645, 646, 647, 648 control-related processor
640a, 641a, 642a, 643a, 644a, 645a, 646a, 647a, 648a determination data
700 priority data
710 dictionary data
720 common dictionary data
730, 730a, 730b, 730c, 730d, 730e, 730f, 730g, 730h, 730i, 730j, 730k, 7301, 730m individual dictionary data
780 disablement identification data
C1, C12, C13, C14, C22, C23, C24, C32, C33, C34, C35, C42, C43, C44, C45, C52, C53, C54, C57, C99, C101, C420, C530 transition condition
C2, C11, C15, C21, C26, C31, C36, C41, C46, C51, C55, C56, C102, C510 maintaining condition
S0 idle state
S1 setting-related state
S2 in-operation monitoring state
S3 resetting-related state
S4 stop-related state
S5 collision mitigation-related state
S10 setting wait state
S11 write state
S31 resetting wait state
S32 write state
S40 stop wait state
S41 condition satisfaction wait state
S51 setting wait state
S52 write state
S53 mitigation wait state
S99 error correction state
S100 initialization wait state
S510 generation-stop wait state

Claims

1.  A control system, comprising:

    a plurality of processors each configured to perform a process for controlling a robot;
    a storage configured to store dictionary data for deriving control information to be used to control the robot from a plurality of pieces of output data output from the plurality of respective processors; and
    a robot controller configured to derive the control information from the plurality of pieces of output data and the dictionary data, and control the robot based on the control information.

2.  The control system according to claim 1, wherein

    the robot controller includes

    an operation controller configured to control an operation of a drivable portion of the robot, the operation controller being operable as a state machine having a state to transition based on items of the plurality of pieces of output data, and
    a condition determiner configured to determine, based on the items of the plurality of pieces of output data, whether a maintaining condition or a transition condition is satisfied for the state of the operation controller,

    the operation controller is configured to transition from one state to another state based on a determination result obtained by the condition determiner,
    the dictionary data indicates the maintaining condition and the transition condition, and
    the condition determiner is configured to determine whether the maintaining condition or the transition condition is satisfied based on the items of the plurality of pieces of output data and the dictionary data.

3. The control system according to claim 2, wherein

the storage is configured to store disablement identification data for identifying a target item to be disabled from the items of the plurality of pieces of output data included in the dictionary data, and
the condition determiner is configured to disable the target item identified in the dictionary data based on the disablement identification data to determine whether the maintaining condition or the transition condition is satisfied based on the dictionary data.

4. The control system according to claim 2 or claim 3, wherein

the dictionary data includes a plurality of sets of individual dictionary data respectively corresponding to a plurality of states of the operation controller,
each of the plurality of sets of individual dictionary data indicates a condition for satisfying each of the maintaining condition and the transition condition for a state corresponding to the set of individual dictionary data, and
the condition determiner is configured to select, from the plurality of sets of individual dictionary data, a set of individual dictionary data corresponding to a current state of the operation controller, and determine, based on the selected set of individual dictionary data, whether the maintaining condition or the transition condition is satisfied for the current state.

5. The control system according to claim 4, wherein

the dictionary data includes common dictionary data common to the plurality of states,
the common dictionary data indicates a condition for satisfying a transition condition for a transition to a state other than the plurality of states, and
the operation controller is configured to determine, for each of the plurality of states, whether the transition condition for a transition to the other state is satisfied based on the common dictionary data.

6. The control system according to any one of claims 2 to 5, wherein

the plurality of processors includes

an operation planner configured to generate a target operation for the drivable portion, and
a communication controller configured to control a communicator configured to transmit data to a drive controller configured to control the drivable portion, and

the operation controller has a regeneration-related state being set during the operation of the drivable portion, the regeneration-related state is a state in which the operation controller instructs the operation planner to regenerate a target operation to be performed by the drivable portion from a specific time in a future during the operation of the drivable portion and in which the operation controller instructs the communication controller to control the communicator to transmit first generation target operation data to the drive controller, and the first generation target operation data indicates a regenerated target operation for the drivable portion.

7. The control system according to claim 6, wherein

the operation controller has an in-operation monitoring state in which the operation controller monitors the determination result obtained by the condition determiner during the operation of the drivable portion,
in the regeneration-related state, the operation controller is configured to measure a processing time taken by the operation planner to regenerate the target operation for the drivable portion, and
when the processing time reaches a predetermined time, the operation controller is configured to transition from the regeneration-related state to the in-operation monitoring state.

8. The control system according to claim 6 or claim 7, wherein
the operation planner is configured to regenerate the target operation to be performed by the drivable portion from the specific time to cause a speed and an acceleration of the drivable portion at the specific time in the regenerated target operation for the drivable portion to respectively match a speed and an acceleration of the drivable portion at the specific time in a current target operation for the drivable portion.

9. The control system according to any one of claims 6 to 8, wherein
in the regeneration-related state, the operation controller is configured to determine an intermediate stop position at which the drivable portion stops before reaching an end position of a movement operation of the drivable portion, and instruct the operation planner to regenerate the target operation to be performed by the drivable portion from the specific time to a time at which the drivable portion stops at the intermediate stop position.

10. The control system according to claim 9, further comprising:

a storage configured to store priority data indicating whether the operation of the robot is to be prioritized or safety associated with the robot is to be prioritized,
wherein the operation controller has

an idle state being set when the drivable portion is stopped, the idle state being a state in which the operation controller monitors the determination result obtained by the condition determiner,
a generation-related state being set when the drivable portion is stopped, the generation-related state being a state in which the operation controller instructs the operation planner to generate a target operation for the drivable portion in a stopped state and in which the operation controller instructs the communication controller to control the communicator to transmit second generation target operation data to the drive controller, the second generation target operation data indicating a generated target operation for the drivable portion, and
a stop-related state to which the regeneration-related state transitions, the stop-related state being a state in which the operation controller waits for the drivable portion to stop at the task intermediate stop position,

in the stop-related state, the condition determiner is configured to determine that a first transition condition for a transition from the stop-related state to the generation-related state is satisfied when the priority data indicates that the operation of the robot is to be prioritized and when a factor causing the drivable portion to stop is removed, and
in the stop-related state, the condition determiner is configured to determine that a second transition condition for a transition from the stop-related state to the idle state is satisfied when the priority data indicates that safety associated with the robot is to be prioritized.

11. The control system according to claim 9 or claim 10, wherein
the operation controller has a collision mitigation-related state in which the operation controller determines a destination of the drivable portion for mitigating a collision of the robot, in which the operation controller instructs the operation planner to generate a target operation for the drivable portion to move from the task intermediate stop position to the destination, and in which the operation controller instructs the communication controller to control the communicator to transmit third generation target operation data to the drive controller, and the third generation target operation data indicates a generated target operation for the drivable portion to move from the intermediate stop position to the destination.

12. The control system according to any one of claims 6 to 11, wherein

the operation controller has an in-operation monitoring state in which the operation controller monitors the determination result obtained by the condition determiner during the operation of the drivable portion,
in the regeneration-related state, the operation controller is configured to determine whether a current target operation for the drivable portion is to be prioritized,
when the current target operation for the drivable portion is to be prioritized, the operation controller is configured to transition from the regeneration-related state to the in-operation monitoring state, and
when the current target operation for the drivable portion is not to be prioritized, the operation controller is configured to cause the operation planner to regenerate the target operation to be performed by the drivable portion from the specific time.

13. The control system according to any one of claims 6 to 12, wherein

the condition determiner is configured to determine, of an acceleration upper limit and a speed upper limit of the drivable portion, at least the acceleration upper limit based on the plurality of pieces of output data, and
the operation planner is configured to generate the target operation based on at least the acceleration upper limit determined by the condition determiner.

FIG. 1

First sensor unit (Arm sensor unit) 50

Second sensor unit (Effector sensor unit) 55

Robot 2

Arm 20

End effector 25

Arm controller 3

Effector controller 4

Control system (Host control system) 6

First camera 11 110

Second camera 12 120

PLC 13 130

1

# FIG. 2

FIG. 3

FIG. 4

Effector sensor unit 55
- Contact sensor 551
- Force sensor 552

55a

End effector 25

Effector controller 4

Arm 20

Arm controller 3
- Joint controller 3a
- Joint controller 3a

50a

Arm sensor unit 50
- Joint sensor unit 51
- Joint sensor unit 51

Control system

FIG. 5

FIG. 6

FIG. 7

EP 4 644 059 A1

FIG. 8

150

| Index number | 0 | 1 | 2 | ... |
|---|---|---|---|---|
| First target rotation angle | ... | | | |
| Second target rotation angle | ... | | | |
| ... | ... | | | |
| Sixth target rotation angle | ... | | | |

151    151    151    151

FIG. 9

FIG. 10

s101

Determination for state condition ——— C99 satisfied

C99 not satisfied

s102

Determination for state condition ——— C102 satisfied

s104

Transition to S99

C101 satisfied

s103

Transition to S0

FIG. 11

s111

Determination for state condition ——— C99 satisfied

C99 not satisfied

s112

Determination for state condition ——— C2 satisfied

s114

Transition to S99

C1 satisfied

s113

Transition to S1

## FIG. 12

s131

Determination for state condition —— C99 satisfied

C99 not satisfied

s132

Update permissibility data to indicate permission (in first cycle alone after transition from S0)

s133

Determination for state condition —— D11 satisfied

D11 not satisfied

s134

Determination for state condition —— C11 satisfied

C11 not satisfied

s135

Determination for state condition —— C13 satisfied

C12 satisfied

s136

Transition to S0

s137

Update permissibility data to indicate no permission

s138

Transition to S11

s139

Update permissibility data to indicate no permission

s140

Update transmittability data to indicate permission

s141

Transition to S0

s142

Update permissibility data to indicate no permission

s143

Transition to S99

## FIG. 13

```
                    ┌─s151
          ┌─────────────────────┐  C99 satisfied
          ⟨  Determination for   ⟩──────────────────────────┐
          ⟨   state condition    ⟩                          │
          └─────────────────────┘                          │
                    │ C99 not satisfied                     │
                    │                                       │
                    ▼  ┌─s152                          ┌─s154
          ┌─────────────────────┐  C15 satisfied    ┌──────────────────┐
          ⟨  Determination for   ⟩───────────────┐  │  Transition to S99 │
          ⟨   state condition    ⟩               │  └──────────────────┘
          └─────────────────────┘               │         │
                    │ C14 satisfied             │         │
                    │                           │         │
                    ▼  ┌─s153                   │         │
          ┌─────────────────────┐               │         │
          │    Transition to S2   │               │         │
          └─────────────────────┘               │         │
                    │◄──────────────────────────┘◄────────┘
                    ▼
```

## FIG. 14

```
                ┌─s161
        ┌──────────────────┐  C99 satisfied
        ⟨ Determination for ⟩────────────────────────────────────────┐
        ⟨  state condition   ⟩                                        │
        └──────────────────┘                                        │
              │ C99 not satisfied                                    │
              ▼  ┌─s162                                              │
        ┌──────────────────┐  C22 satisfied                          │
        ⟨ Determination for ⟩──────────────────────────┐            │
        ⟨  state condition   ⟩                          │            │
        └──────────────────┘                          │            │
              │ C22 not satisfied                      │            │
              ▼  ┌─s163                                │            │
        ┌──────────────────┐  C24 or D21 satisfied     │        ┌─s169
        ⟨ Determination for ⟩────────────────┐         │      ┌──────────────────┐
        ⟨  state condition   ⟩               │         │      │ Transition to S99 │
        └──────────────────┘               │         │      └──────────────────┘
              │ C24 and D21                 │         │            │
              │ not satisfied               ▼ ┌─s166   │            │
              ▼  ┌─s164          ┌──────────────────┐  │            │
        ┌──────────────────┐     │ Transition to S30 │  │            │
        ⟨ Determination for ⟩  C23│└──────────────────┘  │            │
        ⟨  state condition   ⟩  satisfied    │     ┌─s167 │            │
        └──────────────────┘──────┐         ▼ ┌──────────────────┐   │
              │ C21 satisfied      │         │ │ Transition to S0 │   │
              ▼  ┌─s165            │         │ └──────────────────┘   │
        ┌──────────────────┐       │         │        │  ┌─s168        │
        │ Transition to S33 │       │         │        ▼ ┌──────────────────────┐
        └──────────────────┘       │         │        │ │ Update transmittability data │
              │                    │         │        │ │ to indicate no permission    │
              │                    │         │        │ └──────────────────────┘
              ▼◄───────────────────┘◄────────┘◄───────┘◄──────────────┘
              │
              ▼
```

## FIG. 15

s171 — Determination for state condition
— C99 satisfied → s176 Transition to S99
— C99 not satisfied →

s172 — Determination for state condition
— D32 satisfied → s175 Transition to S2
— D32 not satisfied →

s173 — Determination for state condition
— D31 satisfied → s174 Transition to S31
— D33 satisfied →

## FIG.16

s181 — Determination for state condition
— C99 satisfied → s186 Transition to S99
— C99 not satisfied →

s182 — Determination for state condition
— D36 satisfied → s185 Transition to S2
— D36 not satisfied →

s183 — Determination for state condition
— D35 satisfied → s184 Transition to S31
— D37 satisfied →

## FIG. 17

FIG. 18

Current generation target operation data

| Index number | 0 | 1 | ... | 50 | 51 | ... |
|---|---|---|---|---|---|---|
| First target rotation angle | ... | | | | | |
| Second target rotation angle | ... | | | | | |
| ... | ... | | | | | |
| Sixth target rotation angle | ... | | | | | |

Regeneration target operation data

| Index number | 0 | 1 | 2 | ... |
|---|---|---|---|---|
| First target rotation angle | ... | | | |
| Second target rotation angle | ... | | | |
| ... | ... | | | |
| Sixth target rotation angle | ... | | | |

EP 4 644 059 A1

FIG. 19

# FIG. 20

FIG. 21

FIG. 22

```
            ⌐s231
   Determination for  ⟩  C99 satisfied ─────────────────────────────┐
   state condition                                                   │
         │                                                           │
   C99 not satisfied                                                 │
         │                                         ⌐s236             │
         ▼         ⌐s232                     ┌──────────────────┐     │
   Determination for  ⟩  C44 satisfied ──┐  │ Transition to S99 │◄───┘
   state condition                       │  └──────────────────┘
         │                               │
   C44 not satisfied                     │
         │                   ⌐s235       │
         ▼         ⌐s233   ┌──────────────────┐
   Determination for  ⟩  C45 satisfied │ Transition to S0 │
   state condition    ┐                └──────────────────┘
         │            │
   C46 satisfied      │
         │            │         ⌐s234
         │            ▼   ┌──────────────────┐
         │            │   │ Transition to S10 │
         │                └──────────────────┘
         │◄──────────────────────────────────
         ▼
```

FIG. 23

```
            ⌐s241
   Determination for  ⟩  C99 satisfied ─────────────────────┐
   state condition                                          │
         │                                                  │
   C99 not satisfied                                        │
         │                                   ⌐s244          │
         ▼         ⌐s242               ┌──────────────────┐  │
   Determination for  ⟩  D52 satisfied │ Transition to S99 │◄┘
   state condition    ┐                └──────────────────┘
         │            │
   D51 satisfied      │
         │            │
         ▼   ⌐s243    │
   ┌──────────────────┐
   │ Transition to S51 │
   └──────────────────┘
         │◄───────────
         ▼
```

FIG. 24

s251

Determination for state condition → C99 satisfied

C99 not satisfied

s252

Update permissibility data to indicate permission (in first cycle alone after transition from S50)

s253

Determination for state condition → D53 satisfied

D53 not satisfied

s254

Determination for state condition → C51 satisfied

C51 not satisfied

s255

Determination for state condition → C53 satisfied

C52 satisfied

s256

Transition to S0

s257

Update permissibility data to indicate no permission

s258

Transition to S52

s259

Update permissibility data to indicate no permission

s260

Update transmittability data to indicate permission

s261

Transition to S0

s262

Update permissibility data to indicate no permission

s263

Transition to S99

FIG. 25

FIG. 26

FIG. 27

```
                            │
                            ▼        ⌐s291
            ┌───────────────────────────┐
            │  Perform error correction │
            │          process          │
            └───────────────────────────┘
                            │
                            │
                            ▼        ⌐s292
            ┌───────────────────────────┐
            │      Transition to S0     │
            └───────────────────────────┘
                            │
                            │
                            ▼
```

FIG. 28

# FIG. 29

FIG. 30

FIG. 31

# FIG. 32

Factor for stopping removed

Start of arm operation

End of arm operation

Rotation angle

Factor for stopping occurred

Operation start request

Stop

Switch time

Resume operation

| Controller state | Idle state | In-operation monitoring state | Stop-related state | In-operation monitoring state | Idle state |
|---|---|---|---|---|---|

Generation-related state

Regeneration-related state

Generation-related state

t

Transmittability data

Permissibility data

FIG. 33

# FIG. 34

FIG. 35

FIG. 36

FIG. 37

EP 4 644 059 A1

FIG. 38

EP 4 644 059 A1

FIG. 39

# FIG. 40

# FIG. 41

FIG. 42

FIG. 43

| | | Upper acceleration limit | | | | |
|---|---|---|---|---|---|---|
| | | 150% | 130% | 110% | 100% | 90% |
| Upper speed limit | 50% | 25 | 24 | 23 | 22 | 21 |
| | 60% | 20 | 19 | 18 | 17 | 16 |
| | 75% | 15 | 14 | 13 | 12 | 11 |
| | 90% | 10 | 9 | 8 | 7 | 6 |
| | 100% | 5 | 4 | 3 | 1 | 2 |

## FIG. 44

770

|  |  |  | Upper limit identification number |
|---|---|---|---|
| Host controller data | Readiness notification data | 01h | 1 |
|  | Operation start request data | 02h | 1 |
|  | Pause request data | 04h | 19 |
|  | Stop request data | 08h | 19 |
| Identifier data | Readiness notification data | 01h | 1 |
|  | Identification-in-progress notification data | 02h | 1 |
|  | Identification completion notification data | 04h | 1 |
|  | Error notification data | F0h | 1 |
| Obstacle detector data | Readiness notification data | 01h | 1 |
|  | Detection-in-progress notification data | 02h | 1 |
|  | Detection completion notification data | 04h | 1 |
|  | Error notification data | F0h | 1 |
| Arm sensor processor data | Readiness notification data | 01h | 1 |
|  | Minor overweight notification data | 02h | 6 |
|  | Major overweight notification data | 04h | 16 |
|  | Collision notification data | 08h | 25 |
|  | Error notification data | F0h | 1 |
| Effector sensor processor data | Readiness notification data | 01h | 1 |
|  | Drop notification data | 03h | 16 |
|  | Low contact pressure notification data | 05h | 6 |
|  | Minor overweight notification data | 07h | 6 |
|  | Major overweight notification data | 09h | 16 |
|  | Error notification data | F0h | 1 |

FIG. 45

770

| | Readiness notification data | 01h | 1 |
|---|---|---|---|
| Person detector data | Caution notification data | 02h | 13 |
| | Emergency notification data | 04h | 19 |
| | Error notification data | F0h | 1 |
| | Readiness notification data | 01h | 1 |
| PLC controller data | Pause request data | 02h | 19 |
| | Stop request data | 04h | 19 |
| | Error notification data | F0h | 1 |
| | Readiness notification data | 01h | 1 |
| Communication controller data | Transmission-in-progress notification data | 02h | 1 |
| | Error notification data | F0h | 1 |
| | Readiness notification data | 01h | 1 |
| | Setting-in-progress notification data | 02h | 1 |
| Operation planner data | Setting success notification data | 04h | 1 |
| | Setting failure notification data | 09h | 1 |
| | Error notification data | F0h | 1 |

## FIG. 46

720

| | S99 |
|---|---|
| | C99 |
| | or ← ─── 725 |
| Host controller data | — |
| Identifier data | F0h ← ─── 721 |
| Obstacle detector data | F0h |
| Arm sensor processor data | F0h |
| Effector sensor processor data | F0h ← ─── 721 |
| Person detector data | F0h |
| PLC controller data | F0h |
| Communication controller data | F0h |
| Operation planner data | F0h ← ─── 721 |
| Priority data | — |

## FIG. 47

| 730a | S100 | |
|---|---|---|
| | C101 | C102 |
| | and | or |
| Host controller data | 01h | !01h ←→731 |
| Identifier data | 01h | !01h |
| Obstacle detector data | 01h | !01h |
| Arm sensor processor data | 01h | !01h ←→731 |
| Effector sensor processor data | 01h | !01h |
| Person detector data | 01h | !01h |
| PLC controller data | 01h | !01h |
| Communication controller data | 01h | !01h ←→731 |
| Operation planner data | 01h | !01h |
| Priority data | — | — |

(735, 735)

## FIG. 48

| 730b | SO | |
|---|---|---|
| | C1 | C2 |
| | and | and |
| Host controller data | 02h | !02h |
| Identifier data | — | — |
| Obstacle detector data | — | — |
| Arm sensor processor data | — | — |
| Effector sensor processor data | — | — |
| Person detector data | — | — |
| PLC controller data | — | — |
| Communication controller data | — | — |
| Operation planner data | — | — |
| Priority data | — | — |

FIG. 49

| 730c | S10 | | |
|---|---|---|---|
| | C11 | C12 | C13 |
| | and | and | and |
| Host controller data | — | — | — |
| Identifier data | — | — | — |
| Obstacle detector data | — | — | — |
| Arm sensor processor data | — | — | — |
| Effector sensor processor data | — | — | — |
| Person detector data | — | — | — |
| PLC controller data | — | — | — |
| Communication controller data | — | — | — |
| Operation planner data | 02h | 09h | 04h |
| Priority data | — | — | — |

FIG. 50

| | S11 | |
|---|---|---|
| | C14 | C15 |
| | and | and |
| Host controller data | — | — |
| Identifier data | — | — |
| Obstacle detector data | — | — |
| Arm sensor processor data | — | — |
| Effector sensor processor data | — | — |
| Person detector data | — | — |
| PLC controller data | — | — |
| Communication controller data | 02h | 01h |
| Operation planner data | — | — |
| Priority data | — | — |

730b    735    735

731    731

# FIG. 51

| 730e | S2 | | | |
|---|---|---|---|---|
| | C21<br>and | C22<br>and | C23<br>or | C24<br>or |
| Host controller data | 01h | — | 04h or 08h | — |
| Identifier data | 01h | — | — | 04h |
| Obstacle detector data | 01h | — | — | 04h |
| Arm sensor processor data | 01h | — | 04h or 08h | — |
| Effector sensor processor data | 01h | — | 03h or 09h | — |
| Person detector data | 01h | — | 04h | — |
| PLC controller data | 01h | — | 02h or 04h | — |
| Communication controller data | 02h | 01h | — | — |
| Operation planner data | — | — | — | — |
| Priority data | — | — | — | — |

731  735  735  731  735  731  735

731

# FIG. 52

| 730f | S31 | | |
|---|---|---|---|
| | C31 | C32 | C33 |
| | and | and | and |
| Host controller data | — | — | — |
| Identifier data | — | — | — |
| Obstacle detector data | — | — | — |
| Arm sensor processor data | — | — | — |
| Effector sensor processor data | — | — | — |
| Person detector data | — | — | — |
| PLC controller data | — | — | — |
| Communication controller data | — | — | — |
| Operation planner data | 02h | 09h | 04h |
| Priority data | — | — | — |

735   735   735

731   731   731

## FIG. 53

| 730g | S32 | |
|---|---|---|
| | C35 | C36 |
| | and | and |
| Host controller data | — | — |
| Identifier data | — | — |
| Obstacle detector data | — | — |
| Arm sensor processor data | — | — |
| Effector sensor processor data | — | — |
| Person detector data | — | — |
| PLC controller data | — | — |
| Communication controller data | 02h | 01h |
| Operation planner data | — | — |
| Priority data | — | — |

735    735

731    731

## FIG. 54

| 730h | S40 | | |
|---|---|---|---|
| | C41 and | C42 and | C43 and |
| Host controller data | — | — | — |
| Identifier data | — | — | — |
| Obstacle detector data | — | — | — |
| Arm sensor processor data | — | 08h | — |
| Effector sensor processor data | — | — | — |
| Person detector data | — | — | — |
| PLC controller data | — | — | — |
| Communication controller data | 02h | 01h | 01h |
| Operation planner data | — | — | — |
| Priority data | — | — | — |

731    731    731

FIG. 55

| | S41 | | |
| --- | --- | --- | --- |
| | C44 | C45 | C46 |
| | and | and | or |
| Host controller data | — | 01h or 02h | 04h or 08h |
| Identifier data | — | — | — |
| Obstacle detector data | — | — | — |
| Arm sensor processor data | — | 01h or 02h | 04h |
| Effector sensor processor data | — | 01h or 05h or 07h | 03h or 09h |
| Person detector data | — | !04h | 04h |
| PLC controller data | — | 01h | 02h or 04h |
| Communication controller data | — | — | — |
| Operation planner data | — | — | — |
| Priority data | 02h | 01h | — |

730 i    735   731   735   731   735

731

FIG. 56

| 730j | S51 | | |
|---|---|---|---|
| | C51 | C52 | C53 |
| | and | and | and |
| Host controller data | — | — | — |
| Identifier data | — | — | — |
| Obstacle detector data | — | — | — |
| Arm sensor processor data | — | — | — |
| Effector sensor processor data | — | — | — |
| Person detector data | — | — | — |
| PLC controller data | — | — | — |
| Communication controller data | — | — | — |
| Operation planner data | 02h | 09h | 04h |
| Priority data | — | — | — |

735    735    735

731    731    731

FIG. 57

| 730k | S52 | |
| --- | --- | --- |
| | C54 | C55 |
| | and | and |
| Host controller data | — | — |
| Identifier data | — | — |
| Obstacle detector data | — | — |
| Arm sensor processor data | — | — |
| Effector sensor processor data | — | — |
| Person detector data | — | — |
| PLC controller data | — | — |
| Communication controller data | 02h | 01h |
| Operation planner data | — | — |
| Priority data | — | — |

731          731

FIG. 58

| 7301 | S53 | |
|---|---|---|
| | C56 and | C57 and |
| Host controller data | — | — |
| Identifier data | — | — |
| Obstacle detector data | — | — |
| Arm sensor processor data | — | — |
| Effector sensor processor data | — | — |
| Person detector data | — | — |
| PLC controller data | — | — |
| Communication controller data | 02h | 01h |
| Operation planner data | — | — |
| Priority data | — | — |

735    735

731    731

## FIG. 59

FIG. 60

780

| | |
|---|---|
| Host controller data | Enabled ← ——————781 |
| Identifier data | Enabled |
| Obstacle detector data | Enabled |
| Arm sensor processor data | Enabled ← ——————781 |
| Effector sensor processor data | Enabled |
| Person detector data | Enabled |
| PLC controller data | Disabled ← ——————781 |
| Communication controller data | Enabled |
| Operation planner data | Enabled |

FIG. 61

EP 4 644 059 A1

FIG. 62

## FIG. 63

| 730h | S40 | | |
|---|---|---|---|
| | C41<br>and | C420<br>and | C43<br>and |
| Host controller data | — | — | — |
| Identifier data | — | — | — |
| Obstacle detector data | — | — | — |
| Arm sensor<br>processor data | — | 08h | — |
| Effector sensor<br>processor data | — | — | — |
| Person detector data | — | — | — |
| PLC controller data | — | — | — |
| Communication<br>controller data | 02h | — | 01h |
| Operation planner data | — | — | — |
| Priority data | — | — | — |

## FIG. 64

| 730m | S510 | | |
|---|---|---|---|
| | C510 | C52 | C530 |
| | or | and | and |
| Host controller data | — | — | — |
| Identifier data | — | — | — |
| Obstacle detector data | — | — | — |
| Arm sensor processor data | — | — | — |
| Effector sensor processor data | — | — | — |
| Person detector data | — | — | — |
| PLC controller data | — | — | — |
| Communication controller data | 02h | — | 01h |
| Operation planner data | 02h | 09h | 04h |
| Priority data | — | — | — |

735  735  735

731  731  731

FIG. 65

EP 4 644 059 A1

## INTERNATIONAL SEARCH REPORT

| International application No. |
| --- |
| **PCT/JP2023/046993** |

| A. | CLASSIFICATION OF SUBJECT MATTER |
| --- | --- |

***B25J 9/18***(2006.01)i
FI:   B25J9/18

According to International Patent Classification (IPC) or to both national classification and IPC

| B. | FIELDS SEARCHED |
| --- | --- |

Minimum documentation searched (classification system followed by classification symbols)

B25J9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022/249226 A1 (MITSUBISHI ELECTRIC CORPORATION) 01 December 2022 (2022-12-01) | 1 |
| | paragraphs [0009]-[0119] | |
| Y | | 2 |
| A | | 3-13 |
| Y | JP 10-202562 A (SONY CORPORATION) 04 August 1998 (1998-08-04) | 2 |
| | example 12 | |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **27 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/046993** |

| Patent document cited in search report | Publication date (day/month/year) | Patent family member(s) | Publication date (day/month/year) |
| --- | --- | --- | --- |
| WO 2022/249226 A1 | 01 December 2022 | (Family: none) | |
| JP 10-202562 A | 04 August 1998 | (Family: none) | |

Form PCT/ISA/210 (patent family annex) (July 2022)

**REFERENCES CITED IN THE DESCRIPTION**

**Patent documents cited in the description**

- JP 2019081234 A